# EUROPÄISCHE PATENTSCHRIFT

(11) **EP 3 055 679 B1**
(45) Veröffentlichungstag und Bekanntmachung des Hinweises auf die Patenterteilung: **14.03.2018**
(21) Anmeldenummer: 14789535.3
(22) Anmeldetag: 07.10.2014
(51) Int. Cl.: G01N 21/91, C09B 67/42, G01M 3/22, C09B 67/22

(54) **RISSPRÜFMITTEL, VERFAHREN ZU SEINER HERSTELLUNG UND VERWENDUNG DES RISSPRÜFMITTELS**
FISSURE-DETECTION AGENT, METHOD FOR THE PRODUCTION THEREOF AND USE OF THE FISSURE-DETECTION AGENT
AGENT DE DÉTECTION DE CRIQUES, PROCÉDÉ POUR LE FABRIQUER ET UTILISATION DE L'AGENT DE DÉTECTION DE CRIQUES

(30) Priorität: 09.10.2013 DE 102013016674
(43) Veröffentlichungstag der Anmeldung: 17.08.2016
(73) Patentinhaber: Chemetall GmbH, 60487 Frankfurt am Main (DE)
(72) Erfinder: BONS, Peter, 61203 Reichelsheim (DE); REIN, Rüdiger, 61118 Bad Vilbel (DE); WÖRNER, Jörg, 63486 Bruchköbel (DE); AISTON, Finlay, 60488 Frankfurt (DE)
(74) Vertreter: BASF IP Association
(86) Internationale Anmeldenummer: PCT/EP2014/071407
(87) Internationale Veröffentlichungsnummer: WO 2015/052164

(56) Entgegenhaltungen:
- WO-A1-2007/133563
- WO-A1-2008/011962
- DE-A1- 2 635 483
- US-A- 2 953 530

## Beschreibung

Die Erfindung betrifft Rissprüfmittel in Form von Mikroemulsionen mit geringer mittlerer Teilchengröße und mit hoher Transparenz, Verfahren zum Herstellen von wasserbasierten Rissprüfmittelmikroemulsionen und Verfahren zu ihrer Aufbereitung, in denen mindestens ein Farbstoff in einem organischen Lösemittel gelöst enthalten ist, sowie die Verwendung der Rissprüfmittel für die Prüfung und Fehlererkennung nach dem Eindringverfahren insbesondere bei metallischen Werkstücken. Die erfindungsgemäßen Rissprüfmittel sind jedoch keine wässerigen oder auf Öl oder/und Tensid basierenden Lösungen, sondern anders als die Rissprüfmittel des Standes der Technik Mikroemulsionen und im Vergleich zu diesen umweltfreundlicher zusammengesetzt. Rissprüfmittel werden beispielsweise in der Luft- und Raumfahrtindustrie, in der Automobilindustrie, im Apparate- und Maschinenbau und in der sogenannten Allgemeinen Industrie eingesetzt. Rissprüfmittel werden zur Detektion von Fehlern wie z.B. feinen Poren oder/und feinen Rissen verwendet. Insbesondere dienen sie zur Detektion von Fehlern, die zur Oberfläche hin offen sind, die einen Durchmesser von ≥ 10 µm oder gegebenenfalls sogar von ≥ 1 µm Durchmesser oder/und die eine Spaltbreite von ≥ 10 µm oder gegebenenfalls sogar von ≥ 1 µm Spaltbreite aufweisen. Die Fehler werden durch Zusatz von mindestens einem Farbstoff für das menschliche Auge erkennbar. Oft ist der Farbstoff in ein Farbstoffsystem eingebunden, so dass der Begriff "Farbstoffsystem" im Sinne der vorliegenden Anmeldung mindestens einen Farbstoff und gegebenenfalls alle zur optimierten Erkennbarkeit, zur stabilen Einbindung des Farbstoffs oder/und zur Lösung des Farbstoffs hilfreichen Zusätze wie z.B. einen Aufheller umfasst. Im Wesentlichen wasserunlösliche Lösemittel, die unter die Verbindungen der im Wesentlichen wasserunlöslichen Phase C) fallen, und die hierbei eingesetzten Tenside D) ausgewählt aus anionischen Tensiden a), nichtionischen Tensiden b) oder/und amphoteren Tensiden c) werden unter den Substanzen C) bzw. D) im Sinne dieser Anmeldung umfasst. Im Stand der Technik werden Rissprüfmittel auch nach ihrer Farbdifferenzierung unterschieden: Fluoreszenzprüfung oder/und Farbkontrastprüfung z.B. im Rot-Weiß-Kontrast.

Die Rissprüfmittel werden in AMS 2644 sowie in ISO 3452 vor allem in den Teilen 2 und 3 in Fehlererkennbarkeitsklassen eingeteilt. Hierbei werden die erfindungsgemäßen gelb fluoreszierenden Rissprüfmittel in die Klassen 0,5, 1,2,3 und 4 eingeteilt, die Rissprüfmittel für die Rot-Weiß-Prüfung sowie die rot fluoreszierenden Rissprüfmittel in die Klassen 1 und 2, wobei die Klassen 4 bzw. 2 die höchste Prüfempfindlichkeit verdeutlichen.

Die Rissprüfmittel des Standes der Technik sind a) wässerige Lösungen mit mindestens einem Tensid, die oft auch einen Gehalt oder sogar hohen Gehalt an organischen Lösemittel enthalten, oder b) wasserfreie Lösungen auf Basis organischen Lösemittels, wenn von der Aufnahme von Feuchtigkeit aus der Luft oder/und durch Verunreinigungen abgesehen wird, oder c) Ölbasierte Lösungen oder d) wasserfreie Lösungen auf Basis von Tensiden. Die Löslichkeit des eingesetzten Farbstoffs oder Farbstoffsystems wird bei den wässerigen Lösungen a) durch den Gehalt und die Art des Tensids, durch den Gehalt an Wasser und durch den Zusatz von wasserlöslichen Lösemitteln, üblicherweise von wasserlöslichen Glykolen oder/und wasserlöslichen Glykolethern, bestimmt.

Die Rissprüfmittel des Standes der Technik zeigen wenigstens einen der folgenden Nachteile:
1.) Sie sind entweder wässerige Lösungen ohne Gehalt an einem im Wesentlichen wasserunlöslichen Lösemittel für den wasserunlöslichen Farbstoff und sie weisen einen so geringen Gehalt an Farbstoff auf, dass die Erkennbarkeit von Fehlstellen aufgrund des geringen Gehalts an Farbstoff deutlich verringert ist. Sie enthalten üblicherweise öllösliche oder/und in organischen Lösemitteln lösliche Farbstoffe. Diese Rissprüfmittel sind zwar üblicherweise umweltfreundlich, aber sie haben aufgrund des geringen Farbstoffgehalts eine sehr geringe Detektionseignung, so dass sie als gelb fluoreszierende Rissprüfmittel in die Klasse 0,5 gehören.
2.) Oder sie enthalten ein Lösemittelsystem auf Basis von Wasser und in Wasser löslichen einwertigen Alkoholen, mehrwertigen Alkoholen oder/und Glykolethern, bei dem der Farbstoff nur in so geringem Anteil gelöst ist, dass die Erkennbarkeit von Fehlstellen aufgrund der geringen Löslichkeit des Farbstoffs oder des Farbstoffsystems deutlich verringert ist. Sie enthalten üblicherweise öllösliche oder/und in organischen Lösemitteln lösliche Farbstoffe. Diese Rissprüfmittel gehören daher als gelb fluoreszierende Rissprüfmittel in die Klasse 0,5 oder 1 und sind üblicherweise weitgehend umweltfreundlich, weisen aber auch eine relativ schwache Fehlererkennbarkeit auf.
3.) Üblicherweise sind die eingesetzten Farbstoffe in Öl oder/und in organischen Lösemitteln löslich, wobei diese Farbstoffe nicht in Wasser löslich sind oder die > 20 g/L wasserlöslichen Farbstoffe sind als Schwefel- oder Chloridhaltige Verbindungen üblicherweise unerwünscht. Diese Schwefel- oder Halogen-haltigen Rissprüfmittel sind zwar wasserlöslich und sind klare Lösungen, werden aber wegen des korrosiven Angriffs von metallischen Werkstoffen üblicherweise nicht eingesetzt.
4.) Oder die Rissprüfmittel des Standes der Technik sind Öl-basiert und wasserunlöslich oder aufgrund sehr hoher Gehalte an wenig umweltfreundlichen Zusätzen a) wie z.B. Weichmachern von oft weit über 40 Gew.-%, b) wie z.B. wasserunlöslichen organischen Lösemitteln auf Basis von Estern oder/und Ethern von oft weit über 40 Gew.-% oder/und c) wie z.B. Tensiden von oft weit über 30 Gew.-% üblicherweise sehr umweltunfreundlich. Sie sind bei Anlieferung gänzlich wasserfrei und sind klare Lösungen. Hierbei weisen die gelb fluoreszierenden Rissprüfmittel mit der höchsten Empfindlichkeit, d.h. in den Klassen 3 und 4, den Nachteil auf, dass sich beim Abspülen des überschüssigen Rissprüfmittels vor dem Ende der Prüfung Rückstände aus dem Rissprüfmittel auf der Oberfläche des Prüfobjektes absetzen können, die bei weiterem Spülen mit Wasser nicht entfernbar sind. Nur bei einer zusätzlichen aufwändigen Nachreinigung vor der visuellen Prüfung und Bewertung mit einem wässerigen Emulgatorsystem oder mit einem organischen Lösemittel oder Lösemittelgemisch lassen sich diese Rückstände entfernen.

DE 28 11 561 A1 offenbart eine mit Wasser abspülbare, waschbeständige, biologisch abbaufähige eindringende Farbstoffzusammensetzung, die Farbstoff und mindestens 70 Gew.-% Ethoxylat eines primären Alkohols enthält.

DE 26 35 483 A1, WO 2008/011962 A1 und US 2 953 530 A offenbaren jeweils umweltfreundliche Rissprüfmittel sowie Verfahren mit einem nachträglich emulgierbaren Farbstoffeindringmittel. Hierbei können Risse und Fehlstellen in der Oberfläche eines Objekts festgestellt und so beispielsweise Oberflächenhohlräume, Sprünge oder Fehler lokalisiert und indentifiziert werden.

Auch wenn die dabei eingesetzten Farbstoffe nachträglich emulgierbar sind, handelt es sich weder in DE 26 35 483 A1 noch in WO 2008/011962 A1 oder in US 2 953 530 A um Mikroemulsionen im Sinne der vorliegenden Erfindung.

Alle Rissprüfmittel des Standes der Technik, die den Erfindern als Gemische oder aufgrund ihrer Kenndaten zugänglich sind, sind klare Lösungen und weder Emulsionen, noch Mikroemulsionen. Sie zeigen immer eine mittlere Teilchengröße gemessen mit einem Zetasizer Nano-ZS von Malvern unter 1 nm, was ein deutliches Anzeichen für Lösungen ist.

Durch die geringe Wasserlöslichkeit der Farbstoffe müssen bisher erhebliche Mengen an wasserlöslichen organischen Lösemitteln als Lösevermittler zugesetzt werden. Die Farbstoffsysteme enthalten üblicherweise mindestens einen organischen Farbstoff und gegebenenfalls mindestens einen Aufheller, der auch als Farbverstärker bezeichnet wird. Die organischen Lösemittel verringern die Viskosität, verhelfen zu einem besseren Eindringverhalten insbesondere in Risse oder/und dienen im Fall von Öl-basierten Rissprüfmitteln auch als Verdünnungsmittel.

Daher enthalten Wasser-basierte Rissprüfmittel nach dem Stand der Technik üblicherweise entweder 5 bis 70 Gew.-% an mindestens einem wasserlöslichen organischen Lösemittel und 30 bis 75 Gew.-% an Wasser in Öl-freien Zusammensetzungen oder üblicherweise 5 bis 30 Gew.-% an mindestens einem organischen und oft wasserunlöslichen Lösemittel in Öl-basierten und meist 30 bis 70 Gew.-% Öl enthaltenden und wasserfreien oder fast wasserfreien Zusammensetzungen. Die Öle sind hierbei üblicherweise Mineralöle oder deren Derivate sowie gegebenenfalls mit einem Zusatz von mindestens einem Weichmacher.

Diese Rissprüfmittel des Standes der Technik sind deutlich umweltunfreundlicher als die der vorliegenden Anmeldung, insbesondere durch den fehlenden oder geringeren Wassergehalt oder/und durch den Öl-Gehalt an Mineralöl oder/und deren Derivaten, wenn Rissprüfmittel der gleichen Fehlererkennbarkeitsklasse miteinander verglichen werden. Diese Lösemittel dienen primär dem Lösen der wasserunlöslichen Bestandteile, aber auch der Viskositätserniedrigung und dem besseren Eindringverhalten insbesondere in Risse. Sie enthalten üblicherweise 0,4 bis 4 Gew.-% an Bestandteilen des Farbstoffsystems in Öl-freien Zusammensetzungen und üblicherweise 0,4 bis 7 Gew.-% in Öl-basierten Zusammensetzungen sowie 10 bis 50 Gew.-% an mindestens einem Tensid. Hierbei dient in vielen Rissprüfmitteln mindestens ein Tensid gleichzeitig als organisches Lösemittel, wobei die Summe aller Bestandteile 100 Gew.-% ausmacht. Eine geringe Löslichkeit der Bestandteile des Farbstoffs oder des Farbstoffsystems in Gemischen verursacht eine recht geringe Detektionsempfindlichkeit. Diese geringe Detektionsempfindlichkeit wird beispielsweise bei einer Löslichkeit von nicht mehr als 0,3 Gew.-% der Bestandteile des Farbstoffs oder des Farbstoffsystems in Gemischen mit mindestens 25 Gew.-% Tensid in Wasser gefunden. Diese geringe Detektionsempfindlichkeit wird beispielsweise auch bei einer Löslichkeit von nicht mehr als 3 Gew.-% der Bestandteile des Farbstoffs oder des Farbstoffsystems in Gemischen mit bis zu 50 Gew.-% Tensid in Wasser gefunden.

Auch wässerige Rissprüfmittel ohne Gehalt an organischem Lösemittel sind bezüglich ihrer Detektionsempfindlichkeit sehr begrenzt. Sie weisen außerdem ein schwieriges Applikationsverhalten auf, das durch Schwierigkeiten beim Entfernen von überschüssigem Eindringmittel durch Abspülen mit Wasser auf der Oberfläche gekennzeichnet ist. Unzureichendes Abspülen von überschüssigem Rissprüfmittel nach dem Applizieren und nach der Einwirkzeit vermindert die Detektierbarkeit von Fehlern durch einen verringerten Kontrast, der auch durch Rückstände des Farbstoffs oder des Farbstoffsystems auf der Oberfläche verursacht sein kann. Übermäßiges Abspülen kann schnell zum Auswaschen des Eindringmittels aus dem Defekt führen, was insbesondere bei wässerigen Lösungen auftritt.

Beispielsweise wird Ardrox® 920A als Tensid enthaltende Lösung mit hohem Wassergehalt in der fluoreszierenden Rissprüfung eingesetzt. Außerdem wird Checkmor® 240 als wasserfreie ölhaltige Lösung zur Rot-Weiß-Prüfung angeboten.

Rissprüfmittel des Standes der Technik verwenden vielfach wasserunlösliche organische Lösemittel, die für die Lösung aller Bestandteile des Farbstoffs oder des Farbstoffsystems nötig sind, und sind dann oft auch wasserfrei.

Rissprüfmittel des Standes der Technik belasten die Spülwässer mit organischen Verbindungen, die nicht mit einer konventionellen Abwasseraufbereitung entfernt werden können, denn sie enthalten immer auch Lösevermittler, die organische wassermischbare Lösemittel auf Basis von mehrwertigen Alkoholen und ihren Ethern sind. Durch die gute Löslichkeit von Tensiden und organischen Lösevermittlern in Wasser ergeben sich hohe Werte des chemischen Sauerstoffbedarfs CSB und hohe Werte des biologischen Sauerstoffbedarfs BSB.

Daher bestand die Aufgabe, Rissprüfmittel vorzuschlagen, die mindestens einen der oben genannten Nachteile überwinden. Es bestand weiterhin die Aufgabe, möglichst einfach zusammengesetzte, möglichst einfach herstellbare oder/und zur Fehlerdetektion gut einsetzbare Rissprüfmittel vorzuschlagen. Darüber hinaus bestand die Aufgabe, Verfahren zur Herstellung dieser Rissprüfmittel anzugeben. Schließlich bestand die Aufgabe, Verfahren zur Aufarbeitung oder/und Entsorgung dieser Rissprüfmittel vorzuschlagen.

Es wurde jetzt gefunden, dass es möglich ist, Rissprüfmittel herzustellen, die bei einem vergleichsweise hohen Gehalt an gelösten Bestandteilen des Farbstoffs oder des Farbstoffsystems einen höheren Wassergehalt als die Rissprüfmittel des Standes der Technik aufweisen. Auch dadurch sind sie umweltfreundlicher. Sie können einen höheren Wassergehalt als wässerige Lösungen aufnehmen, wenn Mikroemulsionen hergestellt werden. Es ist jetzt auch gelungen, den Gehalt an Lösevermittlern in Rissprüfmitteln deutlich zu verringern und gegebenenfalls sogar zu vermeiden, die in den Rissprüfmitteln des Standes der Technik praktisch immer notwendig sind und umweltbelastend sind. Die erfindungsgemäßen Rissprüfmittel lassen sich zur Fehlererkennung besonders erfolgreich einsetzen und übertreffen vielfach die Fehlererkennbarkeit von Rissprüfmitteln nach dem Stand der Technik. Sie haben sich auch für die Entsorgung der Rissprüfmittel als besonders vorteilhaft erwiesen.

Es ist jetzt auch gelungen, Rissprüfmittel für die Rot-Weiß-Prüfung und für die fluoreszierende Prüfung bereitzustellen, die auch mit einem erhöhten Anteil an Wasser gut funktionieren und weitgehend umweltfreundlich zusammengesetzt sind. Die erfindungsgemäßen Rissprüfmittel sind vorzugsweise ölfrei oder im Wesentlichen ölfrei, insbesondere bei gelb fluoreszierenden Zusammensetzungen. Es können jedoch bei kommerziellen Produkten vereinzelt Öl-Gehalte auftreten, die nicht immer gekennzeichnet sind. Öl kann auch eine untergeordnete Rolle bei roten Farbstoffen als Lösemittel zeigen.

Hierbei wurde jetzt auch gefunden, dass es möglich und besonders vorteilhaft ist, Rissprüfmittel als Mikroemulsion auszubilden, weil Mikroemulsionen eine erhöhte Reinigungsleistung aufweisen, weil sie oft höhere Wassergehalte ermöglichen und weil oft höhere Gehalte an Farbstoff zugesetzt sein/werden können, so dass aufgrund des erhöhten Farbstoffgehalts eine höhere Fehlererkennbarkeitsklasse erreicht wird. Trotz intensiver Recherchen und Prüfungen an Rissprüfmitteln des Marktes konnten keine Rissprüfmittel in Form von Mikroemulsionen identifiziert werden.

Es wurde jetzt gefunden, dass es möglich und vorteilhaft ist, den häufig hohen Gehalt an Lösevermittlern (=Co-Lösemitteln), die üblicherweise wasserlösliche Alkohole oder/und wasserlösliche Polyole mit einer Wasserlöslichkeit bei 20 °C von mindestens 10 g/L zumindest teilweise durch wasserunlösliche Lösemittel, im Wesentlichen wasserunlösliche Lösemittel oder/und Tenside zu ersetzen, wobei die Summe der Lösevermittler oft mindestens 20 Gew.-% weniger ausmacht als beim ursprünglichen Gehalt an derartigen Lösevermittlern bei Produkten des Standes der Technik. Hierbei können insbesondere für O/W-Mikroemulsionen vor allem Lösemittel wie z.B. im Wesentlichen wasserunlösliche Glykolether eingesetzt werden, die in Wasser im Bereich von 0 bis 60 g/L bei 20 °C unter Normaldruck gelöst werden, oder/und insbesondere wasserlösliche nichtionische oder/und anionische Tenside wie z.B. Alkoholethoxylate mit einer Wasserlöslichkeit bei 20 °C von mindestens 10 g/L. Wenn bei Löslichkeitsangaben bei 20 °C gemessen werden soll, dann ist im Sinne dieser Anmeldung immer von Normaldruck auszugehen. Diese Lösemittel weisen üblicherweise eine sehr gute Löslichkeit für die verwendeten Farbstoffe oder/und Farbstoffsysteme auf.

Bisher bestand bei der Prüfung auf Fehler das Risiko, dass Risse und andere Fehler mit herkömmlichen wasserbasierten Rissprüfmitteln wegen unzureichender Reinigung der Testobjekte nicht ausreichend detektierbar sind. Es wurde jetzt gefunden, dass Rissprüfmittel in Form einer Mikroemulsion eine hohe innere kinetische Aktivität aufgrund ständiger Umbildung der Micellen aufweisen. Dieser Effekt führt zu einer zusätzlichen Reinigungsleistung, die eine gegebenenfalls unzureichende Reinigung oder/und Entfettung der zu prüfenden Teile ausgleichen kann. Daher sind die erfindungsgemäßen Rissprüfmittel-Mikroemulsionen für die sichere Detektion von Fehlern hervorragend geeignet.

Dispersionen und Emulsionen sind teilweise besonders intransparent, oft sogar milchig. **Mikroemulsionen** sind makroskopisch homogene, optisch transparente oder klare, niedrigviskose und üblicherweise auch thermodynamisch stabile Mischungen. Oft zeigen sie eine Viskosität von weniger als 30 mm²/s gemessen mit einem Kapillarviskosimeter bei 20 °C unter Normaldruck. Emulsionen, Mikroemulsionen und ihre entmischten Varianten werden im Sinne der vorliegenden Anmeldung mit ihrem Oberbegriff als Dispersionen angesprochen.

Gegenüber rein wässerigen Rissprüfmitteln mit einem Gehalt an gut wasserlöslichen organischen Lösemitteln können die erfindungsgemäßen Mikroemulsionen eine deutlich höhere Menge an wasserunlöslichem Farbstoff einschließlich aller Bestandteile eines Farbstoffsystems wie z.B. Farbstoff und Fluoreszenzverstärker lösen. Dadurch wird mit diesen wasserhaltigen Systemen eine Detektionsempfindlichkeit erreicht, die bisher Rissprüfmitteln des Standes der Technik mit einem Gehalt von mindestens 50 Gew.-% an Tensiden und gegebenenfalls einem Gehalt an Lösevermittler, die die Bestandteile des Farbstoffs oder des Farbstoffsystems lösen, vorbehalten war.

Unter einer Mikroemulsion versteht man oft eine thermodynamisch stabile, optisch isotrope Dispersion, die mindestens zwei nicht mischbare Flüssigkeiten, Flüssigkeitsgemische oder Lösungen enthält und gegebenenfalls durch mindestens eine amphiphile Komponente wie z.B. einen Emulgator stabilisiert wird; eine Mikroemulsion ähnelt hierbei einer Emulsion, wobei die disperse Phase der Mikroemulsion wie z.B. Öl oder Wasser derart kleine Domänen, sog. "Tröpfchen", bildet, dass sichtbares Licht an ihnen nicht oder nicht wesentlich gestreut wird. Das bewirkt, dass Mikroemulsionen so transparent oder klar wie z.B. Wasser sind, während sonstige Dispersionen und Emulsionen oft eher undurchsichtig sind. Eine mangelnde Transparenz wirkt sich leicht auf die Erkennbarkeit von Fehlstellen aus. Wenn die Ölphase in der Mikroemulsion die disperse Phase bildet, bildet Wasser die kontinuierliche Phase und es liegt eine Öl-in-Wasser-Mikroemulsion vor, O/W-Mikroemulsion. Es gibt umgekehrt Wasser-in-Öl-Mikroemulsionen, W/O-Mikroemulsionen.

Mikroemulsionen sind oft keine Emulsionen mit besonders kleinen Tröpfchen der dispergierten Phase, sondern thermodynamisch stabile, flüssige Mischungen von Wasser, wasserunlöslicher Substanz und Tensid. Thermodynamische Stabilität, spontane Bildung und optische Transparenz unterscheiden sie oft von Emulsionen. Zu ihren charakteristischen Eigenschaften zählen oft Isotropie, Klarheit, Transparenz oder/und schwache Opaleszenz, thermodynamische Stabilität und niedrige Viskosität. Sie weisen eine hohe Transparenz auf und sind vielfach auch beim Zentrifugieren bei 2000 UPM für mindestens 30 Minuten gegenüber einer sichtbaren Phasenseparation stabil.

Mikroemulsionen können einer starken Dynamik unterliegen, die durch stete Fluktuation einzelner Moleküle zu ständigen Auf- und Abbauprozessen der Aggregate führen können. Mikroemulsionen können wie herkömmliche Emulsionen bei Änderung des Phasenvolumenverhältnisses umschlagen. Mikroemulsionen sind vielfach dauerhaft stabil und können sich oft spontan bilden. Mikroemulsionen können einphasig oder zusammen mit ein oder zwei weiteren Phasen vorliegen. Diese zwei zusätzlichen Phasen bestehen aus wässeriger bzw. aus wasserunlöslicher organischer Phase. Eine Mikroemulsion enthält neben den zwei nicht miteinander mischbaren Flüssigkeiten üblicherweise mindestens ein Tensid. Dieses kann zur Micellbildung beitragen. Die Micellen können die zweite, nicht mischbare Flüssigkeit aufnehmen. Ist die Aufnahmefähigkeit der Micellen erschöpft, kann der Rest der zweiten Flüssigkeit Exzessphasen bilden. Dann können gegebenenfalls auch zwei verschiedene im Wesentlichen wasserunlösliche flüssige Phasen C) vorliegen. Wenn ein Tensid allein in der Zusammensetzung nicht ausreicht, eine Mikroemulsion zu bilden, empfiehlt es sich mindestens ein weiteres Tensid - als Cotensid - oder/und mindestens ein Cosolvens wie z.B. mindestens einen mittelkettigen Alkohol zuzusetzen. Eine einphasige Mikroemulsion entsteht oft erst bei ausreichend hohem Tensidgehalt.

Die Aufgabe wird gelöst mit einer Verwendung eines Rissprüfmittels zur Fehlererkennung nach dem Eindringverfahren insbesondere für metallische oder/und nichtmetallische Komponenten, das dadurch gekennzeichnet ist, dass es eine Mikroemulsion ist, die enthält:
A) mindestens 10 Gew.-% an Wasser A),
B) mindestens 0,1 Gew.-% an mindestens einem Farbstoff B), der eine Löslichkeit in Wasser von weniger als 0,1 g/L bei 20 °C unter Normaldruck aufweist und der gegebenenfalls in einem Farbstoffsystem vorliegt,
C) mindestens 5 Gew.-% an mindestens einer im Wesentlichen wasserunlöslichen flüssigen Phase C), wobei die Löslichkeit der im Wesentlichen wasserunlöslichen oder der wasserunlöslichen organischen Verbindungen der im Wesentlichen wasserunlöslichen Phase C) bei 20 °C unter Normaldruck bei höchstens 60 g/L in destilliertem Wasser liegt, und
D) mindestens 2 Gew.-% an mindestens einem Tensid D) ausgewählt aus nichtionischen, anionischen oder/und amphoteren Tensiden,
   die gegebenenfalls auch mindestens ein Additiv E) enthält,
   wobei gegebenenfalls ein Farbstoff B) enthaltendes Farbstoffsystem auch zu 0,11 bis 20 Gew.-% enthalten ist,
   wobei die Summe aller Bestandteile 100 Gew.-% ergibt,
wobei das Rissprüfmittel eine mittlere Teilchengröße im Bereich von 1 bis 250 nm gemessen mit einem Zetasizer Nano-ZS von Malvern sowie eine Transparenz von mindestens 70 % bei 600 nm in einer Quarzglasküvette mit 10 mm Dicke der durchstrahlten Flüssigkeit bei einer Temperatur von 20 °C unter Normaldruck gemessen mit einem Photometer CADA 100-V der Hach Lange GmbH an einer gleichartigen, jedoch außer bei gelb fluoreszierenden Rissprüfmitteln keinen Farbstoff enthaltenden Mikroemulsion aufweist.

Die Summe der Bestandteile A), B), C) und D) muss nicht 100 % ergeben, wenn beispielsweise mindestens ein Additiv E) enthalten ist, mit dem die Bestandteile A), B), C) und D) erst 100 % ergeben. Bei allen Zusammensetzungen kann bei Bedarf anstelle von "enthalten" "bestehen im Wesentlichen aus" oder "bestehen aus" eingesetzt werden.

Die mittlere Teilchengröße wird hierbei - anders als gegebenenfalls die Transparenz - an einer Farbstoff enthaltenden Mikroemulsion gemessen. Denn bei Rissprüfmitteln zur Rot-Weiß-Prüfung und bei rot fluoreszierenden Rissprüfmitteln wird die Teilchengröße nur an einer Mikroemulsion ohne Gehalt an Farbstoff gemessen, weil die Farbintensität des roten Farbstoffs zu stark ist.

Hierbei ist bevorzugt, dass es eine Öl-in-Wasser-Mikroemulsion (O/W) oder Wasser-in-Öl-Mikroemulsion (W/O) ist, bei der anstelle von Öl oder zusammen mit Öl mindestens eine andere mit Wasser nicht mischbare Flüssigkeit verwendet wird. Vorzugsweise enthält die erfindungsgemäße Mikroemulsion als O/W-Mikroemulsion mindestens 30 Gew.-% an Wasser A) und als W/O-Mikroemulsion mindestens 10 Gew.-% an Wasser A).

Bevorzugt ist das erfindungsgemäße Rissprüfmittel bei gelb oder rot fluoreszierenden Rissprüfmitteln eine O/W-Mikroemulsion, die
A) 30 bis 85 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist und gegebenenfalls in einem Farbstoffsystem vorliegt,
C) 5 bis 50 Gew.-% an mindestens einer im Wesentlichen wasserunlöslichen flüssigen Phase C),
D) 2 bis 60 Gew.-% an mindestens einem Tensid D) und
   gegebenenfalls auch mindestens ein Additiv E) enthält,
   wobei gegebenenfalls ein Farbstoff B) enthaltendes Farbstoffsystem auch zu 0,11 bis 20 Gew.-% enthalten ist,
   wobei das Gewichtsverhältnis von Gehalten an C): D) gegebenenfalls im Bereich von 0,08 : 1 bis 25 : 1, von 0,14 : 1 bis 8 : 1, von 0,2 : 1 bis 6 : 1, von 0,3 : 1 bis 4 : 1 oder von 0,6 : 1 bis 2 : 1 liegt,
   wobei die Summe aller Bestandteile 100 Gew.-% ergibt und
   wobei das Rissprüfmittel eine mittlere Teilchengröße im Bereich von 1 bis 250 nm sowie eine Transparenz von mindestens 70 % bei 600 nm aufweist.

Besonders bevorzugt enthält es hierbei
A) 40 bis 75 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist und gegebenenfalls in einem Farbstoffsystem vorliegt,
C) 7 bis 40 Gew.-% an mindestens einer im Wesentlichen wasserunlöslichen flüssigen Phase C) und
D) 5 bis 50 Gew.-% an mindestens einem Tensid D).

Bevorzugt ist das erfindungsgemäße Rissprüfmittel zur Rot-Weiß-Prüfung eine O/W-Mikroemulsion, die
A) 30 bis 80 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist und gegebenenfalls in einem Farbstoffsystem vorliegt,
C) 5 bis 45 Gew.-% an mindestens einer im Wesentlichen wasserunlöslichen flüssigen Phase C),
D) 2 bis 55 Gew.-% an mindestens einem Tensid D) und
   gegebenenfalls auch mindestens ein Additiv E) enthält,
   wobei gegebenenfalls ein Farbstoff B) enthaltendes Farbstoffsystem auch zu 0,11 bis 20 Gew.-% enthalten ist,
   wobei das Gewichtsverhältnis von Gehalten an C): D) gegebenenfalls im Bereich von 0,08 : 1 bis 25 : 1, von 0,14 : 1 bis 8 : 1, von 0,2 : 1 bis 6 : 1, von 0,3 : 1 bis 4 : 1 oder von 0,6 : 1 bis 2 : 1 liegt,
   wobei die Summe aller Bestandteile 100 Gew.-% ergibt und wobei das Rissprüfmittel eine mittlere Teilchengröße im Bereich von 1 bis 250 nm sowie eine Transparenz von mindestens 70 % bei 600 nm aufweist.

Besonders bevorzugt enthält es hierbei
A) 30 bis 70 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist und gegebenenfalls in einem Farbstoffsystem vorliegt,
C) 7 bis 40 Gew.-% an mindestens einer im Wesentlichen wasserunlöslichen flüssigen Phase C) und
D) 5 bis 45 Gew.-% an mindestens einem Tensid D).

Bevorzugt ist das erfindungsgemäße Rissprüfmittel bei gelb oder rot fluoreszierenden Rissprüfmitteln eine W/O-Mikroemulsion, die
A) 10 bis 60 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist und gegebenenfalls in einem Farbstoffsystem vorliegt,
C) 5 bis 40 Gew.-% an mindestens einer im Wesentlichen wasserunlöslichen flüssigen Phase C) und
D) 2 bis 50 Gew.-% an mindestens einem Tensid D und
   gegebenenfalls auch mindestens ein Additiv E) enthält,
   wobei gegebenenfalls ein Farbstoff B) enthaltendes Farbstoffsystem auch zu 0,11 bis 20 Gew.-% enthalten ist,
   wobei das Gewichtsverhältnis von Gehalten an C) : D) gegebenenfalls im Bereich von 0,08 : 1 bis 25 : 1, von 0,14 : 1 bis 8 : 1, von 0,2 : 1 bis 6 : 1, von 0,3 : 1 bis 4 : 1 oder von 0,6 : 1 bis 2 : 1 liegt,
   wobei die Summe aller Bestandteile 100 Gew.-% ergibt und wobei das Rissprüfmittel eine mittlere Teilchengröße im Bereich von 1 bis 250 nm sowie eine Transparenz von mindestens 70 % bei 600 nm aufweist.

Besonders bevorzugt enthält es hierbei
A) 20 bis 50 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist und gegebenenfalls in einem Farbstoffsystem vorliegt,
C) 10 bis 35 Gew.-% an mindestens einer im Wesentlichen wasserunlöslichen flüssigen Phase C) und
D) 10 bis 50 Gew.-% an mindestens einem Tensid D.

Bevorzugt ist das erfindungsgemäße Rissprüfmittel zur Rot-Weiß-Prüfung eine W/O-Mikroemulsion, die
A) 10 bis 60 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist und gegebenenfalls in einem Farbstoffsystem vorliegt,
C) 5 bis 40 Gew.-% an mindestens einer im Wesentlichen wasserunlöslichen flüssigen Phase C) und
D) 2 bis 40 Gew.-% an mindestens einem Tensid D) und
   gegebenenfalls auch mindestens ein Additiv E) enthält,
   wobei gegebenenfalls ein Farbstoff B) enthaltendes Farbstoffsystem auch zu 0,11 bis 20 Gew.-% enthalten ist,
   wobei das Gewichtsverhältnis von Gehalten an C) : D) gegebenenfalls im Bereich von 0,08 : 1 bis 25 : 1, von 0,14 : 1 bis 8 : 1, von 0,2 : 1 bis 6 : 1, von 0,3 : 1 bis 4 : 1 oder von 0,6 : 1 bis 2 : 1 liegt,
   wobei die Summe aller Bestandteile 100 Gew.-% ergibt und wobei das Rissprüfmittel eine mittlere Teilchengröße im Bereich von 1 bis 250 nm sowie eine Transparenz von mindestens 70 % bei 600 nm aufweist.

Besonders bevorzugt enthält es hierbei
A) 20 bis 50 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist und gegebenenfalls in einem Farbstoffsystem vorliegt,
C) 10 bis 35 Gew.-% an mindestens einer im Wesentlichen wasserunlöslichen flüssigen Phase C) und
D) 10 bis 35 Gew.-% an mindestens einem Tensid D.

Die erfindungsgemäße Mikroemulsion wird häufig eine mittlere Teilchengröße im Bereich von 1 bis 250 nm, von 1 bis 200 nm, von 1 bis 150 nm, von 1 bis 100 nm oder von 1 bis 40 nm sowie eine Transparenz von mindestens 70 %, von mindestens 80 % oder von mindestens 90 % gemessen bei 600 nm aufweisen. Die mittlere Teilchengröße wird mit einem Zetasizer Nano-ZS von Malvern gemessen. Die Transparenz wird gemessen bei 600 nm in einer Quarzglasküvette mit 10 mm Dicke der durchstrahlten Flüssigkeit bei 20 °C unter Normaldruck mit einem Photometer CADA 100-V der Hach Lange GmbH an einer gleichartigen, jedoch außer bei gelb fluoreszierenden Rissprüfmitteln keinen Farbstoff enthaltenden Mikroemulsion. Wenn die Dispersion eine gespaltene Mikroemulsion oder eine Emulsion ist, wird sie vielfach eine mittlere Teilchengröße im Bereich von 80 bis 1500 nm oder im Bereich von 105 bis 800 nm sowie eine Transparenz von höchstens 20 % oder von höchstens 5 % bei 600 nm aufweisen - beide wie oben genannt gemessen; sie kann dann aber auch eine sehr geringe Transparenz aufweisen. Die Rissprüfmittel des Standes der Technik sind dagegen klare Lösungen, die bei der Messung der mittleren Teilchengröße Werte unter 1 nm und - soweit bestimmbar - eine Transparenz über 90 % ergeben.

Die mittleren Teilchengrößen der erfindungsgemäßen Mikroemulsionen liegen bei weniger als 250 nm. Die erfindungsgemäßen Mikroemulsionen sind vorzugsweise klar oder transparent. Insbesondere zeigen die erfindungsgemäßen Mikroemulsionen eine Transparenz von ≥ 75 %, von ≥ 80 %, von ≥ 85 %, von ≥ 90 % oder von ≥ 94 % bei 20 °C unter Normaldruck, wobei Transparenz-Werte von größer als 80 % für Mikroemulsionen bei 20 °C eher typisch sind. Besonders bevorzugt sind solche Mikroemulsionen, die eine Transparenz, gemessen bei 20 °C unter Normaldruck, von 90 bis 100 % aufweisen. Insbesondere zeigen Mikroemulsionen eine Transparenz von größer oder gleich 40 % bei 40 °C unter Normaldruck, wobei Transparenz-Werte von größer als 80 % für Mikroemulsionen bei 40 °C typisch sind. Besonders bevorzugt sind solche Mikroemulsionen, die eine Transparenz, gemessen bei 40 °C unter Normaldruck, von 85 bis 100 % aufweisen.

Die mittleren Teilchengrößen der erfindungsgemäßen Mikroemulsionen liegen vorzugsweise im Bereich von 0,1 bis 300 nm, besonders bevorzugt im Bereich von 1 bis 250 nm, von 1,5 bis 200 nm, von 1,6 bis 150 nm, von 1,8 bis 120, von 1,9 bis 100 nm oder von 2 bis 80 nm. Die Mikroemulsionen im Sinne der vorliegenden Erfindung zeigen vorzugsweise Teilchengrößen von weniger als 250 nm auf. Die Teilchengrößen der erfindungsgemäßen Mikroemulsionen sind vorzugsweise kleiner als 250 nm, besonders bevorzugt im Bereich von 1 bis 250 nm, von 1,5 bis 200 nm, von 1,6 bis 150 nm, von 1,8 bis 120, von 1,9 bis 100 nm oder von 2 bis 80 nm. Die Teilchengrößen und die daraus errechneten mittleren Teilchengrößen lassen sich im Sinne der Erfindung mit einem Zetasizer Nano-ZS von Malvern messen.

Die im Wesentlichen eingipfeligen Teilchengrößenverteilungen weisen neben dem Hauptpeak keinen weiteren Peak von mehr als 25 % Peakfläche im Vergleich zu der Gesamtfläche auf. Wenn mehrgipfelige Teilchengrößenverteilungen auftreten, werden sogenannte "mittlere Teilchengrößen" nur für Peaks mit mindestens 25 % Peakfläche in den Tabellen aufgeführt. Die Ergebnisse der Peakflächenberechnungen werden von dem verwendeten Gerät ausgegeben. Daher werden bei mehrgipfeligen Teilchengrößenerteilungen zu einzelnen Beispielen bis zu drei "mittlere Teilchengrößen" aufgeführt, die alle eine Peakfläche größer als 25 % der Gesamtfläche aufweisen.

Außerdem kann die Leuchtkraft der gelb fluoreszierenden Rissprüfmittel als Fluoreszenzhelligkeit mit einem Fluorophotometer vom Typ S-291 von NDT Italiana überprüft werden. Sie wurde in % gemessen gegen die Referenz Sherwin RC-77 Batch No.92-B15. Hierbei ergaben sich insbesondere Werte - gemessen an getrockneten Farbfilmen des Rissprüfmittels bzw. der Referenzlösung auf einem standardisierten Filterpapier - im Bereich von 50 bis über 100 % als Vergleich zu einem Referenzsystem FP-4PE von Sherwin. Die Rissprüfmittel lassen sich nach ISO 3452 bezüglich der prozentualen Fluoreszenzhelligkeit des getrockneten Farbfilms im visuellen Abgleich gegen ein gleichartig und gleichzeitig hergestelltes Referenzmuster i in Empfindlichkeitsklassen einteilen: Klasse 1/2 - mindestens 50 %, Klasse 1 - mindestens 65 %, Klasse 2 - mindestens 80 %, Klasse 3 - mindestens 90 % und Klasse 4 - mindestens 95 %. Vorzugsweise weist das erfindungsgemäße Rissprüfmittel eine Leuchtkraft von mindestens 60 %, von mindestens 90 % oder sogar von mehr als 100 % auf. Diese Messmethode weist zwar eine erhebliche Messunsicherheit auf. Dennoch hat sich die Leuchtkraft als kennzeichnendes Merkmal gut bewährt.

Als Mikroemulsion im Sinne der vorliegenden Erfindung wird eine Dispersion bezeichnet, deren disperse Phase insbesondere als Tröpfchen, Röhrchen oder/und Schichten derart kleine Domänen bildet, dass sichtbares Licht nicht oder fast nicht an ihnen gestreut wird. Sie ist üblicherweise transparent oder klar. Ein Tyndall-Effekt konnte in Farbstoff-freien Dispersionen von besonders kleinen Teilchengrößen nicht beobachtet werden, trat aber etwa oberhalb von 70 nm mittlerer Teilchengröße zumindest in schwacher Wirkung regelmäßig auf.

Das Rissprüfmittel kann vorzugsweise dadurch gekennzeichnet sein, dass die Dispersion eine Öl-in-Wasser-Mikroemulsion (O/W) ist.

Das erfindungsgemäße Rissprüfmittel ist alternativ hierzu vorzugsweise dadurch gekennzeichnet, dass die Dispersion eine Wasser-in-ÖI-Mikroemulsion (W/O) ist, bei der gegebenenfalls anstelle von Öl oder zusammen mit Öl mindestens eine andere in Wasser nicht lösliche Flüssigkeit verwendet wird wie z.B. in Wasser unlösliche oder im Wesentlichen unlösliche organische Lösemittel als Verbindungen der im Wesentlichen wasserunlöslichen Phase C), die unter den gegebenen Bedingungen flüssig sind, wie z.B. Carbonsäureester, Ether oder/und unsubstituierte Kohlenwasserstoffe.

Bei einer O/W-Mikroemulsion ist der Gehalt an im Wesentlichen wasserunlöslicher Phase C) vorzugsweise im Bereich von 5 bis 50 Gew.-%, von 5 bis 45 Gew.-%, von 7 bis 40 Gew.-%, von 10 bis 35 Gew.-% oder von 15 bis 30 Gew.-% und der Gehalt an Tensiden D) vorzugsweise im Bereich von 2 bis 60 Gew.-%, von 2 bis 55 Gew.-%, von 5 bis 50 Gew.-%, von 5 bis 45 Gew.-%, von 8 bis 40 Gew.-% oder von 10 bis 35 Gew.-%.

Dagegen ist bei einer W/O-Mikroemulsion der Gehalt an im Wesentlichen wasserunlöslicher Phase C) vorzugsweise im Bereich von 5 bis 40 Gew.-%, von 8 bis 38 Gew.-%, von 10 bis 35 Gew.-%, von 12 bis 30 Gew.-% oder von 15 bis 25 Gew.-% und der Gehalt an Tensiden D) vorzugsweise im Bereich von 2 bis 50 Gew.-%, von 10 bis 50 Gew.-%, von 3 bis 45 Gew.-%, von 2 bis 40 Gew.-%, von 10 bis 35 Gew.-% oder von 15 bis 30 Gew.-%.

Alle Übergänge sind in dem großen Bereich zwischen O/W- und W/O-Mikroemulsionen grundsätzlich möglich und treten oft fließend auf. Wann eine O/W- oder eine W/O-Emulsion oder eine O/W- oder eine W/O-Mikroemulsion gebildet wird, kann wesentlich von der Art oder/und Menge der verwendeten Substanzen der im Wesentlichen wasserunlöslichen Phase C), von der Art oder/und Menge der verwendeten Tenside D) gegebenenfalls einschließlich der Art oder/und Menge der gegebenenfalls als Co-Tenside oder/und als Emulgatoren wirkenden Tenside D) oder/und der Art oder/und Menge der verwendeten Lösevermittler der Additive E) abhängen.

Eine O/W-Mikroemulsion ist bei erfindungsgemäßen Rissprüfmitteln der Empfindlichkeitsklassen 0,5 bis 3 bevorzugt. Eine W/O-Mikroemulsion ist bei erfindungsgemäßen gelb fluoreszierenden Rissprüfmitteln der Empfindlichkeitsklasse 4 bevorzugt. Die Empfindlichkeitsklassen der erfindungsgemäßen gelb fluoreszierenden Rissprüfmittelmikroemulsionen gehen üblicherweise von 0,5 bis 4, wobei 4 die empfindlichsten Rissprüfmittel wiedergibt. Bei den erfindungsgemäßen Mikroemulsionen für die Rot-Weiß-Prüfung und bei rot fluoreszierenden Rissprüfmitteln lässt sich üblicherweise die Empfindlichkeitsklasse 2 zuordnen, wobei es nur zwei Klassen gibt: Klasse 1 mit niedriger und Klasse 2 mit hoher Empfindlichkeit. Mit den erfindungsgemäßen Rissprüfmitteln können alle Empfindlichkeitsklassen je nach Eigenschaftsprofil eingestellt werden, wobei der Gehalt insbesondere der gelb fluoreszierenden Farbstoffe die Produktkosten erheblich beeinflusst.

Eine O/W-Mikroemulsion ist bei besonders umweltfreundlichen Rissprüfmitteln bevorzugt. Insbesondere bei den gelb fluoreszierenden Rissprüfmitteln ist eine O/W-Mikroemulsion für Rissprüfmittel mit erweitertem Arbeitstemperaturbereich wie z.B. von 5 bis 90 °C bevorzugt. Hierbei gibt es Zusammensetzungen, die bei Raumtemperatur als Mikroemulsion und bei 50 °C als Emulsion vorliegen, wie auch einzelne Beispiele zeigen. Sie weisen meistens ein nicht-ionisches Tensid mit geringerem Trübungspunkt auf. Bei Verwendung nicht-ionischer Tenside sinkt das Lösungsvermögen für die im Wesentlichen wasserunlöslichen Lösemittel C) der Tenside durch den sinkenden Hydratationsgrad bei steigender Temperatur (=Trübungspunkt).

Das erfindungsgemäße Rissprüfmittel weist vorzugsweise keine mittlere Teilchengrößen größer als 200 nm, größer als 100 nm, größer als 50 nm, größer als 20 nm oder größer als 10 nm auf, gemessen mit einem Zetasizer Nano-ZS der Fa. Malvern mit der Software-Version 6.20 bei 25 °C in einer Quarzglasküvette mit einer Schichtdicke von 10 mm, wobei die Proben ohne weitere Vorbereitung direkt gemessen werden. Gemessen wurde jeweils in mindestens 2 Intervallen mit je mindestens 10 Messungen. Da der Zetasizer Nano-ZS sich selber auf etwa 25 °C temperiert, sind keine weiteren Randbedingungen zu beachten.

Bei den erfindungsgemäßen Rissprüfmitteln in Form von Mikroemulsionen ist es bevorzugt, dass sie aufgrund der geringen Größe der Teilchen visuell möglichst nicht von einer Lösung unterschieden werden können. Fast alle der erfindungsgemäßen Rissprüfmittel sind klar wie eine Lösung. Hieraus und aus einem höheren Farbstoffgehalt ergibt sich oft eine etwas höhere Fehlerdetektierbarkeit. Die erfindungsgemäßen Rissprüfmittelmikroemulsionen können beispielsweise durch dynamische Lichtstreuung in Teilchengrößenmessgeräten charakterisiert werden. Hierbei zeichnen sich "normale" Dispersionen oft durch mittlere Teilchengrößen (= mittlere Tröpfchengrößen) von mehr als 300 bis zu 100.000 nm aus. Hierbei zeichnen sich Emulsionen durch mittlere Tröpfchengrößen = Teilchengrößen von mehr als 100 bis zu 100.000 nm aus und Mikroemulsionen durch mittlere Teilchengrößen im Bereich von 1 bis etwa 250 nm. Besonders bevorzugt sind mittlere Teilchengrößen von weniger als 100 nm oder von weniger als 70 nm.

Bezüglich der Transparenz zeichnen sich Emulsionen durch eine Transparenz im Bereich von 0 bis zu etwa 10 % aus und Mikroemulsionen durch eine Transparenz bei 600 nm im Bereich von 70 bis 100 %.

Bevorzugtes Ziel ist daher eine stabile sowie klare oder transparente Mikroemulsion. Eine Mikroemulsion wird insbesondere dann als stabil angesehen, wenn über mindestens einen Monat keine Phasentrennung mit dem bloßen Auge zu beobachten ist, so dass keine Tröpfchen und keine Schichten, keine deutliche Eintrübung der Mikroemulsion und kein oder nahezu kein Verlust der Klarheit oder Transparenz der Mikroemulsion erkennbar sind.

Eine stabile Mikroemulsion erhält man in manchen Zusammensetzungen nur, wenn sich die zur Ausbildung der Mikroemulsion notwendigen Stoffe, nämlich insbesondere Wasser, die im Wesentlichen in Wasser unlösliche Phase C), Tensid und gegebenenfalls Co-Tensid in einem bestimmten Mengenverhältnis zueinander befinden. Dieses Mengenverhältnis wird im Wesentlichen durch die Art der Tenside D) und der in Wasser im Wesentlichen unlöslichen Phase C) mitbestimmt. Bei Vorliegen eines geeigneten Mengenverhältnisses bildet sich üblicherweise ohne weiteren Energieeintrag wie z.B. ohne intensives Mischen und ohne intensives Rühren ein stabiles einphasiges Gemisch als Mikroemulsion aus.

Vorzugsweise liegt das Mischungsverhältnis von Wasser A) zu im Wesentlichen wasserunlöslicher Phase C) im Bereich von 0, 25 : 1 bis 17 : 1, von 0,60 : 1 bis 17 : 1, von 0, 40 : 1 bis 12 : 1, von 0, 30 : 1 bis 10 : 1, von 0, 40 : 1 bis 9 : 1, von 0,50 : 1 bis 8 : 1, von 0,55 : 1 bis 5 : 1, von 0,60 : 1 bis 6 : 1, von 0,65 : 1 bis 16 : 1, von 0,75 : 1 bis 10 : 1, von 0,80 : 1 bis 5 : 1, von 1 : 1 bis 11 : 1, von 1 : 1 bis 4 : 1 oder von 2 : 1 bis 3 : 1, bezogen auf das Gewichtsverhältnis von Wasser A) zu Tensiden D).

Vorzugsweise liegt das Mischungsverhältnis von Wasser A) zu Tensiden D) einschließlich der gegebenenfalls als Co-Tenside oder/und als Emulgatoren wirkenden Tenside D) im Bereich von 0, 2 : 1 bis 42,5 : 1, von 0, 25 : 1 bis 30 : 1, von 0, 3 : 1 bis 20 : 1, von 0, 4 : 1 bis 10 : 1, von 0,5 : 1 bis 8 : 1, von 0,6 : 1 bis 6 : 1, von 0,8 : 1 bis 5 : 1, von 1 : 1 bis 4 : 1 oder von 2 : 1 bis 3 : 1, bezogen auf das Gewichtsverhältnis von Wasser A) zu Tensiden D).

Die Stabilität dieser einphasigen Gemische ist bei Verwendung nichtionischer Tenside oft stark temperaturabhängig, denn aufgrund des bei steigender Temperatur sinkenden Hydratationsgrades kann es zur Spaltung einer Emulsion oder Mikroemulsion kommen, wohingegen durch Verwendung von Tensiden, deren Hydratationsgrad weniger temperaturabhängig ist wie z.B. mit anionischen Tensiden, werden häufig Mikroemulsionen erhalten, die in einem größeren Temperaturbereich wie z.B. von 5 bis 60 °C stabil sind. Die Temperaturabhängigkeit zeigt sich beim Erwärmen häufig anhand einer Eintrübung des Rissprüfmittels bis hin zum kompletten Brechen einer Mikroemulsion, was häufig durch Phasenseparation deutlich erkennbar ist. Insbesondere in dem durch die relevanten Spezifikationen wie z.B. AMS 2644 oder DIN EN ISO 3452-2 vorgegebenen Arbeitstemperaturbereich von 10 bis 50 °C ist eine Aufspaltung des Rissprüfmittels unerwünscht. Bei Verwendung nichtionischer Tenside werden vorzugsweise solche mit einem Trübungspunkt von mehr als 50 °C, von mehr als 60 °C oder von mehr als 70 °C eingesetzt.

Vorzugsweise ist die erfindungsgemäße Mikroemulsion klar oder transparent. Vorzugsweise weist die erfindungsgemäße Mikroemulsion weder eine Trübung, noch eine Trübung mit einem starken Tyndall-Effekt auf. Ein Tyndall-Effekt kann insbesondere bei fluoreszierenden Rissprüfmitteln unabhängig von der mittleren Teilchengröße in Anwesenheit von Farbstoff auftreten und bei Farbstoff-freien Dispersionen mit mittleren Teilchengrößen etwa größer als 70 nm mittlerer Teilchengröße auftreten.

Das erfindungsgemäße Rissprüfmittel enthält bei O/W-Mikroemulsionen mindestens 30 Gew.-% an Wasser A) und bei W/O-Mikroemulsionen mindestens 10 Gew.-% an Wasser A). Vorzugsweise enthält es bei O/W-Mikroemulsionen mindestens 25 Gew.-%, mindestens 30 Gew.-%, mindestens 35 Gew.-%, mindestens 40 Gew.-%, mindestens 45 Gew.-%, mindestens 50 Gew.-%, mindestens 55 Gew.-% oder mindestens 60 Gew.-% oder 25 bis 80 Gew.-%, 30 bis 75 Gew.-%, 35 bis 70 Gew.-%, 40 bis 65 Gew.-% oder 45 bis 60 Gew.-% an Wasser A).

Das erfindungsgemäße Rissprüfmittel enthält bei W/O-Mikroemulsionen vorzugsweise mindestens 15 Gew.-%, mindestens 20 Gew.-%, mindestens 25 Gew.-%, mindestens 30 Gew.-%, mindestens 35 Gew.-%, mindestens 40 Gew.-% oder mindestens 45 Gew.-% oder 15 bis 60 Gew.-%, 20 bis 55 Gew.-%, 25 bis 50 Gew.-%, 30 bis 45 Gew.-% oder 32 bis 40 Gew.-% an Wasser A).

Bei Rissprüfmitteln auf Basis von gelb oder rot fluoreszierenden O/W-Mikroemulsionen liegt der Gehalt an Wasser A) vorzugsweise im Bereich von 32 bis 80 Gew.-%, im Bereich von 35 bis 75 Gew.-%, im Bereich von 40 bis 70 Gew.-%, im Bereich von 45 bis 65 Gew.-% oder im Bereich von 48 bis 60 Gew.-%.

Bei Rissprüfmitteln zur Rot-Weiß-Prüfung auf Basis von O/W-Mikroemulsionen liegt der Gehalt an Wasser A) vorzugsweise im Bereich von 32 bis 80 Gew.-%, im Bereich von 25 bis 75 Gew.-%, im Bereich von 30 bis 70 Gew.-%, im Bereich von 35 bis 65 Gew.-% oder im Bereich von 40 bis 60 Gew.-%.

Bei Rissprüfmitteln auf Basis von gelb oder rot fluoreszierenden W/O-Mikroemulsionen liegt der Gehalt an Wasser A) vorzugsweise im Bereich von 10 bis 60 Gew.-%, im Bereich von 15 bis 55 Gew.-%, im Bereich von 20 bis 50 Gew.-%, im Bereich von 25 bis 45 Gew.-% oder im Bereich von 30 bis 42 Gew.-%.

Bei Rissprüfmitteln zur Rot-Weiß-Prüfung auf Basis von W/O-Mikroemulsionen liegt der Gehalt an Wasser A) vorzugsweise im Bereich von 10 bis 60 Gew.-%, im Bereich von 15 bis 55 Gew.-%, im Bereich von 20 bis 50 Gew.-%, im Bereich von 25 bis 45 Gew.-% oder im Bereich von 30 bis 42 Gew.-%.

Wenn der Wassergehalt der erfindungsgemäßen Rissprüfmittel unter 30 Gew.-% bei gelb oder rot fluoreszierenden Rissprüfmitteln bzw. unter 10 Gew.-% bei Rissprüfmitteln zur Rot-Weiß-Prüfung liegt, ist das Rissprüfmittel weniger umweltfreundlich. Wenn der Wassergehalt des erfindungsgemäßen Rissprüfmittels über 95 Gew.-% oder für die jeweilige Mikroemulsion zu hoch liegt, ist das Rissprüfmittel weniger empfindlich und die Fehlerdetektion schlechter.

Die erfindungsgemäßen Rissprüfmittel enthalten B) mindestens einen **Farbstoff B),** der eine Löslichkeit in Wasser von weniger als 20 g/L und insbesondere von weniger als 0,1 g/L bei 20 °C unter Normaldruck aufweist und der gegebenenfalls in ein Farbstoffsystem eingebunden sein kann. Üblicherweise liegt die Wasserlöslichkeit der Farbstoffe für die erfindungsgemäßen Rissprüfmittel bei weniger als 0,1 g/L bei 20 °C unter Normaldruck; speziell z.B. Rhodamin B (Solvent Red 49) weist eine Wasserlöslichkeit von ca. 15 g/L bei 20 °C unter Normaldruck auf. Der Farbstoff ist notwendig, um Fehler detektieren zu können. Grundsätzlich kann jeder Farbstoff mit einer so geringen Wasserlöslichkeit verwendet werden, der einen ausreichend hohen Kontrast ermöglicht, wie z.B. Rot, Grün, Blau oder Schwarz. Es können auch Farbstoffgemische wie z.B. Rot und Blau genutzt werden, um bestimmte Farbtöne zu treffen. Die Norm AMS 2644 begrenzt die Farbauswahl auf Orange, Rot und Violett. Besonders bevorzugte Farbstoffe B) sind rot, weil das menschliche Auge für rote Farben besonders empfindlich ist. Besonders bevorzugt sind rote Farbstoffe B) aus der Reihe C.I. (Colour Index) Solvent Dyes, einer international anerkannten Klassifizierung von Farbstoffen und Pigmenten. Ganz besonders bevorzugte rote Farbstoffe B) sind C.I. Solvent Red der Nummern 1, 23, 24, 26, 111, 164, 197, 229 oder/und 242. Hierbei kann gegebenenfalls Solvent Red 49 auf Basis von Xanthen-Farbstoff als fluoreszierender Rot-Farbstoff B) verwendet werden. Die Norm AMS 2644 bezieht sich auf Fluoreszenzfarbstoffe mit grüner, gelber oder orangefarbener Fluoreszenzemission. Bevorzugt wird Solvent Yellow 43, Disperse Yellow 199, Solvent Green 5 oder/und Solvent Green 7, gegebenenfalls mit einem Fluoreszenzverstärker wie z.B. ein Cumarin oder/und ein Stilben, eingesetzt.

Als Farbstoff B) können insbesondere solche, die in Wasser bei 20 °C nicht oder nur schwer löslich sind und die in einer im Wesentlichen wasserunlöslichen flüssigen Phase C) gut löslich sind, insbesondere solche mit einer Löslichkeit bei 20 °C von mindestens 10 g/L in der im Wesentlichen wasserunlöslichen Phase C) oder in der im Wesentlichen wasserunlöslichen Phase C) und in mindestens einem Tensid D). Der Farbstoff B) oder/und das Farbstoffsystem ist/sind oft ein Gemisch aus mehreren Substanzen B). Er ist z.B. ausgewählt aus Anthrachinonen, Azomethinfarbstoffen, Azofarbstoffen ohne Metallkomplex, Metallkomplexfarbstoffen wie z.B. Azometallkomplexfarbstoffen, Formazanen oder/und Phthalocyaninen, Benzodifuranonen, Chinacridonen, Dioxazinen, Methinfarbstoffen, Naphthalimiden, Perylenen, Polymethinfarbstoffen, Triphendioxazinen, Triphenylmethanfarbstoffen oder/und Xanthenen.

Besonders bevorzugt ist als Farbstoff B) mindestens einer ausgewählt aus der Gruppe bestehend aus Anthrachinonen, Azofarbstoffen, Azometallkomplexfarbstoffen, Azomethinen, Methinfarbstoffen, Naphthalimiden, Polymethinfarbstoffen, Triphenylmethanfarbstoffe und Xanthenen.

Die Farbstoffe Solvent Yellow 43, Cumarin und Fluorescein werden bevorzugt für die fluoreszierende Prüfung mit gelben Zusammensetzungen verwendet, während Farbstoffe auf Basis von Solvent Red immer für Rot-Weiß-Rissprüfmittel eingesetzt werden. Bei Verwendung von Rhodamin B (= Neptune Red Base 546 von BASF) ergeben sich rot fluoreszierende Rissprüfmittel.

Anstelle eines einzelnen Farbstoffs B) kann auch ein Farbstoffsystem eingesetzt werden. Der mindestens eine Farbstoff B) kann dann vorzugsweise in einem Farbstoffsystem enthalten sein, das gegebenenfalls mindestens einen Aufheller, der oft als Fluoreszenzverstärker und somit als Farbverstärker wirkt, mindestens ein Farbstoffadditiv oder/und mindestens einen weiteren farblich oder/und bezüglich der Fluoreszenz unterschiedlich wirksamen Farbstoff B) enthält. Hierbei kann der mindestens eine Farbstoff B) gegebenenfalls aus mehreren einzelnen Farbstoffen bestehen, vor allem um einen bestimmten Farbton zu erzielen, insbesondere auch bei kommerziell erhältlichen Produkten. Weiterhin kann der mindestens eine Farbstoff B) als Lösung in einem geeigneten Lösemittel wie z.B. in mindestens einem Lösemittel auf Basis von Mineralöl, Alkohol oder/und Glykol vorliegen. Außerdem können solche Farbstoffzubereitungen gegebenenfalls noch mindestens ein Farbstoffadditiv enthalten ausgewählt aus Additiven wie z.B. Stellmitteln, Emulgatoren, Dispergiermitteln oder/und Konservierungsstoffen. Die kommerziell erhältlichen Farbstoffe liegen oft in Form einer Lösung in mindestens einem organischen Lösemittel vor, das den Farbstoff üblicherweise mindestens mit einer Löslichkeit von 20 g/Liter bei 20 °C aufnehmen kann wie z.B. jeweils mindestens ein Mineralöl, Glykol oder/und Glykolether. Als Aufheller für fluoreszierenden Farbstoff B) können beispielsweise Cumarine oder/und Stilbene verwendet werden. Vorzugsweise wird der mindestens eine Aufheller in mindestens einer Substanz der im Wesentlichen wasserunlöslichen Phase C) oder in der gesamten Phase C) gelöst.

Aufheller sind in mindestens einer Substanz der im Wesentlichen wasserunlöslichen Phase C) gut löslich. Zur schnelleren Auflösung von Cumarin-Feststoff kann es vorteilhaft sein, eine höhere Konzentration an Phase C) oder eine höhere Konzentration an mindestens einer Substanz der im Wesentlichen wasserunlöslichen Phase C) zu verwenden, die Cumarin besonders gut löst. Wenn mehrere einzelne Farbstoffe B) oder ein Farbstoffsystem in einem Gemisch eingesetzt werden, kann es vorkommen, dass die einzelnen Substanzen insbesondere je nach Auswahl der Substanzen der im Wesentlichen wasserunlöslichen Phase C) und ihrer Mengen in der im Wesentlichen wasserunlöslichen Phase C) mehr oder weniger gut gelöst werden, so dass es sich empfiehlt, ein Gemisch aus Substanzen der im Wesentlichen wasserunlöslichen Phase C) zu verwenden, bei dem jeweils mindestens eine Substanz dieses Gemisches C) mindestens eine Substanz des Farbstoffs B) oder/und mindestens eines Aufhellers oder/und mindestens eines Farbstoffadditivs besonders gut löst.

Ein ungelöster Farbstoff B) kann beispielsweise in Form von einem Feststoff vorzugsweise amorph oder/und kristallin vorliegen und kann dann vorzugsweise durch Lösen in der im Wesentlichen in Wasser unlöslichen Phase C) eingebunden werden.

Vorzugsweise enthält das erfindungsgemäße Rissprüfmittel einen Gehalt an mindestens einem fluoreszierenden Farbstoff B), an mindestens einem im Bereich des sichtbaren Lichts farbigen Farbstoff B), an mindestens einem im Bereich des sichtbaren Lichts farbigen und fluoreszierenden Farbstoff B) oder/und an mindestens einem unter UV-Licht detektierbaren Farbstoff B). Wenn weder ein fluoreszierender, noch ein unter UV-Licht detektierbarer Farbstoff verwendet wird, wird vorzugsweise ein roter Farbstoff B) zugesetzt, weil das menschliche Auge für die rote Farbe besonders empfindlich ist.

Bei Verwendung eines fluoreszierenden Farbstoffs B) wird in Ausführungsvarianten vorzugsweise ein Prüfverfahren ohne oder mit einem Entwickler angewandt, bei dem mit einem weißen oder farblosen Entwickler gearbeitet wird, der den fluoreszierenden Farbstoff vorzugsweise auch an die Oberfläche zieht und dadurch die Sichtbarkeit verbessert. Dieser Entwickler wird im Anschluss separat nach dem Auftragen des erfindungsgemäßen Rissprüfmittels angewandt. Der Entwickler soll die in eine Fehlstelle eingedrungene, Farbstoff B) enthaltende Zusammensetzung herausziehen und gegebenenfalls im Farbkontrast zum weißen Entwickler deutlicher darstellen.

Bei Verwendung eines roten Farbstoffs B) kann in einer Ausführungsvariante vorzugsweise das Rot-Weiß-Prüfungsverfahren angewandt werden, bei dem mit einem weißen Entwickler gearbeitet wird. In einer anderen Ausführungsvariante wird der rote Farbstoff B) entweder ohne einen Entwickler oder ohne einen weißen Entwickler eingesetzt. Als Entwickler werden vorzugsweise feinkristalline, amorphe oder/und mikroporöse, organische oder/und anorganische Feststoffe von weißer Farbe oder/und farblos wie z.B. Carbonate, Oxide, Silicate oder/und organische Feststoffe verwendet, die im Temperaturbereich von 10 bis 50 °C zumindest teilweise als Feststoff vorliegen. Sie sind meistens weder in Wasser, noch in organischem Lösemittel in Mengen von mindestens 1 g/L bei 20 °C löslich. Hierzu gehören z.B. Erdalkalimetalloxide, Aluminiumoxide, Siliziumdioxide, Titandioxide, Bentonite, Talk, Verbindungen der Benzoesäure wie z.B. deren Salze, Cellulose, Cellulosederivate, Pentaerythritol oder/und Polyalkylenglykole.

Das erfindungsgemäße Rissprüfmittel enthält vorzugsweise mindestens einen Farbstoff B), der in Wasser im Wesentlichen unlöslich oder gänzlich unlöslich ist.

Das erfindungsgemäße Rissprüfmittel enthält B) mindestens 0,1 Gew.-%, 0,1 bis 20 Gew.-% oder 0,5 bis 15 Gew.-% an mindestens einem Farbstoff B). Sie enthält besonders bevorzugt mindestens 0,5 oder mindestens 3 Gew.-% an mindestens einem Farbstoff B) oder 1 bis 20 Gew.-% oder 3 bis 15 Gew.-% an mindestens einem Farbstoff B), ganz besonders bevorzugt mindestens 5 oder mindestens 7 Gew.-% an mindestens einem Farbstoff B) oder 5 bis 12 Gew.-% oder 7 bis 10 Gew.-% an mindestens einem Farbstoff B), wobei der Farbstoff bis zur Löslichkeitsgrenze vorzugsweise bei 20 °C in der im Wesentlichen wasserunlöslichen Phase C) oder in der Phase C und in mindestens einem Tensid D) enthalten sein kann. Der Gehalt eines Aufhellers kann im Farbstoffsystem vorzugsweise in einem Gehaltsbereich von 0,01 bis 8 Gew.-% oder im Bereich von 0,5 bis 4 Gew.-% liegen. Sein Gehalt ist üblicherweise höher als der Gehalt an Farbstoffen B). Es wird vorzugsweise ein Farbstoffsystem eingesetzt, wenn fluoreszierend unter UV-Licht geprüft werden soll. Als Farbstoffe B) sind Azomethine oder/und Naphthalimide für den fluoreszierenden Bereich oder/und Anthrachinone, Azofarbstoffe, Azometallkomplexfarbstoffe, Methinfarbstoffe, Polymethinfarbstoffe, Triphenylmethanfarbstoffe oder/und Xanthene für den Bereich des sichtbaren Lichts besonders bevorzugt. Es gibt jedoch auch vereinzelt einen Farbstoff B), der im Bereich des sichtbaren Lichts einsetzbar ist und gleichzeitig unter Einstrahlung von UV-Licht fluoresziert, der in einer der beiden Lichtarten oder gleichzeitig unter beiden Lichtarten untersucht werden kann wie z.B. C.I. Solvent Red 49. Ein ganz besonders bevorzugtes Farbstoffsystem ist eine fluoreszierende Mischung aus einem Azomethin oder einem Naphthalimid jeweils mit einem Aufheller auf Basis von Cumarin oder Stilben.

Wenn das erfindungsgemäße Rissprüfmittel weniger als 0,1 Gew.-% an mindestens einem Farbstoff B) enthält, ist das Rissprüfmittel zu unempfindlich und die Fehlerdetektion schlechter. Wenn das erfindungsgemäße Rissprüfmittel mehr als 10 Gew.-% an mindestens einem Farbstoff B) enthält, ist üblicherweise die Löslichkeitsgrenze für den Farbstoff überschritten. Andererseits kann das erfindungsgemäße Rissprüfmittel bei einem geringeren Gehalt an Wasser so eingestellt werden, dass mehr wasserunlöslicher oder/und im Wesentlichen wasserunlöslicher Farbstoff B) gelöst wird und hierdurch die Empfindlichkeit des Rissprüfmittels und die Fehlerdetektion verbessert werden.

Wenn das erfindungsgemäße Rissprüfmittel weniger als 0,1 Gew.-% an mindestens einem Farbstoff oder weniger als 0,11 Gew.-% an mindestens einem Farbstoffstoffsystem enthält, ist das Rissprüfmittel zu unempfindlich und die Fehlerdetektion schlechter. Wenn das erfindungsgemäße Rissprüfmittel mehr als 20 Gew.-% an mindestens einem Farbstoff oder an einem Farbstoffsystem enthält, ist oft die Löslichkeitsgrenze für den Farbstoff B) überschritten.

Außerdem ist es möglich, mindestens ein im Wesentlichen wasserunlösliches organisches Lösemittel in dem erfindungsgemäßen Rissprüfmittel zu verwenden, in dem der mindestens eine Farbstoff B) oder das gewählte Farbstoffsystem vorzugsweise auch ohne sehr hohen Gehalt an Tensid möglichst vollständig oder vollständig gelöst werden kann, insbesondere bei einem Gehalt an Tensid D) von weniger als 40 Gew.-% vollständig oder möglichst vollständig in mindestens einer Verbindung der im Wesentlichen wasserunlöslichen Phase C) gelöst ist. Wenn der Farbstoff oder das Farbstoffsystem der erfindungsgemäßen Rissprüfmittel vollständig gelöst ist, treten im Bereich von 10 bis 50 °C keine Trübungen und Niederschläge auf.

Das ist ein weiterer Vorteil, denn ein hoher Gehalt an Tensid ist umweltbelastend und führt leicht zu Auswaschungen des Rissprüfmittels aus Rissen und anderen Fehlstellen. Hierdurch ermöglichen die erfindungsgemäßen Rissprüfmittel eine höhere Konzentration des Farbstoffs oder des Farbstoffsystems im Rissprüfmittel, wodurch eine verbesserte Anzeige von Fehlstellen und eine Steigerung der Empfindlichkeit gegenüber Rissprüfmitteln mit geringerem Gehalt an Farbstoff oder Farbstoffsystem bewirkt werden.

Das erfindungsgemäße Rissprüfmittel enthält mindestens 5 Gew.-% oder einen Gehalt im Bereich von 5 bis 50 Gew.-% an der mindestens einen Verbindung der im Wesentlichen wasserunlöslichen, bei 20 °C unter Normaldruck flüssigen Phase C). Meistens liegt diese im Wesentlichen wasserunlösliche Phase C) als Gemisch mehrerer Substanzen C) vor. Falls die im Wesentlichen wasserunlösliche Phase C) aus mehr als einer Substanz besteht, sind diese üblicherweise miteinander mischbar. Sie entspricht quasi der Ölphase der O/W- oder W/O-Mikroemulsion. Diese dient insbesondere als Lösemittel für mindestens einen Farbstoff B) oder/und für mindestens einen weiteren Bestandteil des Farbstoffsystems wie z.B. für mindestens einen Aufheller. Darüber hinaus kann es möglich sein, dass die im Wesentlichen wasserunlösliche Phase C) auch weitere Bestandteile wie z.B. Korrosionsinhibitoren oder/und Konservierungsmittel löst. Sie kann gegebenenfalls die Oberflächenspannung des Rissprüfmittels beeinflussen und insbesondere verringern. Im Folgenden wird auch die mindestens eine Verbindung der im Wesentlichen wasserunlöslichen, bei 20 °C unter Normaldruck flüssigen Phase C) insbesondere als "Phase C)" bezeichnet.

Das erfindungsgemäße Rissprüfmittel ist vorzugsweise dadurch gekennzeichnet, dass die im Wesentlichen wasserunlösliche flüssige Phase C) mindestens eine bei 20 °C unter Normaldruck flüssige organische Verbindung enthält, die ausgewählt ist aus der Gruppe bestehend aus Kohlenwasserstoffen einschließlich "Erdölprodukten" C1), Alkoholen C2), Estern oder/und Amiden von Mono-, Di- oder/und Polycarbonsäuren C3), Phosphorsäureestern C4), Ethern C5), Ketonen C6), Ölen und deren Derivaten C7), die keine "Erdölprodukte" sind, und Ether-Ester-Derivaten von Diolen und Polyolen C8) oder die ausgewählt ist aus der Gruppe bestehend aus Alkoholen C2), Estern oder/und Amiden von Mono-, Di- oder/und Polycarbonsäuren C3), Ethern C5) und Ketonen C6).

Vorzugsweise liegt der Gehalt der im Wesentlichen wasserunlöslichen Phase C) bei mindestens 7 Gew.-%, bei mindestens 9 Gew.-%, bei mindestens 11 Gew.-%, bei mindestens 15 Gew.-% oder bei mindestens 15 Gew.-%, bei höchstens 50 Gew.-%, bei höchstens 40 Gew.-%, bei höchstens 30 Gew.-% oder bei höchstens 25 Gew.-% oder im Bereich von 5 bis 50 Gew.-%, im Bereich von 5 bis 45 Gew.-%, im Bereich von 5 bis 40 Gew.-%, im Bereich von 7 bis 40 Gew.-%, im Bereich von 10 bis 35 Gew.-%, im Bereich von 13 bis 40 Gew.-%, im Bereich von 15 bis 30 Gew.-% oder im Bereich von 18 bis 25 Gew.-%, wobei die Gehaltsbereiche je nach dem Mikroemulsionstyp und dem Rissprüfmitteltyp deutlich schwanken können.

Die Löslichkeit der im Wesentlichen wasserunlöslichen oder wasserunlöslichen organischen Verbindungen der im Wesentlichen wasserunlöslichen Phase C) liegt bei 20 °C unter Normaldruck vorzugsweise bei höchstens 60 g/L in destilliertem Wasser, vorzugsweise bei höchstens 50 g/L, bei höchstens 40 g/L, bei höchstens 30 g/L oder bei höchstens 20 g/L. Die Löslichkeit der Mischung aus im Wesentlichen wasserunlöslichen oder wasserunlöslichen organischen Verbindungen der im Wesentlichen wasserunlöslichen Phase C) liegt bei 20 °C unter Normaldruck vorzugsweise bei höchstens 60 g/L in destilliertem Wasser, vorzugsweise bei höchstens 50 g/L, bei höchstens 40 g/L, bei höchstens 30 g/L oder bei höchstens 20 g/L. Dieser hoch erscheinende Wert bedeutet jedoch bei hohen Gehalten an flüssiger Phase C) von z.B. 30 Gew.-%, dass von den ca. 300 g/L an dieser flüssigen Phase C) ein hoher Anteil in Wasser ungelöst im Rissprüfmittel enthalten ist.

Als Bestandteile der bei Raumtemperatur flüssigen und im Wesentlichen wasserunlöslichen Phase C) können grundsätzlich viele organische Lösemittel gewählt werden. Besonders bevorzugt ist, dass die bei Raumtemperatur flüssige Phase C) den gewünschten Farbstoff B) möglichst gut löst, insbesondere in einem Bereich von 10 bis 300 g/L, besonders bevorzugt von 20 bis 200 g/L, oder/und besonders umweltfreundlich ist.

Ein Gehalt an einem Tensid, das gleichzeitig als organisches Lösemittel dienen kann, wird im Sinne dieser Anmeldung jedoch nur als Tensid und nicht als Lösemittel einer im Wesentlichen wasserunlöslichen flüssigen Phase C) gewertet, obwohl es auch eine Funktion als organisches Lösemittel hat.

Die im Wesentlichen wasserunlösliche Phase C) des erfindungsgemäßen Rissprüfmittels enthält mindestens eine Substanz, die bei 20 °C unter Normaldruck zu höchstens 60 g/L in Wasser gelöst werden kann. Vorzugsweise kann diese mindestens eine Substanz bei 20 °C unter Normaldruck zu höchstens 50 g/L, zu höchstens 40 g/L, zu höchstens 30 g/L, zu höchstens 20 g/L, zu höchstens 10 g/L, zu höchstens 1 g/L oder praktisch gar nicht in Wasser gelöst werden. Vorzugsweise weist jede in der im Wesentlichen wasserunlöslichen Phase C) enthaltene Substanz eine solche Löslichkeit in Wasser auf. Vorzugsweise hat/haben daher die oder alle in der im Wesentlichen wasserunlöslichen flüssigen Phase C) enthaltenen Substanzen eine Löslichkeit in Wasser bei 20 °C unter Normaldruck im Bereich von 0 bis 60 g/L, von 0,1 bis 50 g/L, von 1 bis 40 g/L, von 5 bis 30 g/L oder von 10 bis 20 g/L.

Diese mindestens eine Verbindung der im Wesentlichen wasserunlöslichen Phase C) kann ausgewählt werden aus der Gruppe von wasserunlöslichen und im Wesentlichen wasserunlöslichen und bei 20 °C unter Normaldruck flüssigen organischen Substanzen bestehend aus Kohlenwasserstoffen einschließlich "Erdölprodukten" C1), Alkoholen C2), Estern oder/und Amiden von Mono-, Di- oder/und Polycarbonsäuren C3), Phosphorsäureestern C4), Ethern C5), Ketonen C6), Ölen und deren Derivaten C7), die keine "Erdölprodukte" sind, und kombinierten Ether-Ester-Derivaten von Diolen und Polyolen C8). Die mindestens eine Verbindung der im Wesentlichen wasserunlöslichen Phase C) enthält insbesondere oder besteht insbesondere aus aliphatischen Kohlenwasserstoffen ohne funktionelle Gruppe, aromatischen Kohlenwasserstoffen ohne funktionelle Gruppe, aliphatischen Estern, aromatischen Estern, aliphatischen Ethern, Ethern, Ölen, Glykolmonoalkylethern oder/und Glykoldiethern. Besonders bevorzugt ist die Verwendung von mindestens einer Substanz der Carbonsäureester C3) oder/und von mindestens einer Substanz der Ether C5). Ganz besonders bevorzugt sind hierbei die Dialkylester der Dicarbonsäuren mit Kohlenstoff-Kettenlängen der Carbonsäure im Bereich von 2 bis 8 C-Atomen, insbesondere von 4 bis 6 C-Atomen, oder/und die Alkylenglykolmonoalkylether oder/und Alkylenglykolmonoarylether mit Kohlenstoff-Kettenlängen des Alkylenglykols im Bereich von 2 bis 8 C-Atomen, insbesondere von 2 bis 6 C-Atomen. Vorzugsweise weisen die O/W-Mikroemulsionen für gelb fluoreszierende Rissprüfmittel und die W/O-Mikroemulsionen für rot fluoreszierende Rissprüfmittel und für Rissprüfmittel zur Rot-Weiß-Prüfung keinen Gehalt an einem Öl auf.

Beispiele für solche Kohlenwasserstoffe C1) sind hierbei i) aliphatische (=acyclische) Kohlenwasserstoffe, ii) aromatische Kohlenwasserstoffe iii) cycloaliphatische (=alicyclische) Kohlenwasserstoffe und iv) "Erdölprodukte", die als Mineralöle Gemische aus i, ii oder/und iii aus Erdöl oder/und deren Destillaten enthalten, deren Destillate oder/und deren einzelne Bestandteile.

Beispiele für aliphatische Kohlenwasserstoffe i) sind lineare oder verzweigte, gesättigte oder ungesättigte Aliphaten und besonders bevorzugt Aliphaten mit 5 bis 16 C-Atomen wie insbesondere Pentan, Hexan, Octan, 2-Ethylhexan oder/und 3,5,5-Trimethylhexan.

Beispiele für aromatische Kohlenwasserstoffe ii) sind einfach oder mehrfach alkyl-substituierte Aromaten wie z.B. solche mit einer, zwei oder drei substituierenden Alkyl-Gruppen von unabhängig voneinander jeweils ein bis zehn C-Atomen wie z.B. Benzole wie Toluol, Xylol, Mesitylen, Cumol, Ethylbenzol oder/und Kohlenwasserstoffe mit kondensierten aromatischen Ringsystemen wie z.B. Naphthaline wie insbesondere 1-Methylnaphthalin, 2-Methylnaphthalin und Dimethylnaphthalin oder/und asymmetrisch oder heterogen kondensierte aromatische Kohlenwasserstoffe wie z.B. Indan oder/und Tetralin.

Beispiele für cycloaliphatische Kohlenwasserstoffe iii) sind gesättigte oder/und ungesättigte, gegebenenfalls ein- oder mehrfach alkyl-substituierte Cycloaliphaten wie z.B. solche mit ein, zwei oder drei substituierten Alkyl-gruppen mit unabhängig voneinander jeweils ein bis zehn C-Atomen je Alkylgruppe wie z.B. Cyclohexan oder Methylcyclopentan. Hierbei sind auch Gemische eines oder mehrerer aliphatischer Kohlenwasserstoffe oder/und eines oder mehrerer aromatischer Kohlenwasserstoffe oder/und eines oder mehrerer alicyclischer Kohlenwasserstoffe von Vorteil, z.B. kommerziell erhältliche Lösemittel der EXXSOL® D-Reihe, der SOLVESSO®-Reihe oder der ISOPAR®-Reihe von Exxon Mobil Chemicals.

Beispiele für iv) "Erdölprodukte", die als Mineralöle Gemische aus i, ii oder/und iii aus Erdöl oder/und deren Destillaten enthalten, deren Destillate oder/und deren einzelne Bestandteile sind z.B. Gemische aus destillierten Rohölfraktionen des Erdöls, White Spirit D100 oder/und Isooctan.

Beispiele für Alkohole C2) sind gesättigte oder ungesättigte, lineare oder verzweigte, primäre, sekundäre oder tertiäre, aliphatische, alicyclische oder aromatische Alkohole; sie weisen vorzugsweise 4 bis 22 C-Atome auf wie insbesondere tert.-Butanol, 2-Ethylhexanol, Octanol, Dodecanol oder Benzylalkohol.

Als Beispiele für Carbonsäurederivate C3) kommen die Ester oder/und Amide von Mono-, Di- und Polycarbonsäuren wie z.B. Tri- und Tetracarbonsäuren, aber auch höherfunktionelle Carbonsäuren, vorzugsweise Carbonsäuren mit jeweils 2 bis 24 C-Atomen je Alkylkette in Frage.

Bevorzugte Ester C3) sind die Ester von Alkoholen i) mit 1 bis 20 C-Atomen wie z.B. Methanol, Ethanol, Isopropanol, Isobutanol oder/und 2-Ethylhexanol, wobei bei den Fettalkoholen insbesondere auch Glycerin- und Glykolester bevorzugt sind.

Beispiele für Monocarbonsäureester ii) der Ester C3) sind a) die Ester aliphatischer oder/und aromatischer Monocarbonsäuren wie z.B. aliphatische Monocarbonsäureester mit Alkylketten von 1 bis 9 C-Atomen wie z.B. Ameisensäureester, Essigsäureester und Propionsäureester, b) die aliphatischen Fettsäureester wie z.B. Monocarbonsäureester mit Alkylketten von 10 bis 24 C-Atomen, die in natürlichen Ölen oder Pflanzenölen enthalten sein können oder die synthetischen Ursprungs sind oder/und c) aromatische Monocarbonsäureester mit Alkylketten von 7 bis 24 C-Atomen wie z.B. Benzoesäureester und Phenylessigsäureester.

Beispiele für Fettsäureester iii) der Ester C3) sind solche natürlichen Ursprung wie z.B. tierische Öle und Pflanzenöle sowie auch solche synthetischen Ursprungs; als Fettsäureester sind Ester von oder Fettsäuren mit Alkylketten von 10 bis 24 C-Atomen oder von 12 bis 24 C-Atomen besonders bevorzugt. Die Fettsäureester mit Alkylketten von 10 bis 24 C-Atomen sind beispielsweise Ester ungesättigter oder gesättigter Fettsäuren mit Alkylketten von 10 bis 24 C-Atomen und sind insbesondere solche mit gerader Kohlenstoffatomzahl wie z.B. von Laurinsäure, Palmitinsäure und insbesondere C₁₈-Fettsäuren wie Stearinsäure, Ölsäure, Linolsäure und Linolensäure. Weitere Beispiele für Fettsäureester mit Alkylketten von 10 bis 24 C-Atomen sind Glycerin- und Glykolester von Fettsäuren wie Fettsäuren mit Alkylketten von 10 bis 24 C-Atomen oder deren Umesterungsprodukte wie z.B. Alkyl-Fettsäureester wie insbesondere C₁-C₂₀-Alkyl-C₁₀-C₂₄-Fettsäure-Ester wie sie z.B. durch Umesterung der vorgenannten Glycerin- und Glykol-Fettsäureeester wie Fettsäure-Ester mit Alkylketten von 10 bis 24 C-Atomen mit Alkoholen von 1 bis 20 C-Atomen wie z.B. Methanol, Ethanol, Propanol oder/und Butanol erhalten werden können. Die Umesterung kann nach bekannten Methoden erfolgen, wie sie z.B. im Römpp Chemie Lexikon, 9. Auflage, Band 2, Seite 1343, Thieme Verlag Stuttgart, beschrieben sind. Bevorzugte Fettsäureester sind z.B. Öle aus ölliefernden Pflanzenarten wie z.B. Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder/und Rhizinusöl, insbesondere Rapsöl, wobei unter den Pflanzenölen auch deren Umesterungsprodukte verstanden werden wie z.B. Alkylester wie Rapsölmethylester oder Rapsölethylester. Beispiele für Dicarbonsäureester und Polycarbonsäureester sind die Vollester von Oxal-, Malon-, Bernstein-, Glutar-, 2-Methylglutar-, Adipin-, Pimelin-, Sebacin-, Azelain-, Suberin-, Malein-, Phthal-, Terephthal-, Mellit-, Trimellit- und Polymaleinsäure. Besonders bevorzugt sind Alkylester mit Alkylketten von 1 bis 10 C-Atomen wie Methylester, Ethylester, n-Propylester, iso-Propylester, n-Butylester, iso-Butylester, sec.-Butylester oder tert.-Butylester. Bevorzugte Dicarbonsäureester sind die Vollester von Bernstein-, Glutar-, 2-Methylglutar- und Adipinsäure. Bevorzugt weisen die Alkylester Alkylketten von 1 bis 10 C-Atomen auf wie Methyl-, Ethyl- oder iso-Butylester.

Bevorzugte Amide C3) sind die N,N-Dialkylamide von Carbonsäuren mit 6 bis 20 C-Atomen wie z.B. Hexansäure, Decansäure und Stearinsäure und deren Derivate, die nicht eine hohe Wasserlöslichkeit aufweisen. Beispiele für Carbonsäureamide sind aliphatische N,N-Dialkylacylamide mit einer Kohlenstoffkettenlänge des Acylrestes von 6 bis 20 C-Atomen, wie z.B. Octansäuredimethylamid und Decansäuredimethylamid.

Als Phosphorsäureester C4) kommen beispielsweise Triester der Phosphorsäure mit Alkoholen in Frage, wobei die Alkohole bevorzugt ausgewählt sind aus der Gruppe bestehend aus 1) einwertigen Alkoholen mit 1 bis 22 C-Atomen wie z.B. Ethanol, i-Propanol und 2-Ethylhexanol, aus 2) Diolen oder/und Polyolen wie z.B. Ethylenglykol, Propylenglykol und Glycerin, aus 3) Aryl-, Alkylaryl-, Poly(alkyl)aryl- und Poly(arylalkyl)arylalkoholen wie beispielsweise Phenol oder/und Kresol, Octylphenol, Nonylphenol, Triisobutylphenol und Tristyrylphenol sowie aus 4) alkoxylierten Alkoholen, die durch Umsetzung der vorstehenden unter 1), 2) oder 3) genannten Alkoholen mit Alkylenoxiden und vorzugsweise mit Alkylenoxiden mit Alkylketten von 1 bis 4 C-Atomen erhalten werden. Besonders bevorzugte Phosphorsäureester sind Triester der ortho-Phosphorsäure wie z.B. Triethylphosphat, Tributylphosphat und Tri(butoxyethyl)phosphat.

Als Ether C5) kommen beispielsweise aromatische, cycloaliphatische oder/ und aliphatische Ether in Frage. Besonders bevorzugte Ether sind Dialkylether mit Alkylketten unabhängig voneinander von jeweils 3 bis 12 C-Atomen wie z.B. Dihexylether und Dioctylether oder Mono- und Diether von Diolen und einfach oder mehrfach alkoxylierte Diole wie z.B. Ethylenglykol, Diethylenglykol, Propylenglykol, Dipropylenglykol und Tripropylenglykol, insbesondere die Mono- und Dialkylether jeweils mit mindestens einer Alkylkette von 1 bis 8 C-Atomen oder/und mit mindestens einer aromatischen Gruppe wie z.B. Propylenglykolmonopropylether, Dipropylenglykolmonobutylether, Tripropylenglykolmonobutylether, Propylenglykoldibutylether, Ethylenglykolhexylether, Diethylenglykoldibutylether, Diethylenglykolphenylether, Ethylenglykolphenylether, Propylenglykolphenylether und Dipropylenglykolphenylether.

Als Ketone C6) kommen beispielsweise aromatische, cycloaliphatische oder/und aliphatische Ketone mit Alkyl- oder/und Arylgruppen von jeweils 4 bis 24 C-Atomen in Frage wie z.B. Acetophenon, Benzophenon, Dibutylketon, Diisobutylketon und Isobutyl-heptyl-keton.

Beispiele für Öle und deren Derivate C7), die keine "Erdölprodukte" sind, können sein: a) natürliche Öle wie z.B. Öle oder/und Ölalkylester aus ölliefernden Pflanzen wie Sojaöl, Rapsöl, Rapsölalkylester, Maiskeimöl, Sonnenblumenöl, Baumwollsaatöl, Leinöl, Kokosöl, Kokosölalkylester, Palmöl, Palmölalkylester, Distelöl, Walnussöl, Erdnussöl, Olivenöl, Olivenölalkylester, Rhizinusöl oder/und Rhizinusölalkylester, deren Destillate oder/und deren einzelne Substanzen, b) ätherische Öle oder/und einzelne Bestandteile derselben wie Terpene oder/und Terpenoide wie z.B. d-Limonen oder/und c) synthetische Öle, die nach bekannten Verfahren durch Polymerisation oder Polykondensation aus geeigneten Verbindungen hergestellt werden können, deren. Derivate oder/und deren einzelne Bestandteile, wobei auch die korrespondierenden makromolekularen Verbindungen erhalten werden können wie z.B. Polyalphaolefine, Polyalkylenglykole oder/und Polyester. Als Derivate kommen insbesondere Ester in Frage.

Außerdem kommen molekulare Kombinationen der zuvor genannten Stoffklassen in Frage wie z.B. intramolekular kombinierte Ether-Ester-Derivate von Diolen und Polyolen C8), insbesondere Mono-(C₁-C₄)alkylether-monocarbonsäureester von Diolen oder/und ein- oder mehrfach alkoxylierte Diole, insbesondere Essigsäureester der Mono-(C₁-C₄)alkyletheralkanole wie z.B. Ethylenglykolmonomethyletheracetat, Propylenglykolmonobutyletheracetat und Diethylenglykolmonomethyletheracetat.

Wenn das erfindungsgemäße Rissprüfmittel weniger als 5 Gew.-% an im Wesentlichen wasserunlöslicher Phase C) enthält, ist das Rissprüfmittel zu unempfindlich und die Fehlerdetektion schlechter. Wenn das erfindungsgemäße Rissprüfmittel als O/W-Mikroemulsion mehr als 50 Gew.-% oder als W/O-Mikroemulsion mehr als 40 Gew.-% an im Wesentlichen wasserunlöslicher Phase C) enthält, kann es zu einer unerwünschten Aufspaltung der Mikroemulsion kommen, liegt eine Mikroemulsion mit Exzessphasen vor oder ergibt sich eine instabile Emulsion; außerdem ist es dann schon eher umweltunfreundlich.

Besonders bevorzugt enthält das erfindungsgemäße Rissprüfmittel jeweils mindestens eine Verbindung ausgewählt aus der Gruppe von Verbindungen bestehend aus Alkoholen C2), Estern oder/und Amiden von Mono-, Di- oder/und Polycarbonsäuren C3), Ethern C5) und Ketonen C6) oder ausgewählt aus der Gruppe von Verbindungen bestehend aus Alkoholen C2), Estern oder/und Amiden von Mono-, Di- oder/und Polycarbonsäuren C3) und Ethern C5) oder ausgewählt aus der Gruppe von Verbindungen bestehend aus Estern oder/und Amiden von Mono-, Di- oder/und Polycarbonsäuren C3) und Ethern C5). Vorzugsweise sind im erfindungsgemäßen Rissprüfmittel keine weiteren Verbindungen der im Wesentlichen wasserunlöslichen Phase C) als die zu einer dieser Gruppen gehörenden Verbindungen enthalten.

Bei den erfindungsgemäßen Mikroemulsionen ist mindestens ein **Tensid D)** ausgewählt aus nichtionischen, anionischen oder/und amphoteren Tensiden erforderlich. Manchmal ist auch mindestens ein als Emulgator wirkendes Tensid enthalten. Der Begriff "Tensid D)" bedeutet im Sinne dieser Erfindung, dass als Tensid D) mindestens ein Tensid, mindestens ein Co-Tensid oder/und mindestens ein Emulgator umfasst sind und dass das mindestens eine Tensid D) ausgewählt ist aus nichtionischen, anionischen oder/und amphoteren Tensiden. Besonders bevorzugt enthalten sie mindestens ein nicht-ionisches und mindestens ein anionisches Tensid, wobei mindestens ein Tensid auch als Emulgator wirkt.

Das mindestens eine Tensid D) der erfindungsgemäßen Zusammensetzungen kann als "gewöhnliches" Tensid, als Emulgator, als Reiniger oder/und als Lösemittel wirken. Emulgatoren sind ebenfalls Tenside und werden im Sinne dieser Anmeldung ebenfalls als Tenside bezeichnet. Insbesondere nichtionische Tenside können insbesondere bei einem HLB-Wert etwa im Bereich von 8 bis 20 oder von 9 bis 18 insbesondere bei Öl-Wasser-Mikroemulsionen (O/W) oder bei einem HLB-Wert etwa im Bereich von 0 bis 10 oder von 3 bis 8 insbesondere bei Wasser-Öl-Mikroemulsionen (W/O) als Emulgatoren wirken. Mikroemulsionen mit Tensiden mit HLB-Werten zwischen 5 und 15 können ebenfalls eingesetzt oder ergänzend zugesetzt werden, können aber nicht immer so spezifisch diesen unterschiedlichen Mikroemulsionen zugeordnet werden.

Die Tenside D) oder/und einzelne der enthaltenen Tenside D) können beispielsweise als Emulgator, als Konservierungsmittel, als Lösemittel z.B. für mindestens einen Farbstoff B), als Reiniger, als Stabilisator z.B. für mindestens einen Farbstoff B) oder/und für die Mikroemulsion, als Korrosionsinhibitor, zur Beeinflussung der Viskosität des Rissprüfmittels oder/und als Benetzungsmittel zur Absenkung der Oberflächenspannung zwecks besserer Benetzung der zu prüfenden Oberfläche durch das Rissprüfmittel dienen. In einem Rissprüfmittel mit mehreren Tensiden D) kann gegebenenfalls jedes der zugesetzten Tenside D) andere Aufgabenschwerpunkte aufweisen.

Das erfindungsgemäße Rissprüfmittel enthält mindestens 2 Gew.-% an mindestens einem Tensid D), vorzugsweise mindestens 4 Gew.-% oder 2 bis 60 Gew.-%, 4 bis 70 Gew.-%, 6 bis 60 Gew.-%, 8 bis 50 Gew.-%, 10 bis 40 Gew.-%, 12 bis 30 Gew.-% oder 14 bis 25 Gew.-%, wobei die Gehaltsbereiche je nach dem Mikroemulsionstyp und dem Rissprüfmitteltyp deutlich schwanken können.

Bei Rissprüfmitteln auf Basis von gelb oder rot fluoreszierenden O/W-Mikroemulsionen liegt der Gehalt an mindestens einem Tensid D) vorzugsweise im Bereich von 2 bis 60 Gew.-%, im Bereich von 6 bis 50 Gew.-%, im Bereich von 8 bis 40 Gew.-% oder im Bereich von 10 bis 30 Gew.-%.

Bei Rissprüfmitteln zur Rot-Weiß-Prüfung auf Basis von O/W-Mikroemulsionen liegt der Gehalt an mindestens einem Tensid D) vorzugsweise im Bereich von 2 bis 55 Gew.-%, im Bereich von 8 bis 45 Gew.-%, im Bereich von 10 bis 40 Gew.-% oder im Bereich von 15 bis 30 Gew.-%.

Bei Rissprüfmitteln auf Basis von gelb oder rot fluoreszierenden W/O-Mikroemulsionen liegt der Gehalt an mindestens einem Tensid D) vorzugsweise im Bereich von 2 bis 50 Gew.-%, im Bereich von 10 bis 40 Gew.-%, im Bereich von 15 bis 35 Gew.-% oder im Bereich von 20 bis 30 Gew.-%.

Bei Rissprüfmitteln zur Rot-Weiß-Prüfung auf Basis von W/O-Mikroemulsionen liegt der Gehalt an mindestens einem Tensid D) vorzugsweise im Bereich von 2 bis 40 Gew.-%, im Bereich von 10 bis 40 Gew.-%, im Bereich von 15 bis 35 Gew.-% oder im Bereich von 20 bis 30 Gew.-%.

Grundsätzlich ist es wichtig, dass das erfindungsgemäße Rissprüfmittel ein Tensid D) enthält, wobei die Tensidklasse und gegebenenfalls auch die spezifische Tensidverbindung üblicherweise mindestens einen gewissen Einfluss insbesondere auf die Viskosität und Oberflächenspannung und somit auf die Qualität des Rissprüfmittels ausüben. Die Auswahl von Tensid(en) D) und Lösemittel(n) C) beeinflussen üblicherweise den Arbeitsbereich für die Einstellung und Stabilität einer Mikroemulsion.

In etlichen Ausführungsformen wird dem erfindungsgemäßen Rissprüfmittel aus den Tensiden D) mindestens ein vor allem reinigendes Tensid und mindestens ein vor allem als Emulgator wirkendes Tensid oder mindestens ein vor allem reinigendes Tensid, mindestens ein vor allem die Mikroemulsion stabilisierendes Tensid als sogenanntes Co-Tensid und mindestens ein vor allem als Emulgator wirkendes Tensid zugesetzt. Hierbei zeigen die vor allem reinigenden Tenside und die Co-Tenside oft mehr oder weniger starke Emulgatorwirkung. Alle Tenside haben eine mehr oder weniger starke reinigende Wirkung. Viele Tenside haben eine mehr oder weniger starke Wirkung bei der Stabilisierung der Mikroemulsion.

Vorzugsweise wird dem erfindungsgemäßen Rissprüfmittel in vielen Ausführungsformen mindestens ein Tensid D) zugesetzt, das vor allem als Emulgator wirkt. Vorzugsweise wird dem erfindungsgemäßen Rissprüfmittel in vielen Ausführungsformen auch mindestens ein vor allem reinigendes Tensid zugesetzt, das vorzugsweise für sekundäre Aufgaben z.B. wie der Abwaschbarkeit von der geprüften Oberfläche oder/und das die Viskositätseinstellung des Rissprüfmittels ermöglicht.

Hierbei wirken die Komponenten D1 bis D7 der Tabelle 1 vorzugsweise als Emulgatoren und die Komponenten D8 bis D14 der Tabelle 1 vorzugsweise als Co-Tenside zur Stabilisierung der Mikroemulsion. Die Komponenten D16 und D17 der Tabelle 1 wirken vorzugsweise als reinigendes Tensid. Diese Zuordnungen hängen aber teilweise auch von den weiteren anwesenden Tensiden und der Grundstruktur der Mikroemulsion ab und können damit wechseln. Üblicherweise benötigen alle Mikroemulsionen mindestens ein Tensid D), das als Emulgator wirkt.

Die Tenside D) des erfindungsgemäßen Rissprüfmittels werden ausgewählt aus anionischen Tensiden a), nichtionischen Tensiden b) oder/und amphoteren Tensiden c). Das erfindungsgemäße Rissprüfmittel enthält als Tensid D) vorzugsweise mindestens ein anionisches Tensid a), mindestens ein nichtionisches Tensid b) oder/und mindestens ein amphoteres Tensid c).

Besonders bevorzugt ist die Verwendung eines anionischen Tensids mit einer Mindestlänge der Alkylkette von 6 C-Atomen. Besonders bevorzugt ist auch die Verwendung eines nichtionischen Tensids mit einer Mindestlänge der Alkylkette von 8 C-Atomen. Für gelb und rot fluoreszierende Rissprüfmittel und bei Rissprüfmitteln für die Rot-Weiss-Prüfung ist bei O/W-Mikroemulsionen ein Gehalt an mindestens einem Tensid D) bevorzugt, das als nichtionisches Alkoholethoxylat eine Alkylkette mit 9 bis 11 C-Atomen des Fettalkohols und das 5 bis 10 EO-Gruppen aufweist. Bei Rissprüfmitteln als W/O-Mikroemulsionen für die Rot-Weiss-Prüfung ist ein Gehalt an mindestens einem Tensid D) bevorzugt, das als nichtionisches Alkoholethoxylat eine Alkylkette mit 10 bis 18 C-Atomen des Fettalkohols und das 2 bis 10 EO-Gruppen aufweist.

Insbesondere kann das erfindungsgemäße Rissprüfmittel eine Kombination aus mindestens einem anionischen und mindestens einem nichtionischen Tensid enthalten, insbesondere in einem Gewichtsverhältnis von anionischen zu nichtionischen Tensiden im Bereich von 1 : 0,05 bis 1 : 10. Besonders bevorzugt ist auch die Kombination von mindestens einem gut wasserlöslichen Tensid, das zu mindestens 1 Gew.-% in Wasser bei Raumtemperatur löslich ist, mit einem öllöslichen Tensid.

Die Micellbildung von mindestens einem Tensid D) kann hierbei helfen, die Stabilität einer Emulsion oder Mikroemulsion zu erhöhen, das Einphasengemisch in einem erweiterten Temperaturbereich zu stabilisieren oder/und unempfindlicher gegen gleichgewichtstörende Einflüsse wie z.B. Verdünnung zu stabilisieren.

Beispiele für anionische Tenside a) sind Sulfate, Sulfonate, Phosphate und Phosphonate von Kohlenwasserstoffen, Carbonsäuren oder/und Carbonsäurederivaten, die optional Alkylenoxideinheiten enthalten können. Die Sulfate, Sulfonate, Phosphate, Phosphonate und Carbonsäuren können in Form der Säuren oder als Salze vorliegen. Bevorzugt sind anionische Tenside der Allgemeinen Formel (I):

R-Q (I)

worin Q = -O-SO₃M, -SO₃M, -O-PO₃HM, -PO₃HM oder -COOM ist, worin M gleich H oder ein Kation ist, insbesondere ein Metallkation wie ein Alkalimetallion, Erdalkalimetallion oder ein Ammoniumion R¹R²R³HN⁺, worin R¹, R² und R³ unabhängig voneinander Wasserstoff oder/und gegebenenfalls substituierende Alkyl-, Cycloalkyl- oder/und Arylreste sind, die unabhängig voneinander identisch oder verschieden sein können. Bevorzugte Reste sind beispielsweise Wasserstoff und 2-Hydroxyethyl oder 2-Hydroxypropyl. R ist vorzugsweise ein unsubstituierter oder substituierter Kohlenwasserstoffrest mit einer oder mehreren Alkylketten von jeweils 1 bis 30 C-Atomen, der optional über Alkylenoxideinheiten gebunden sein kann, oder R ist vorzugsweise eine Alkylenoxideinheit. Unter dem Begriff Alkylenoxideinheiten werden insbesondere Einheiten von Alkylenoxiden mit 2 bis 10 C-Atomen wie z.B. Ethylenoxid, Propylenoxid oder/und Butylenoxid verstanden, wobei die Einheiten innerhalb des Tensids unabhängig voneinander gleich oder verschieden und dabei statistisch gemischt oder blockweise angeordnet sein können. Bevorzugt ist R a) ein Alkylrest mit 1 bis 20 C-Atomen wie z.B. Methyl, Ethyl, Propyl oder/und Butyl, b) ein Arylrest mit 6 bis 24 C-Atomen wie z.B. Phenyl, Biphenyl oder/und Naphthyl, der optional einen oder mehrere Reste tragen kann unabhängig voneinander wie z.B. Alkyl-Gruppen mit jeweils 1 bis 20 C-Atomen wie z.B. lineares oder verzweigtes Alkyl wie sec. Butyl, Dodecyl oder einen Rest einer Mono-, Di- oder Polycarbonsäure oder/und entsprechender Derivate von a) oder b) wie z.B. Ester oder Amide. Hierbei sind Dicarbonsäure-Ester besonders bevorzugt wie z.B. Bernsteinsäuredihexylester oder/und Bernsteinsäuredi-(2-ethylhexyl)ester.

Besonders bevorzugte anionische Tenside sind Alkylarylsulfonate wie z.B. Dodecylbenzolsulfonate wie z.B. der Lutensit®-A Reihe von BASF, Alkylsulfonate wie z.B. Dodecylsulfonate wie z.B. der Hostapur®-Reihe von Clariant, Dialkylsulfosuccinate wie z.B. Di-(2-Ethylhexyl)sulfosuccinate wie z.B. der AEROSOL®-Reihe von Cytec oder/und Carboxylate von Carbonsäuren mit 2 bis 24 C-Atomen wie z.B. Natriumcaprylat, Kaliumcaprylat, Natriumsebacat, Kaliumsebacat und Ammoniumisononanoat. Weiterhin besonders bevorzugte anionische Tenside sind Alkyl(polyoxyethyl)phosphate wie z.B n-Alkyl(polyoxyethyl)phosphate wie z.B. der Phosfetal Reihe von Zschimmer & Schwarz oder/und der Rhodafac®-Reihe von Solvay (vormals Rhodia)

Als nichtionische Tenside b) eignen sich insbesondere Alkoxylate wie z.B. Ethoxylate, Propoxylate, Butoxylate und deren Mischungen. Unter dem Begriff Alkoxylate werden Verbindungen verstanden, die Alkylenoxideinheiten enthalten, insbesondere Alkylenoxid-Einheiten mit 2 bis 10 Kohlenstoffatomen wie z.B. Ethylenoxid, Propylenoxid oder/und Butylenoxid, wobei die Einheiten innerhalb des Tensids unabhängig voneinander gleich oder verschieden und hierbei statistisch gemischt oder blockweise angeordnet sein können. Beispiele für Alkoxylate sind Verbindungen der Allgemeinen Formel (II)

R⁴-(AO)_{W}-R⁵ (II)

worin R⁴ vorzugsweise ausgewählt ist aus H, OH und Alkylgruppen mit 1 bis 30 C-Atomen, wobei R⁴ linear, verzweigt oder cyclisch und gesättigt oder ungesättigt sein kann. Hierbei ist Alkyl besonders bevorzugt ausgewählt aus Methyl, Ethyl, Propyl, Butyl, 2-Ethylhexyl, Dodecyl, Octadecyl, Octadecenyl oder aus Aryl mit 6 bis 24 C-Atomen wie insbesondere Phenyl oder Naphthyl, wobei Aryl optional einen oder mehrere Reste tragen kann wie z.B. Arylalkyl mit 1 bis 30 C-Atomen wie insbesondere Ethylphenyl oder Alkyl mit 1 bis 30 C-Atomen, wobei die Alkylgruppen unabhängig voneinander linear oder verzweigt sein können und vorzugsweise 2-Ethylhexyl oder Dodecyl sind. R⁴ kann Aryloxy mit 6 bis 24 C-Atomen wie insbesondere Phenoxy sein, wobei der aromatische Ring optional einen oder mehrere Reste tragen kann wie Arylalkyl mit 1 bis 30 C-Atomen, wie insbesondere Ethylphenyl oder Alkyl mit 1 bis 30 C-Atomen, wobei die Alkylgruppen unabhängig voneinander linear oder verzweigt sein können wie insbesondere 2-Ethylhexyl oder Dodecyl. Weiterhin kann R⁴ ein Sorbitanesterrest, ein Glycerinesterrest, oder Alkyl-NR⁶ mit einer Alkylgruppe mit 1 bis 30 C-Atomen und vorzugsweise Alkyl-NR⁶ mit einer Alkylgruppe mit 10 bis 20 C-Atomen sein, wobei die Alkylgruppe linear oder verzweigt und gesättigt oder ungesättigt sein kann und insbesondere Dodecyl, Hexadecyl, Octadecyl oder Octadecenyl sein kann, und wobei R⁶ H oder eine Alkylgruppe mit 1 bis 20 C-Atomen ist, das linear oder verzweigt und gesättigt oder ungesättigt sein kann und vorzugsweise Methyl, Ethyl, Butyl, Dodecyl oder/und Octadecenyl ist. Hierbei ist R⁵ vorzugsweise H oder eine Alkylgruppe mit 1 bis 6 C-Atomen, die linear oder verzweigt sein kann und die insbesondere Methyl, Ethyl, Propyl, Butyl, Pentyl oder Hexyl ist.

In der Allgemeinen Formel (II) ist W eine ganze Zahl aus dem Bereich von 1 bis 200 und ist AO eine Alkylenoxideinheit wie insbesondere (EO)ₓ(PO)_{y}(BO)_{z}. Hierin sind EO eine Ethylenoxideinheit, PO eine Propylenoxideinheit, BO eine Butylenoxideinheit, x eine ganze Zahl aus dem Bereich von 0 bis 200, y eine ganze Zahl aus dem Bereich von 0 bis 200 und z eine ganze Zahl aus dem Bereich von 0 bis 200, wobei die Summe x + y+ z mindestens 1 ist. Die Alkylenoxideinheit wie insbesondere (EO)ₓ(PO)_{y}(BO)_{z} kann statistisch gemischt oder blockweise aufgebaut sein.

Besonders bevorzugte nichtionische Tenside b) sind Alkoholalkoxylate b1). Sie sind insbesondere Ethoxylate, Propoxylate oder/und Butoxylate von linearen oder verzweigten Alkoholen b1) mit 1 bis 30 C-Atomen wie z.B. solche der Neodol®-Reihe von Shell. Alternativ oder zusätzlich können als bevorzugte nichtionische Tenside b) solche aus mindestens einer der nachfolgend genannten Gruppen b2) bis b8) gewählt werden. Besonders bevorzugt sind auch Alkylenoxid-Blockcopolymere b2) wie z.B. Ethylenoxid(EO)-Propylenoxid(PO)-Ethylenoxid(EO)-Blockcopolymere oder/und Butylenoxid(BO)-Ethylenoxid(EO)-Blockcopolymere b3) wie z.B. der Pluronic®-Reihe von BASF. Besonders bevorzugt sind auch Polyalkylenoxide b4) wie insbesondere Polyethylenoxide, Polypropylenoxide oder/und Polybutylenoxide, die an einem der beiden endständigen Sauerstoffatome mit Kohlenwasserstoffresten von 1 bis 24 C-Atomen und vorzugsweise Alkylresten von 10 bis 22 C-Atomen mit geradkettigen oder verzweigten Alkylresten von 10 bis 22 C-Atomen wie insbesondere Decyl, Dodecyl, Tetradecyl oder Hexadecyl substituiert sein können. Besonders bevorzugt sind auch Polyglykolether b5), die besonders bevorzugt isotridecylsubstituiert sind wie z.B. bei der Genapol®-Reihe von Clariant. Besonders bevorzugt sind auch alkoxylierte Öle b6) wie vorzugsweise ethoxylierte Öle wie bei vielen Pflanzenölen wie z.B. alkoxyliertes und insbesondere ethoxyliertes Rhizinusöl wie die der Emulsogen®-Reihe von Clariant. Besonders bevorzugt sind auch alkoxylierte wie insbesondere ethoxylierte Fettamine b7) mit Alkylgruppe von insbesondere 10 bis 22 C-Atomen wie die der Ethomeen®-Reihe von Akzo Nobel oder/und alkoxylierte wie insbesondere ethoxylierte Sorbitan-alkyl-ester b8) mit Alkylgruppe von insbesondere 6 bis 22 C-Atomen wie die der AG®-Reihe von Akzo Nobel.

Beispiele für amphotere Tenside c) sind Alkyliminodipropionate wie z.B. Lauryliminodipropionat, 2-Ethylhexyliminodipropionat und Kokosalkyliminodipropionat oder Betaine wie z.B. Cocamidopropylbetain oder Sultaine wie Cocamidopropylhydroxysultain.

Unter den Tensiden D) sind vor allem anionische Tenside a) oder/und nichtionische Tenside b) besonders bevorzugt. Ganz besonders bevorzugt sind Gehalte an Phosphorsäuremono- oder/und Phosphorsäurediestern von aliphatischen, cycloaliphatischen oder/und aromatischen Alkoholalkoxylaten wie z.B. Tridecanol-hexaethoxy-monophosphat, Phenyl-tetraethoxy-monophosphat, Di-(Phenyl-tetraethoxy-)monophosphat, Dodecanol-pentaethoxymonophosphat oder/und Di-(Dodecanol-pentaethoxy-)monophosphat oder/und Gehalte an linearen oder verzweigten Alkoholalkoxylaten b1), insbesondere mit Alkoholkettenlängen im Bereich von 9 bis 11 C-Atomen oder/und mit Alkoxylatkettenlängen im Bereich von 5 bis 9 Alkoxylateinheiten wie z.B. EO, oder/und an Alkylenoxid-Blockcopolymeren b2) wie z.B. Ethylenoxid(EO)-Propylenoxid(PO)-Ethylenoxid(EO)-Blockcopolymere oder/und an Butylenoxid(BO)-Ethylenoxid(EO)-Blockcopolymeren b3).

Wenn das erfindungsgemäße Rissprüfmittel weniger als 2 Gew.-% an mindestens einem Tensid enthält, liegt oft keine Mikroemulsion vor oder ergibt sich oft eine instabile Emulsion. Wenn das erfindungsgemäße Rissprüfmittel mehr als 30 Gew.-% an mindestens einem Tensid enthält, ist sie üblicherweise umweltunfreundlicher zusammengesetzt.

Besonders bevorzugt enthält das erfindungsgemäße Rissprüfmittel jeweils mindestens eine Verbindung ausgewählt aus der Gruppe von Verbindungen bestehend aus anionischen Tensiden a) oder/und nichtionischen Tensiden b). Vorzugsweise sind im erfindungsgemäßen Rissprüfmittel keine weiteren Verbindungen der Tenside D) als die hierzu gehörenden Verbindungen enthalten.

Bei Bedarf kann das erfindungsgemäße Rissprüfmittel auch mindestens ein **Additiv E)** enthalten; insbesondere Konservierungsmittel, Korrosionsinhibitoren, Neutralisationsmittel, Rheologieadditive, Hydrotrope = Lösevermittler oder/und kationische Tenside. Es kann insbesondere als Biozid, Korrosionsinhibitor, Lösevermittler, Rheologieadditiv oder/und Neutralisationsmittel dienen. Das Additiv E) kann insbesondere aus der Gruppe bestehend aus Konservierungsmitteln wie z.B. Dantoguard® Plus Liquid von Lonza, Parmetol® MBX von Schülke, aus Korrosionsinhibitoren wie z.B. Octylphosphonsäure, N-Oleoylsarkosin oder/und Ciba® Amine O, aus kationischen Tensiden wie z.B. der allgemeinen Formel R⁶R⁷R⁸R⁹N⁺X⁻ oder/und aus Rheologieadditiven wie z.B. Verdickern wie z.B. Rheovis® AT 120 von BASF, bestehen. Das Additiv E) kann gegebenenfalls aus mehreren Substanzen bestehen, die gegebenenfalls in Form einer Lösung, Dispersion oder Paste zugesetzt werden. Als Trägerflüssigkeit dient üblicherweise Wasser, mindestens ein Alkohol, mindestens ein Glykol oder/und mindestens ein Mineralöl. Der Gehalt an mindestens einem Additiv E) liegt vorzugsweise in einem Bereich von 0,01 bis 8 Gew.-%, von 0,1 bis 7 Gew.-%, von 1 bis 6 Gew.-%, von 2 bis 5 Gew.-% oder von 3 bis 4 Gew.-% oder von 0 Gew.-%, wobei besonders bevorzugt 0,01 bis 1 Gew.-% an Konservierungsmittel oder/und 0,5 bis 4 Gew.-% an Korrosionsinhibitor enthalten sind.

Als kationische Tenside eignen sich beispielsweise quaternäre Ammoniumverbindungen der allgemeinen Formel R⁶R⁷R⁸R⁹N⁺X⁻, wobei die Reste R⁶ bis R⁹ unabhängig voneinander ausgewählt sind aus linearen, verzweigten oder/und cyclischen, gesättigten oder ungesättigten Alkylgruppen mit 1 bis 24 C-Atomen, die gegebenenfalls substituiert sind und bei denen X⁻ ein entsprechendes Anion ist wie beispielsweise ein Halogenid oder Methosulfat. Besonders bevorzugt ist Methosulfat. Da sie häufig einen Halogen- oder/und Schwefelgehalt aufweisen, sind kationische Tenside eher weniger geeignet, können aber beispielsweise als Biozide vorteilhaft eingesetzt werden.

Zusätzlich kann das erfindungsgemäße Rissprüfmittel bei Bedarf auch eine **gut wasserlösliche Phase als Lösevermittler** enthalten, die zu den Additiven E) gehört. Dieser Lösevermittler kann helfen, die Stabilität der Mikroemulsion insbesondere im Falle einer Verdünnung bevorzugt mit Wasser und im Falle einer Temperaturerhöhung oder/und Temperaturschwankung zu erhöhen oder beizubehalten. Die Wasserlöslichkeit der Lösevermittler liegt vorzugsweise bei mehr als 10 g/L bei 20 °C. Hierunter können wasserlösliche Alkohole mit 2 bis 3 C-Atomen oder/und Polyole, die 2 bis 5 OH-Gruppen und die unabhängig voneinander 2 bis 10 C-Atome je Alkylgruppe aufweisen wie z.B. Glycerin, Glykole, Diethylenglykole und Dipropylenglykole eingesetzt werden. Der Gesamtgehalt dieser Lösevermittler liegt vorzugsweise im Bereich von 0,01 bis 10 Gew.-% oder von 0,1 bis 5 Gew.-%.

Vorzugsweise enthält die Dispersion zusätzlich mindestens ein Additiv E), das als Konservierungsmittel, Korrosionsinhibitor, Neutralisationsmittel, Lösevermittler oder/und Rheologieadditiv wirkt. Besonders bevorzugt enthält das erfindungsgemäße Rissprüfmittel als Additive E) nur Additive, die als Konservierungsmittel, Korrosionsinhibitoren, Neutralisationsmittel, Lösevermittler oder/und Rheologieadditive wirken. Wie etliche der erfindungsgemäßen Beispiele zeigen ist der Zusatz von mindestens einem Lösevermittler oder/und von einem andersartig wirkenden Additiv E) möglich, aber oft nicht notwendig.

Die erfindungsgemäßen Rissprüfmittel sind vorzugsweise frei von Halogenhaltigen oder/und frei von Schwefel-haltigen Verbindungen oder weisen einen Gehalt an Halogenen kleiner 200 ppm auf. Wenn das erfindungsgemäße Rissprüfmittel Schwefel-haltige Verbindungen enthält, ist es bevorzugt, dass der Gehalt an Schwefel im Rissprüfmittel bei kleiner 200 ppm liegt.

Besonders bevorzugt ist ein Rissprüfmittel zur Fehlererkennung nach dem Eindringverfahren, das enthält:
A) als O/W-Mikroemulsion mindestens 30 Gew.-% oder 30 bis 85 Gew.-% oder als W/O-Mikroemulsion mindestens 10 Gew.-% oder 10 bis 60 Gew.-% an Wasser A),
B) mindestens 0,1 Gew.-% an mindestens einem Farbstoff B), der eine Löslichkeit in Wasser von weniger als 0,1 g/L bei 20 °C unter Normaldruck aufweist und der gegebenenfalls in einem Farbstoffsystem vorliegt und der in einer im Wesentlichen wasserunlöslichen flüssigen Phase C) mit einer Löslichkeit von mindestens 10 g/L bei 20 °C unter Normaldruck löslich ist,
C) mindestens 5 Gew.-% oder 5 bis 50 Gew.-% oder 5 bis 40 Gew.-% an mindestens einer im Wesentlichen wasserunlöslichen flüssigen Phase C) ausgewählt aus der Gruppe von wasserunlöslichen und im Wesentlichen wasserunlöslichen und bei 20 °C unter Normaldruck flüssigen organischen Substanzen bestehend aus Kohlenwasserstoffen einschließlich "Erdölprodukten" C1), Alkoholen C2), Estern von Mono-, Di- oder/und Polycarbonsäuren C3), Phosphorsäureestern C4), Ethern C5), Ketonen C6), Ölen ohne "Erdölprodukte" C7) und kombinierten Ether-Ester-Derivaten C8),
D) mindestens 2 Gew.-% oder 2 bis 60 Gew.-% oder 2 bis 50 Gew.-% an mindestens einem Tensid D) ausgewählt aus anionischen Tensiden a), nichtionischen Tensiden b) oder/und amphoteren Tensiden c) und
   gegebenenfalls E) mindestens einem Additiv E),
   wobei die Summe aller Bestandteile 100 Gew.-% ergibt,
wobei das Mischungsverhältnis von Wasser A) zu Tensiden D) einschließlich gegebenenfalls vorhandener Co-Tenside oder/und Emulgatoren und zu der im Wesentlichen wasserunlöslichen Phase C) vorzugsweise in dem durch die Eckpunkte gekennzeichneten Bereich von 0,5 : 1 : 10, 20 : 1 : 10, 0,5 : 1 : 2 und 20 : 1 : 2 bezogen auf das Gewichtsverhältnis liegt und wobei das Rissprüfmittel bei einer Temperatur von 20 °C unter Normaldruck eine Transparenz von mindestens 70 % gemessen bei 600 nm in einer Quarzglasküvette mit einer Dicke der durchstrahlten Flüssigkeit von 10 mm in einem Photometer CADA 100-V der Hach Lange GmbH an einer gleichartigen, jedoch keinen Farbstoff enthaltenden Mikroemulsion und eine mittlere Teilchengröße im Bereich von 1 bis 250 nm bei im Wesentlichen eingipfeligen Teilchengrößenverteilungen gemessen mit einem Zetasizer Nano-ZS von Malvern aufweist. Bei dieser Bestimmung wird der Brechungsindex der wasserunlöslichen Phase C) näherungsweise angegeben und bei der Messung berücksichtigt, um ein genaueres Messergebnis zu erhalten.

Ganz bevorzugt ist ein Rissprüfmittel zur Fehlererkennung nach dem Eindringverfahren, das enthält:
A) als O/W-Mikroemulsion mindestens 30 Gew.-% oder 30 bis 85 Gew.-% oder als W/O-Mikroemulsion mindestens 10 Gew.-% oder 10 bis 60 Gew.-% an Wasser A),
B) mindestens 0,1 Gew.-% an mindestens einem Farbstoff B), der eine Löslichkeit in Wasser von weniger als 0,1 g/L bei 20 °C unter Normaldruck aufweist und der gegebenenfalls in einem Farbstoffsystem vorliegt, wobei als Farbstoff mindestens einer ausgewählt aus der Gruppe bestehend aus Naphthalimiden, Azofarbstoffen, Anthrachinonen, Methinfarbstoffen und Xanthenen ausgewählt ist sowie gegebenenfalls als Aufheller mindestens ein Stilben oder mindestens ein Cumarin,
C) mindestens 5 Gew.-% oder 5 bis 50 Gew.-% oder 5 bis 40 Gew.-% an mindestens einer im Wesentlichen wasserunlöslichen flüssigen Phase C) ausgewählt aus mindestens einer Substanz der Carbonsäureester von Mono-, Di- oder/und Polycarbonsäuren C3) oder/und mindestens einer Substanz der Ether C5) wie z.B. Dialkylether mit Alkylketten unabhängig voneinander von jeweils 3 bis 12 C-Atomen,
D) mindestens 2 Gew.-% oder 2 bis 60 Gew.-% oder 2 bis 50 Gew.-% an mindestens einem Tensid D), wobei mindestens ein anionisches Tensid a) mit einer Mindestlänge der Alkylkette von 6 C-Atomen oder mindestens ein nichtionisches Tensid b) mit einer Mindestlänge der Alkylkette von 8 C-Atomen enthalten sind oder eine Kombination von mindestens einem gut wasserlöslichen Tensid D), das zu mindestens 1 Gew.-% in Wasser bei Raumtemperatur löslich ist, mit einem öllöslichen Tensid D) und
   gegebenenfalls E) mindestens einem Additiv E) ausgewählt aus Konservierungsmitteln, Korrosionsinhibitoren, Neutralisationsmitteln, Lösevermittlern und Rheologieadditiven,
   wobei die Summe aller Bestandteile 100 Gew.-% ergibt,
wobei das Mischungsverhältnis von Wasser A) zu Tensiden D) einschließlich gegebenenfalls vorhandener Co-Tenside oder/und Emulgatoren und zu der im Wesentlichen wasserunlöslichen Phase C) vorzugsweise in dem durch die Eckpunkte gekennzeichneten Bereich von 0,5 : 1 : 10, 20 : 1 : 10, 0,5 : 1 : 2 und 20 : 1 : 2 bezogen auf das Gewichtsverhältnis liegt und wobei das Rissprüfmittel bei einer Temperatur von 20 °C unter Normaldruck eine Transparenz von mindestens 70 % gemessen bei 600 nm in einer Quarzglasküvette mit einer Schichtdicke von 10 mm in einem Photometer CADA 100-V der Hach Lange GmbH an einer gleichartigen, jedoch keinen Farbstoff enthaltenden Dispersion und eine mittlere Teilchengröße von mindestens 1 nm gemessen mit einem Zeta-Sizer Nano-ZS von Malvern aufweist.

Die Aufgabe wird auch gelöst mit einem Verfahren zur Herstellung eines Rissprüfmittels in Form einer Mikroemulsion, das dadurch gekennzeichnet ist, dass zuerst mindestens ein Farbstoff B) oder ein Farbstoffsystem in mindestens einer Substanz der im Wesentlichen wasserunlöslichen Phase C) oder in der im Wesentlichen wasserunlöslichen Phase C) gelöst wird und dass dieser Lösung anschließend eine Lösung oder/und eine Dispersion von mindestens einem Tensid D) und gegebenenfalls auch mindestens einem Additiv E) sowie schließlich Wasser diesem Gemisch zugesetzt wird (Verfahrensvariante 1) oder dass zuerst mindestens eine Substanz der im Wesentlichen wasserunlöslichen Phase C) oder die im Wesentlichen wasserunlösliche Phase C) zusammen mit mindestens einem Tensid D) oder mit den Tensiden D) vorgelegt wird, dass danach mindestens ein Farbstoff B) oder ein Farbstoffsystem zugesetzt wird und dass schließlich Wasser diesem Gemisch zugesetzt wird (Verfahrensvariante 2) oder dass zuerst Wasser vorgelegt wird, bevor die weiteren Komponenten zugesetzt werden (Verfahrensvariante 3), wobei in allen Verfahrensvarianten nur ein Mischen und gegebenenfalls leichtes Rühren, aber keine stärkere Bewegung verwendet wird. Bei der Verfahrensvariante 3 kann dem vorgelegten Wasser mindestens eine Substanz der im Wesentlichen wasserunlöslichen Phase C) oder die im Wesentlichen wasserunlösliche Phase C), danach das mindestens eine Tensid D), dann der mindestens eine Farbstoff B) oder ein Farbstoffsystem und schließlich gegebenenfalls mindestens ein Additiv E) zugesetzt werden. Bei allen Verfahrensvarianten ergibt sich jedoch immer die gleiche Mikroemulsion mit den gleichen Eigenschaften.

Die Verfahrensvariante 2 bedingt zwar nicht die Verwendung eines zweiten Gefäßes zum Vorlösen des Farbstoffs oder des Farbstoffsystems, kann aber bis zur Ausbildung einer Mikroemulsion mehr Zeit beanspruchen, u.U. mehr als 60 Minuten. Bei allen Verfahrensvarianten bildet sich in der Regel eine Mikroemulsion aus thermodynamischer Sicht selbständig aus. Es genügt bei allen Verfahrensvarianten in der Regel, wenn bei Bedarf leichtes Rühren als unterstützende Maßnahme eingesetzt wird.

Die verschiedenen Komponenten der erfindungsgemäßen Mikroemulsionen können auf unterschiedliche Weise und in unterschiedlicher Reihenfolge zusammengemischt werden, wobei vielfach keine größeren Unterschiede im Gemisch und im Aufwand auftreten. Bei der Verwendung von Tensiden mit einem ausgeprägt hydrophoben Charakter wie z.B. durch lange unverzweigte Alkylketten wie z.B. in Octadecenyl(hexa(oxyethyl))phosphat oder Poly-(oxyethyl))oleat kann es durch intermolekulare Anziehungskräfte zur Bildung von Aggregaten in einer überwiegend wässerigen Mikroemulsion kommen, die zunächst eine deutliche Erhöhung der Viskosität bis zur Ausbildung eines Gels durch den Eintrag von Tensid in Wasser hervorrufen. In diesem Fall ist es vorteilhaft, das Tensid in der im Wesentlichen wasserunlöslichen Phase C) zu lösen und erst dann mit Wasser A) zu versetzen.

Bei der Verwendung von anionischen Tensiden in Form ihrer freien Säure ist es vorteilhaft, diese zuerst in Wasser zu dispergieren, mit einem Alkali oder einem Amin auf einen pH-Wert im Neutralbereich einzustellen und im Anschluss mit einem Gemisch aus im Wesentlichen wasserunlöslicher Phase C), Farbstoff B) bzw. Farbstoffsystem und gegebenenfalls Additiv E) zu versetzen.

Mikroemulsionen können auf verschiedenem Wege hergestellt werden. Die Herstellung der Mikroemulsionen kann beispielsweise auf einfache Weise durch Mischen einer wasserunlöslichen Phase C) mit weiteren öllöslichen Stoffen wie z.B. Farbstoff oder/und Additiv erfolgen, indem die wasserunlösliche Phase erwärmt wird und indem anschließend eine wässerige Tensid D) enthaltende Phase mit einem Gehalt an wasserlöslichem Stoff unter Rühren zugesetzt wird. Eine thermodynamisch stabile Mikroemulsion bildet sich dann üblicherweise spontan, wobei evtl. noch etwas gerührt wird.

In allen Herstellvarianten kann die Zubereitung der erfindungsgemäßen Mikroemulsion im Temperaturbereich größer Null °C und bis etwa 50 °C erfolgen, insbesondere bei Raumtemperatur. Die Mikroemulsion kann auch in diesem Temperaturbereich gelagert werden. Sie weist vorzugsweise einen pH-Wert im Bereich von 6 bis 11 auf. Sie wird vorzugsweise unverdünnt zum Prüfen eingesetzt.

Fehler bei der Herstellung des erfindungsgemäßen Rissprüfmittels können auftreten, wenn z.B. mit einem Ultraturrax mechanisch zu hart gearbeitet wird. Eine Mikroemulsion bildet sich insbesondere dann gegebenenfalls nicht aus, wenn das Gewichtsverhältnis der im Wesentlichen wasserunlöslichen Phase C) zu den Tensiden D) einschließlich gegebenenfalls vorhandenen Co-Tensiden oder/und Emulgatoren in einer O/W-Mikroemulsion größer als 3 : 1 oder größer als 5 : 1 ist oder wenn das Gewichtsverhältnis von Wasser A) zu Tensiden D) einschließlich gegebenenfalls vorhandenen Co-Tensiden oder/und Emulgatoren in einer W/O-Mikroemulsion größer als 2 : 1 oder größer als 4 : 1 ist. Wenn eine Temperatur über 50 °C eingesetzt wird, kann schnell eine Phasentrennung auftreten; diese Dispersion kann aber oft durch Rühren oder Schütteln bei einer Temperatur unter 50 °C in eine Mikroemulsion überführt werden.

Die Mikroemulsionen entsprechend der vorliegenden Erfindung sind vorzugsweise vom Typ Öl-in-Wasser (O/W). Die Mikroemulsionen enthalten dann als äußere Phase vorzugsweise Wasser und weiterhin mindestens ein Tensid wie z.B. mindestens ein Alkyl(oligo)glycosid und gegebenenfalls auch ein hiervon unterschiedliches Co-Tensid sowie mindestens eine Verbindung als im Wesentlichen wasserunlösliche Phase C). Die Mikroemulsionen können aber auch als Wasser-in-Öl-Emulsion (W/O) vorliegen, insbesondere wenn überwiegend als Tenside D) amphotere Tenside oder/und nichtionische Tenside mit geringem Ethoxylierungsgrad wie z.B. mit 1-4 EO je Mol verwendet werden, da deren räumliche Struktur die Ausbildung von W/O-Mikroemulsionen begünstigt.

Zur Erzeugung einer Mikroemulsion ist Wasser A), mindestens ein in Wasser im Wesentlichen unlösliches Lösemittel der im Wesentlichen wasserunlöslichen flüssigen Phase C) sowie mindestens ein Tensid D) notwendig, wobei das gegebenenfalls einzige Tensid D) oder mindestens ein Tensid D) auch mindestens ein Emulgator sein kann. Für die erfindungsgemäße Mikroemulsion ist dann noch der Zusatz von Farbstoff B) oder Farbstoffsystem erforderlich. Beim Vorliegen der je nach chemischem System individuell unterschiedlichen und spezifischen Konzentrationsbereiche für jeden Bestandteil bildet sich die Mikroemulsion üblicherweise selbsttätig ohne Einwirkung von intensiven Scherkräften. Ein einfaches Durchmischen der Komponenten führt üblicherweise unmittelbar zur Ausbildung der optisch klaren oder transparenten Mikroemulsion. Häufig ist das geeignete Gewichtsverhältnis von Tensid zu Wasser und gegebenenfalls auch das geeignete Gewichtsverhältnis von Tensid zu Lösemittel der im Wesentlichen wasserunlöslichen flüssigen Phase C) entscheidend, ob eine sogenannte vollständige Mikroemulsion oder eine Mikroemulsion mit mindestens einer Exzessphase ausgebildet wird. Die vollständige Mikroemulsion ist bevorzugt, weil hierin der Farbstoff oft besser verteilt ist als in der Mikroemulsion mit mindestens einer Exzessphase. Ein weiterer Einflussfaktor auf die Bildung einer Mikroemulsion ist gegebenenfalls die Temperatur, da die emulgierende Wirkung der Tenside sich unter Temperatureinfluss ändert. Bei einer Temperaturerhöhung kann sich der Hydratationsgrad des hydrophilen Molekülbestandteils der Tenside erniedrigen. Insbesondere bei nichtionischen Tensiden kann dies zu einer Verringerung der Wasserlöslichkeit führen, was sich durch ein Eintrüben des vorher homogenen Gemisches bemerkbar machen kann. Bei Annäherung an oder Überschreitung des Trübungspunktes kann das Tensid seine vermittelnde Funktion zwischen Wasser und Öl nicht mehr ausüben und es kann zum Brechen bzw. Spalten der Mikroemulsion kommen. Vorzugsweise liegt der Trübungspunkt der zugesetzten Tenside oberhalb von 50 °C, oberhalb von 70 °C oder oberhalb von 85 °C. Beim Überschreiten einer Grenztemperatur kann sich die Mikroemulsion spalten, was sich durch Eintrüben oder/und Abscheiden von einer oder mehrerer Phasen bemerkbar macht. Die Grenztemperatur ist nur experimentell zu ermitteln.

Bei überwiegend nicht-wässerigen W/O-Mikroemulsionen werden in vielen Ausführungsvarianten 10 bis 60 Gew.-% an Wasser A), 5 bis 40 Gew.-% an in Wesentlichem wasserunlöslichem Lösemittel der im Wesentlichen wasserunlöslichen Phase C) sowie 10 bis etwa 40 Gew.-% an Tensid D) einschließlich gegebenenfalls vorhandenen Co-Tensiden und Emulgatoren benötigt, um eine Mikroemulsion zu erzeugen. Bei überwiegend wässerigen O/W-Mikroemulsionen werden in vielen Ausführungsvarianten 30 bis 85 Gew.-% an Wasser A), 5 bis 50 Gew.-% an in Wesentlichem wasserunlöslichem Lösemittel der im Wesentlichen wasserunlöslichen Phase C) sowie 10 bis etwa 40 Gew.-% an Tensid D) einschließlich gegebenenfalls vorhandenen Co-Tensiden und Emulgatoren benötigt, um eine Mikroemulsion zu erzeugen.

Die erfindungsgemäße Mikroemulsion kann destabilisiert werden - beispielsweise chemisch z.B. bei pH-Wertänderung wie durch einen Säurezusatz, mechanisch z.B. mit einer Zentrifuge, durch Verdünnen oder/und durch eine Temperaturerhöhung, so dass sich die wasserunlöslichen und im Wesentlichen wasserunlöslichen Substanzen von Wasser abtrennen. Denn durch das Koaleszieren der Flüssigkeitströpfchen entstehen größere Tröpfchen, die weiter zusammenwachsen und dann eine flüssige Schicht ausbilden können. Man spricht dann von Brechen oder Spalten einer Emulsion oder Mikroemulsion. Wenn eine getrennte Schicht vorliegt, kann diese leicht abgeschöpft werden. Durch das Abschöpfen kann die Belastung der Umwelt durch organische Verbindungen noch weiter verringert werden.

Die Auswahl des mindestens einen Tensids D) kann auch bei der Entscheidung beitragen, ob sich Mikroemulsionen vom Typ O/W oder W/O bilden. Wenn der HLB-Wert des mindestens einen Tensids D) und insbesondere von mindestens einem nichtionischen Tensid im Bereich etwa zwischen 3 und 9 oder zwischen 5 und 7 liegt, bilden sich oft bevorzugt W/O-Mikroemulsionen, während bei HLB-Werten etwa zwischen 8 und 20 oder zwischen 10 bis 18 oft bevorzugt O/W-Mikroemulsionen entstehen. Vielfach wird in den erfindungsgemäßen Rissprüfmitteln ein Gemisch von Tensiden D) verwendet, bei denen nicht alle Tenside eines Rissprüfmittels einen HLB-Wert in diesem Bereich aufweisen müssen, insbesondere je nach Funktion des einzelnen Tensids in dem Rissprüfmittel.

Da der HLB-Wert von der Temperatur abhängig ist, kann eine Temperaturänderung auch das micellare Verhalten des Tensids beeinflussen. Bei einem Temperaturwechsel können u.U. die Wechselwirkungen eines hydrophilen Tensids soweit abnehmen bzw. zunehmen, dass bei Temperaturerhöhung eine Phasenumkehr von einem O/W-System zu einem W/O-System eintreten kann und dass bei Temperaturerniedrigung eine Phasenumkehr von einem W/O-System zu einem O/W-System eintreten kann.

Die nanodisperse Struktur der Mikroemulsion bildet sich oft mit minimalem Rühraufwand, während eine Emulsion aufgrund ihrer viel größeren Domänen häufig erst durch aufwändiges Emulgieren entsteht. Mikroemulsionen sind, solange sich Zusammensetzung und Temperatur nicht ändern, üblicherweise stabil und kennen keine Alterungserscheinungen. Emulsionen sind dagegen vor allem temperatur- und stoßempfindlich. Ihre Erwärmung mit anschließender Abkühlung auf die Ausgangstemperatur führt in der Regel zu einer irreversiblen Veränderung der dispersen Struktur, was das Brechen der Emulsion zufolge haben kann, so dass Emulsionströpfchen bei der Destabilisierung zusammenfließen (Koaleszenz). Es kann in manchen Ausführungsformen bevorzugt sein, einen Emulgator zuzusetzen, um die Grenzflächenspannung weiter herabzusetzen.

Es wurde jetzt auch gefunden, dass bei Verwendung von begrenzt wasserlöslichen organischen Lösemitteln der im Wesentlichen wasserunlöslichen Phase C) die zu entsorgenden erfindungsgemäßen Rissprüfmittel, die verschmutzten Reste des erfindungsgemäßen Rissprüfmittels, die Spülwässer und Abwässer durch eine Emulsionsspaltung in eine organische und eine wässrige Phase aufgespalten werden können, was für die Aufarbeitung oder/und Entsorgung der erfindungsgemäßen Rissprüfmittel und hiermit belasteter Flüssigkeiten vorteilhaft ist.

Die Aufarbeitung oder/und Entsorgung eines Rissprüfmittels, von verschmutzten Resten eines Rissprüfmittels oder/und der hiermit belasteten Spülwässer oder/und Abwässer kann bei Anwesenheit von mindestens einer Verbindung der im Wesentlichen wasserunlöslichen Phase C) erfolgen, bei der durch Absenken des pH-Werts oder/und durch Erhöhen der Temperatur eine Emulsionsspaltung ausgelöst wird und bei der die aufzuarbeitenden oder/und zu entsorgenden Flüssigkeiten in eine organische und eine wässrige Phase aufgespalten werden.

Die vorliegende Erfindung ermöglicht die Verringerung der Gehalte an organischen Bestandteilen insbesondere bei organischen Lösemitteln C) oder/und bei Tensiden D) sowie die Erhöhung des Anteils an Wasser in den Rissprüfmitteln, in den beim Prüfen und Reinigen eingesetzten Spülwässern und in Flüssigkeiten beim Entsorgen dieser Mittel und Spülwässer. Sie ermöglicht den Einsatz von Rissprüfmitteln, die umweltfreundlicher sind als die des Standes der Technik und die sich leichter und umweltfreundlicher entsorgen lassen als die des Standes der Technik. Sie ermöglicht den Einsatz von Rissprüfmitteln, die sich leichter von den Prüfobjekten entfernen lassen als die Rissprüfmittel des Standes der Technik. Sie ermöglicht die Verbesserung der Fehlerdetektion mit einem Rissprüfmittel. Und sie ermöglicht außerdem eine verbesserte Lagerstabilität, insbesondere bei Temperaturen unter 10 °C.

Es war überraschend, dass sich unter Einsatz einer recht umweltfreundlich zusammengesetzten Mikroemulsion Rissprüfmittel mit hoher oder sogar sehr hoher Detektionsempfindlichkeit herstellen lassen.

Es war auch überraschend, dass Rissprüfmittel in Form einer Mikroemulsion eine zusätzliche Reinigungsleistung aufweisen, die eine gegebenenfalls unzureichende Reinigung oder/und Entfettung der zu prüfenden Teile ausgleichen kann.

Es war auch überraschend, dass die Lagerstabilität der erfindungsgemäßen Mikroemulsion sich insbesondere bei Temperaturen unter 10 °C beim Auftreten von Farbstoffkristallisation oder/und Farbstoffniederschlag im Vergleich zu den Rissprüfmitteln des Standes der Technik häufig verbesserte. Es war ferner überraschend, dass unter Auswahl eines geeigneten Lösemittels C) und Tensids D) fluoreszierende Rissprüfmittel mit hoher oder ultrahoher Empfindlichkeit (Klasse 3 und 4) bei gleichzeitig hohem Wassergehalt hergestellt werden können.

Das erfindungsgemäße Rissprüfmittel bzw. das erfindungsgemäß hergestellte Rissprüfmittel kann insbesondere in der fluoreszierenden Fehlererkennung oder in der Fehlererkennung im Bereich des sichtbaren Lichtes oder/und insbesondere von Poren oder/und Rissen besonders vorteilhaft verwendet werden.

Das erfindungsgemäße Rissprüfmittel bzw. das erfindungsgemäß hergestellte Rissprüfmittel kann insbesondere im Fahrzeugbau, in der Luft- und Raumfahrtindustrie, in der Anlagentechnik, bei Pipelines, im Maschinenbau, in der Energietechnik und in der Allgemeinen Industrie verwendet werden. Es kann hierbei vorteilhaft bei der Herstellung von Einzelkomponenten und von aus mehreren Einzelkomponenten bestehenden Konstruktionen sowie bei der Wartung und beim Ersatz von Einzelkomponenten und Konstruktionen eingesetzt werden. Besonders bevorzugt werden sie eingesetzt zur Untersuchung von Rohrleitungen und Pumpengehäusen im Kraftwerksbereich.

### Beispiele und Vergleichsbeispiele:

Die im Folgenden beschriebenen Beispiele (B) und Vergleichsbeispiele (VB) sollen den Gegenstand der Erfindung näher erläutern.

Es wurden wässerige Zusammensetzungen durch Mischen vorbereitet, deren Zusammensetzungen in den Tabellen 2a und 2b als Badzusammensetzungen angegeben werden.

### Beispiel 1:

In einem Becherglas wurden 16 Gewichtsanteile Rhodiasolv® DIB - das ist ein Gemisch aus Diisobutyl-Succinat, -Glutarat und -Adipat - und 12,3 Gewichtsanteile Dowanol® PnB (Propylenglykol-n-butylether) - vorgelegt. Unter leichtem Rühren wurden 0,8 Gewichtsanteile C.I. Solvent Yellow 43 und 2,5 Gewichtsanteile Cumarin 1 (7-N,N-Diethylamino-4-methyl-cumarin) zugegeben und gelöst. Der gelben Lösung wurden 2,5 Gewichtsanteile Propylenglykol, 5,8 Gewichtsanteile Aerosol® OT (Dioctyl-sulfo-succinat) in Form von 6,8 Gewichtsanteilen des Wasser enthaltenden Aerosol® OT-85 AE, 7,4 Gewichtsanteile Neodol® 91-6 und 7,4 Gewichtsanteile Ethylan® 1003 zugesetzt und unter leichtem Rühren homogenisiert. Unter leichtem Rühren wurden dem Gemisch nun 45,3 Gewichtsanteile demineralisiertes Wasser zugegeben, worauf sich nach wenigen Sekunden unter Rühren eine optisch klare, gelbe Lösung einstellte. Die gleichen Eigenschaften der fertigen Mikroemulsionen ergaben sich üblicherweise 1.) unabhängig von der Art der Zugabereihenfolge wie als Verfahrensvarianten 1, 2 und 3 aufgeführt und 2.) unabhängig vom Fehlen eines Rührens oder mit leichtem Rühren, wobei nur zeitliche Verzögerungen ohne Rühren auftreten können - aber leichtes Rühren aus Zeitgründen oft notwendig ist.

Bei den Messergebnissen in Tabelle 2 ergaben sich vereinzelt Abweichungen von der Zuordnung der Leuchtkraft zu einer Fehlererkennbarkeitsklasse, da diese Zuordnung über applikationstechnische Prüfungen erfolgte, zu denen die Leuchtkraftbestimmung nicht gehört. Einzelne dieser Werte waren unerwartet hoch, wobei die getrockneten Farbfilme tatsächlich visuell ermittelbar eine deutlich stärkere Leuchtkraft als der Standard-Farbfilm aufwiesen, der gleichartig und gleichzeitig als Referenz hierzu hergestellt wurde. Somit bestätigt sich, dass Rissprüfmittel, die eine Leuchtkraft von über 110 % aufweisen, eigentlich in eine neuere, noch höhere Fehlererkennbarkeitsklasse zugeordnet werden könnten.

**Tabelle 1: Übersicht über die bei den Versuchen zugesetzten Stoffe der Komponenten C bis E**

| Code | Produktname | Charakterisierung des Produktes | Chem. Klasse |
|---|---|---|---|
| C1 | Rhodiasolv® DIB | dibasischer Ester: Gemisch aus Diisobutyl-Succinat, -Glutarat und - Adipat | C3) |
| C2 | Dowanol® PnB | Propylenglykol-n-butylether | C5) |
| C3 | Rhodiasolv® RPDE | Gemisch aus Dimethyl-succinat, - glutarat und -adipat | C3) |
| C4 | Rhodiasolv® IRIS | Dimethyl-2-methylglutarat | C3) |
| C5 | Dowanol® DPnB | Dipropylenglykol-n-butylether | C5) |
| C6 | Dowanol® EPh | Ethylenglykolmonophenylether | C5) |
| C7 | Rhodiasolv® INFINITY | Dimethyl-2-methylglutarat, enthält Anteil D | C3) |
| C8 | Flexisolv® 2100C | Gemisch aus Dimethyl-succinat, -glutarat u. -adipat, enthält Anteil D | C3) |
| C9 | - | Benzylalkohol | C2) |
| C10 | Prifer® 6813 | Ester, geheime Zusammensetzung | C3) |
| C11 | Dowanol® TPnB | Tripropylenglykol-n-butylether | C5) |
| C12 | - | Tridecanol | C2) |
| C13 | - | Diisobutylketon | C6) |
| C14 | Rhodiasolv® ADMA | Dimethyldecanamid | C3) |
| C15 | Dowanol® PPh | Propylenglykolmonophenylether | C5) |
| C16 | Dowanol® DPH 255 | Mischung aus Ethylenglykolmonophenylether und Diethylenglykolmonophenylether | C5) |
| D1 | Aerosol® OT | Dioctyl-sulfo-succinat | D) a) |
| D2 | Neodol® 91-6E | C₉-C₁₁-Alkohol Hexaethoxylat | D) b) |
| D3 | Ethylan® 1003 | C₁₀-Alkohol Triethoxylat | D) b) |
| D4 | Ethylan® 1005 | C₁₀-Alkohol Pentaethoxylat | D) b) |
| D5 | Lutensol® ON30 | Kurzkettiges Fettalkohol Triethoxylat | D) b) |
| D6 | Neodol® 91-8E | C₉-C₁₁-Alkohol Octaethoxylat | D) b) |
| D7 | - | Natrium-Cumolsulfonat | D) a) |
| D8 | Sulfetal® 4105 | Natrium-2-ethylhexylsulfonat | D) a) |
| D9 | - | Natriumcaprylat | D) a) |
| D10 | Ampholak® YJH-40 | Natrium-Octyliminodipropionat | D) c) |
| D11 | Lakeland® AMA 30 | Natrium-Lauryliminodipropionat | D) c) |
| D12 | Triton® H-66 | Kalium-Fettalkoholesterphosphat | D) a) |
| D13 | - | Kaliumcaprylat | D) a) |
| D14 | Rhodafac® HA-70 | Polyoxyethylenphenylesterphosphat | D) a) |
| D15 | Rhodafac® RS-610E | Isotridecanol-hexaethoxy-monophosphat | D) a) |
| D16 | Softanol® 50 | C₁₂ - C₁₅ Fettalkohol-Pentaethoxylat | D) b) |
| D17 | Tergitol® 15-S-9 | C₁₂ - C₁₅ Fettalkohol-Nonaethoxylat | D) b) |
| D18 | Mulsifan® RT24 | Fettalkoholethoxylat | D) b) |
| D19 | Tween®80 | Sorbitanmonooleatpoly(20)ethoxylat | D) b) |
| D20 | Rhodafac® RS-710E | Isotridecanol-nonaethoxy-monophosphat | D) a) |
| D21 | Rhodafac® RA-600E | Polyethoxyalkyletherphosphat | D) a) |
| E1 | - | Propylenglykol, Lösevermittler | E |
| E2 | - | Butylglykol, Lösevermittler | E |
| E3 | - | Natriumhydroxid, Neutralisationsmittel | E |
| E4 | Amine O | Imidazolin-Derivat, Korrosionsinhibitor | E |
| E5 | AMP 95 | 2-Amino-2-methylpropanol-1, Korrosionsinhibitor, Neutralisationsmittel | E |
| E6 | Dantoguard® Plus liq. | Gemisch aus DMDM, Hydantoin u. Iodopropynylbutylcarbamat, Biozid/ Konservierungsmittel | E |
| E7 | - | Dipropylenglykol, Lösevermittler | E |
| E8 | - | Triethanolamin, Korrosionsinhibitor, Neutralisationsmittel | E |
| E9 | Rhodafac® ASI-80 | Octylphosphonsäure, Korrosionsinhibitor | E |
| E10 | - | Monoethanolamin, Korrosionsinhibitor, Neutralisationsmittel | E |
| E11 | - | Butyldiglykol, Lösevermittler | E |
| E12 | Unamine O | Imidazolin-Derivat, Korrosionsinhibitor | E |
| E13 | Irgamet BTZ | Benzotriazol, Korrosionsinhibitor | E |

In analoger Weise wie in Beispiel 1 wurden die in den Tabellen 2b aufgeführten Beispiele B2 bis B50 hergestellt und geprüft, wobei die mindestens eine Substanz C) vorgelegt wurde und danach erst die Farbstoffe B), danach die Tenside D) und schließlich die Additive E) zugesetzt wurden, wobei dieses Gemisch dann in Wasser eingerührt wurde. Bei den Beispielen B51 bis B62 wurde hiervon abgewichen, indem die mindestens eine Substanz C) vorgelegt wurde und danach erst die Substanzen B), D) und E) zugesetzt wurden, wobei Wasser dann in dieses Gemisch eingerührt wurde. Durch diesen prozesstechnischen Unterschied hat sich für die Mikroemulsionen kein Unterschied ergeben.

**Tabellen 2a: Zusammensetzung und Eigenschaften eines Rissprüfmittels des Standes der Technik im Vergleich zu einem ähnlichen erfindungsgemäßen Rissprüfmittel**

| **Beispiel/Vergleichsbeispiel** | **VB0** | **VB1** | **VB2** | **B0** |
|---|---|---|---|---|
| **Zusammensetzung in Gew.%:** | | | | |
| A demineralisiertes Wasser | | 51,6 | | 62,3 |
| B1 Solvent Yellow 43 | 0,5 | 0,3 | 0,3 | 0,2 |
| B Aufheller 1: Cumarin 1 | 0,8 | 1,1 | 1,0 | 0,5 |
| C2 Dowanol® DPnB (Dipropylenglykol-n-butylether) | | | | 16,0 |
| D2 Neodol® 91-6E | 16,7 | 17,5 | | |
| D6 Neodol® 91-8E | | | | 10,0 |
| D14 Rhodafac® HA-70 | | | | 4,0 |
| D16 Softanol® 50 | | | 50,0 | |
| D17 Tergitol® 15-S-9 | 12,0 | 17,5 | 48,7 | 7,0 |
| E11 Butyldiglykol | 70,0 | 12,0 | | |
| **Summe:** | 100,0 | 100,0 | 100,0 | 100,0 |

| **Eigenschaften:** | | | | |
|---|---|---|---|---|
| Lösung auf Basis von ... | * | Wasser und * | Tensiden | |
| * = Wasser-mischbarem Lösemittel | | | | |
| Emulsion | Nein | Nein | Nein | Ja |
| Mikroemulsion | Nein | Nein | Nein | Ja |
| Emulsionstyp | | | | O/W |
| Stabilität bei 50 °C | Stabil | Stabil | Stabil | Stabil |
| Stabilität bei 0 °C | Stabil | Stabil | Stabil | Stabil |
| Mittlere Teilchengröße in nm | < 1 | < 1 | < 1 | 23 |
| Transparenz bei 600 nm u. 20 °C Normaldruck in % | 93 | 91 | 89 | 93 |
| Visuell klar/transparent/milchig: K, T o. M bei 20 °C | K | K | K | K |
| Fehlererkennbarkeitskl. n. AMS 2644 u. ISO 3452 | 1 | 1 | 1 | 1 |
| Leuchtkraft gelb fluoreszierender Mittel in % | 67 | 69 | 68 | 70 |
| Für Prüfgsart. Rot-Weiß, gelb/rot fluor.: R-W, G, R-F | G | G | G | G |
| Spaltbarkeit in wässerige und organische Phase | Nein | Nein | Nein | Ja |

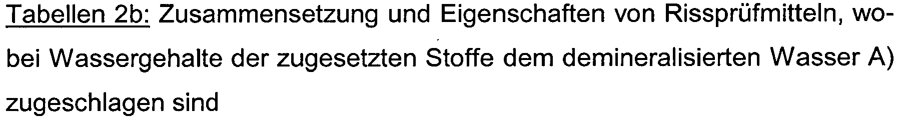

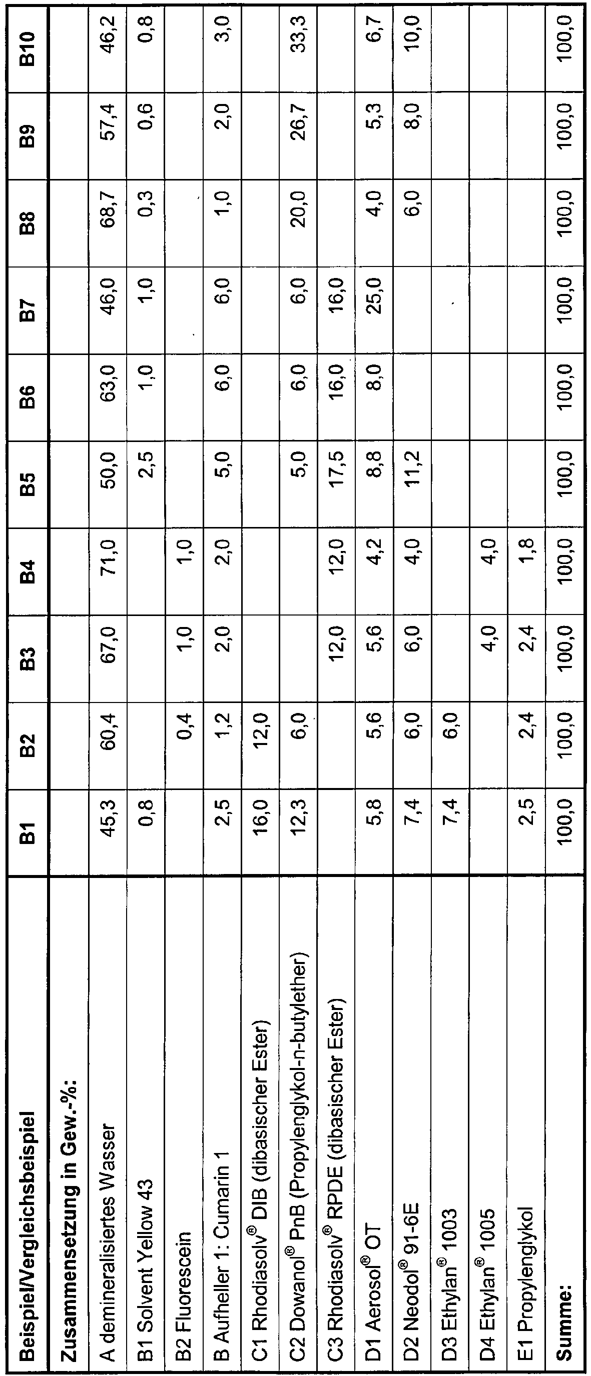

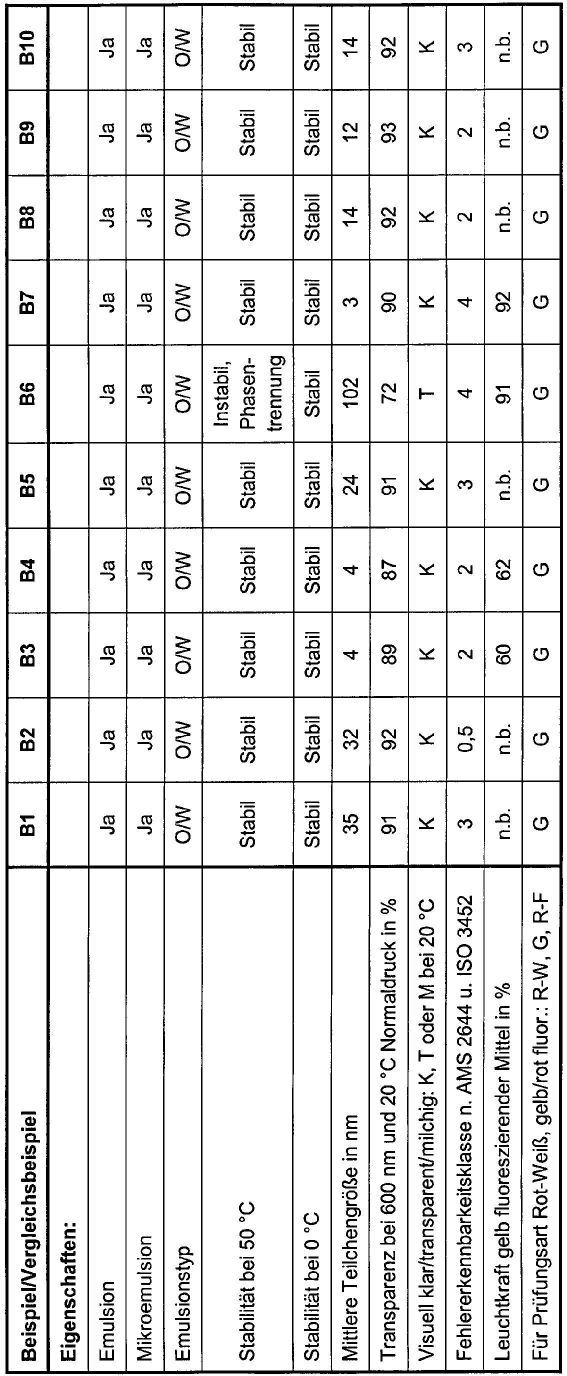

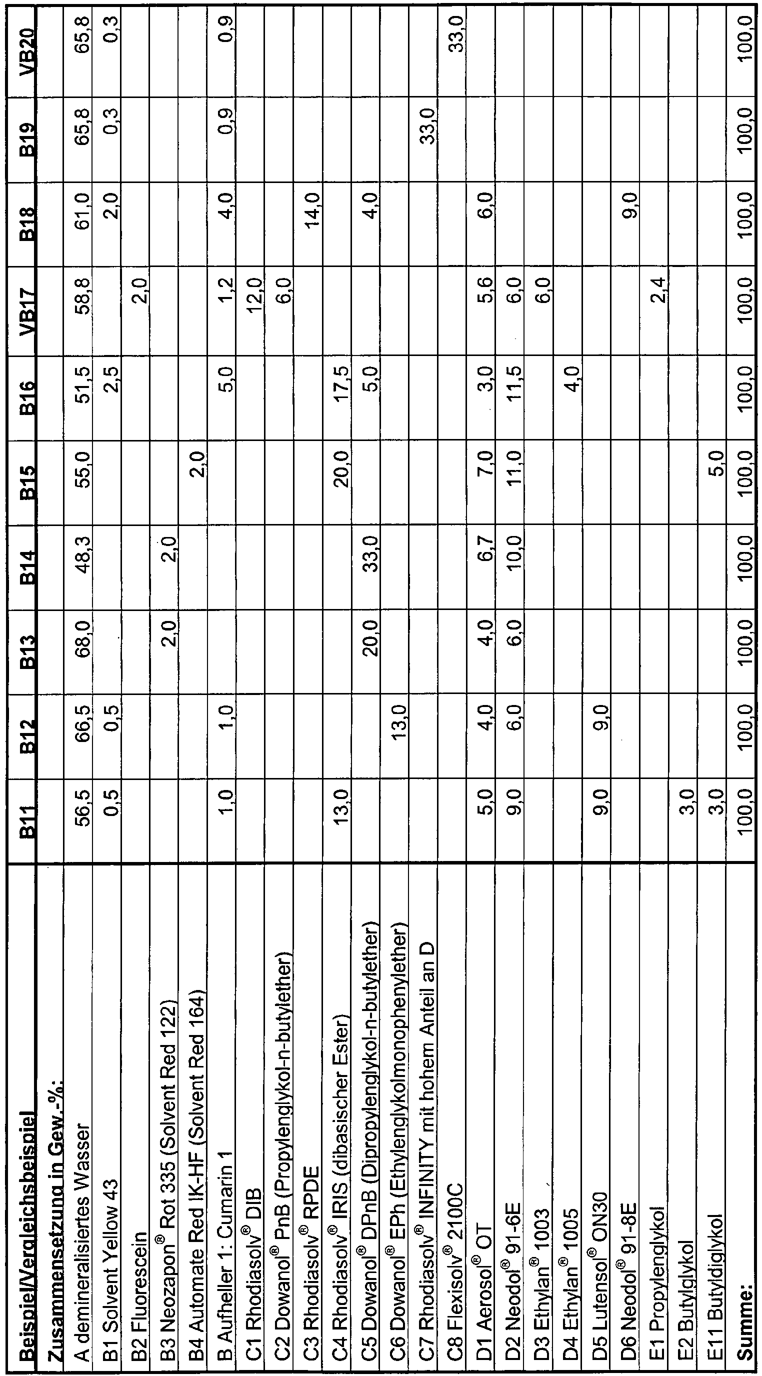

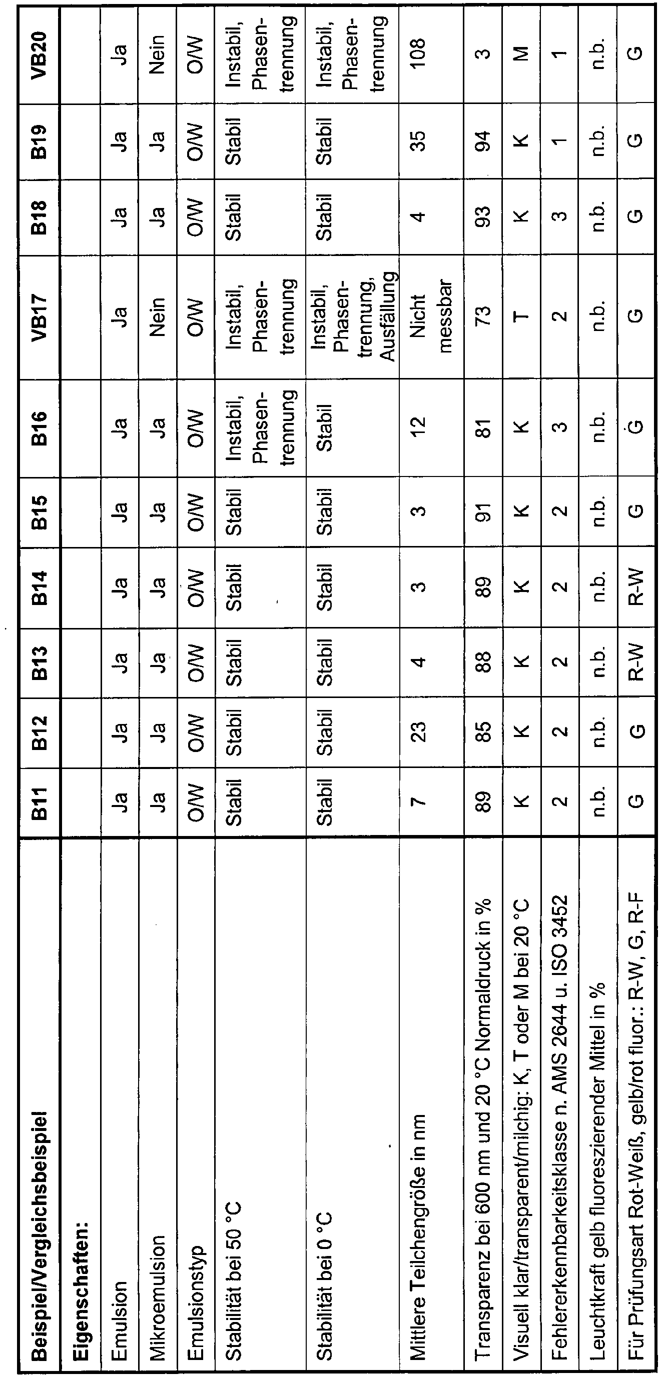

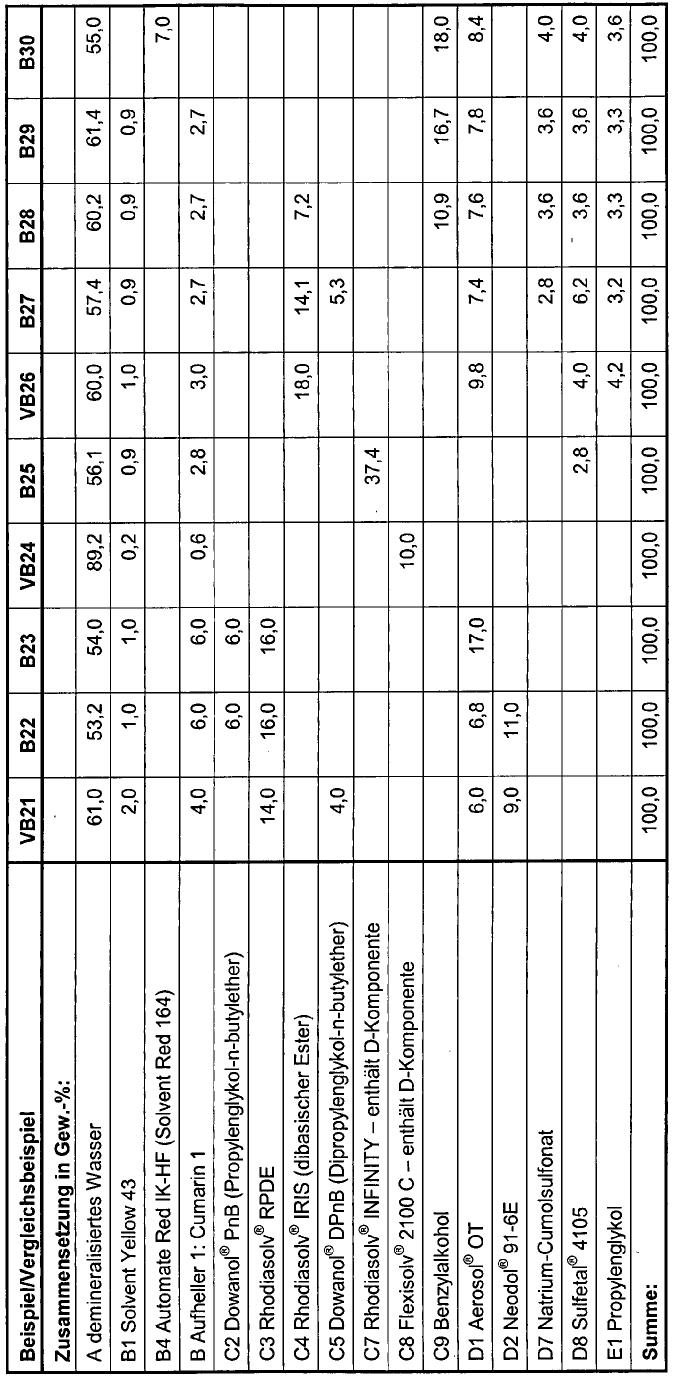

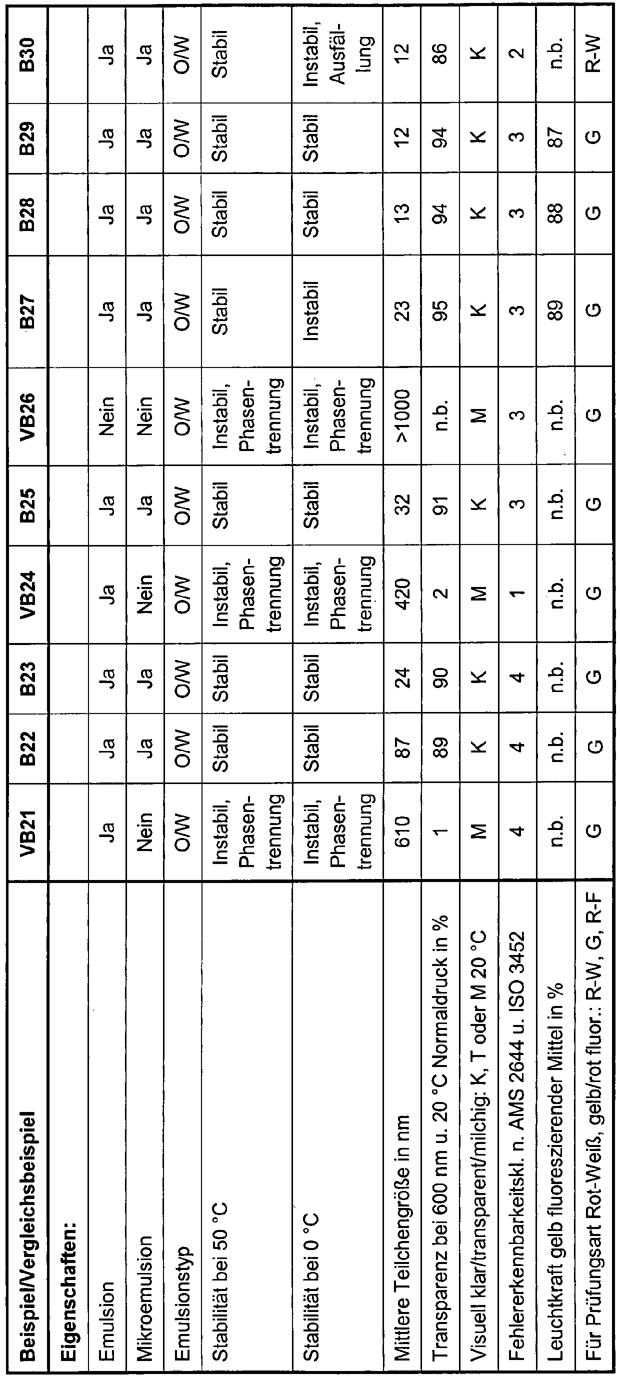

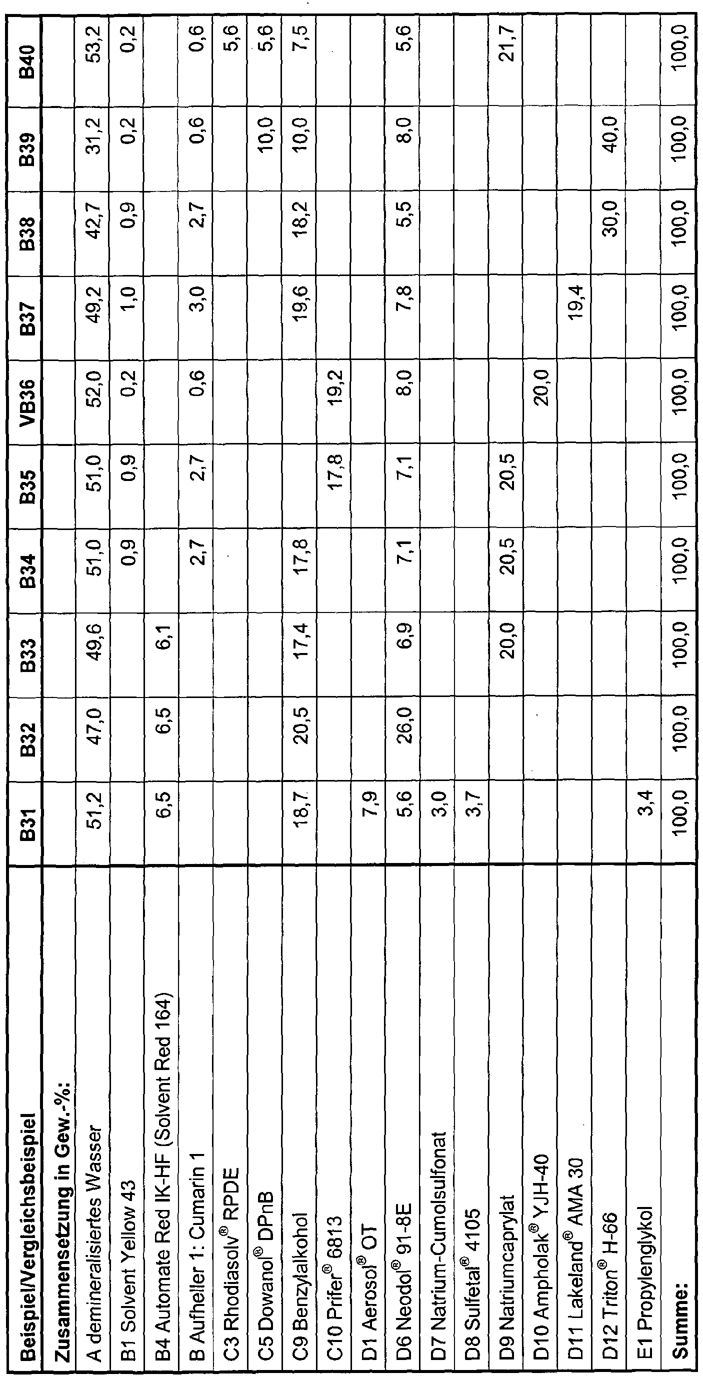

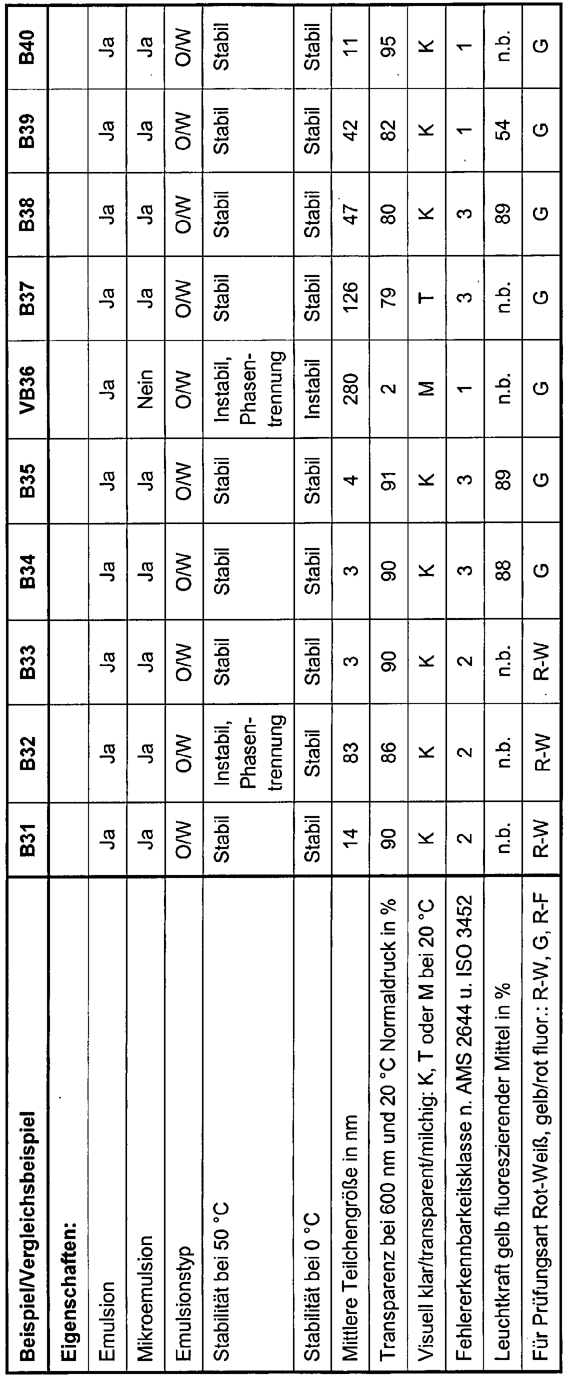

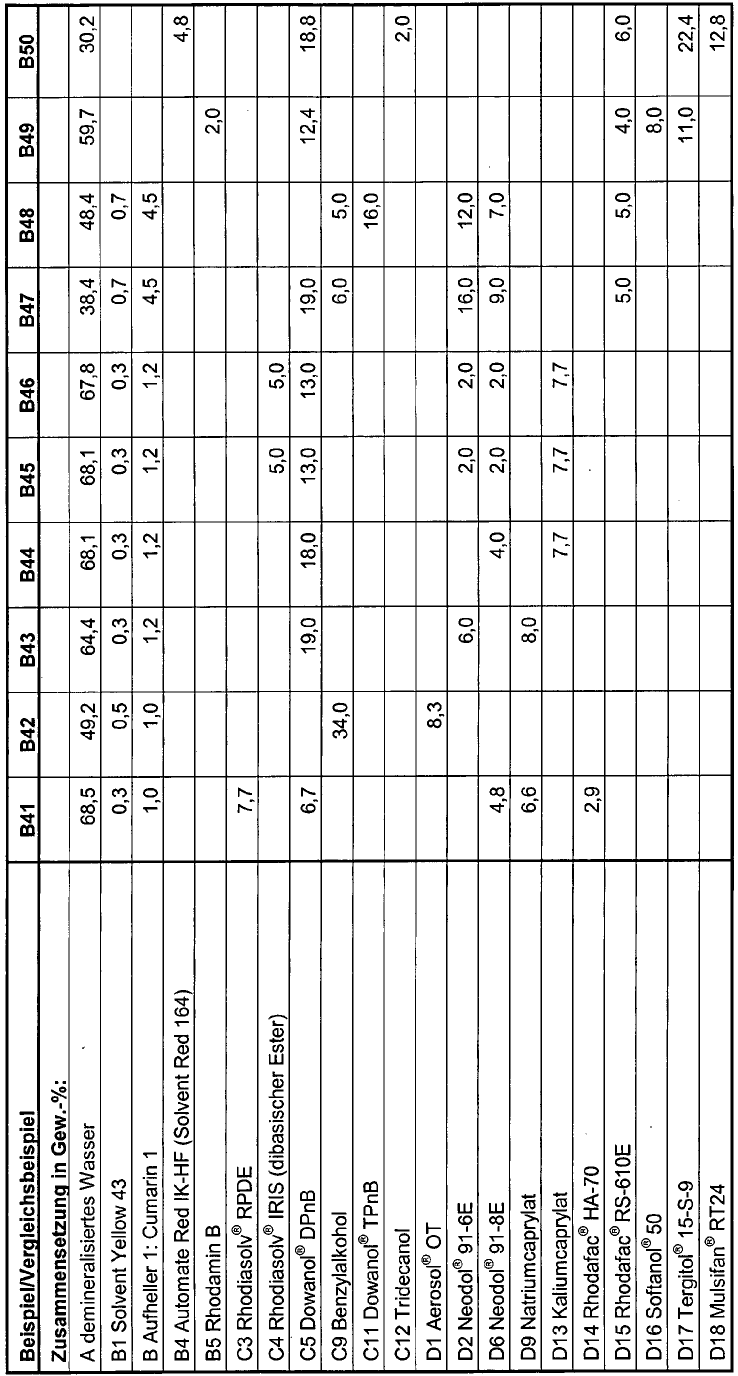

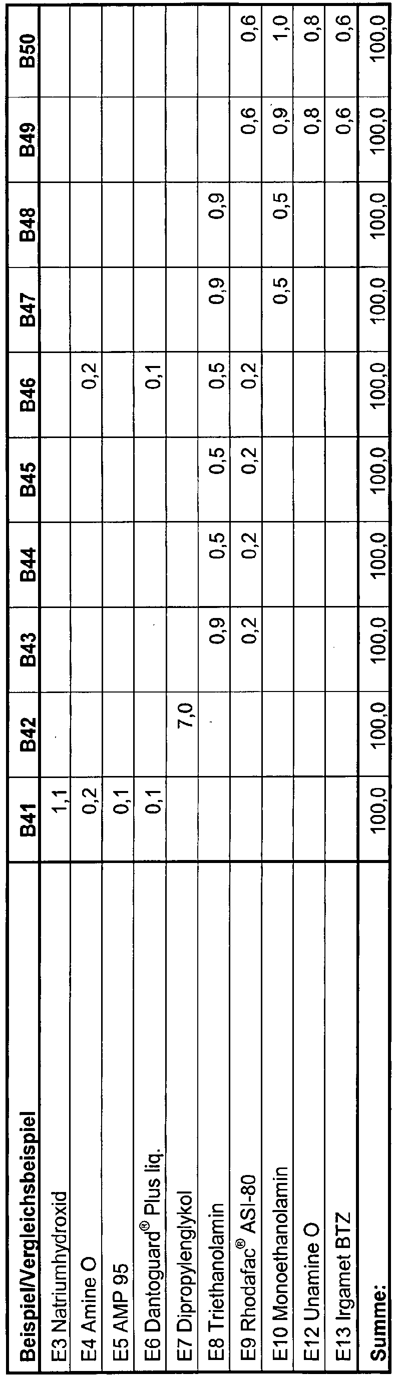

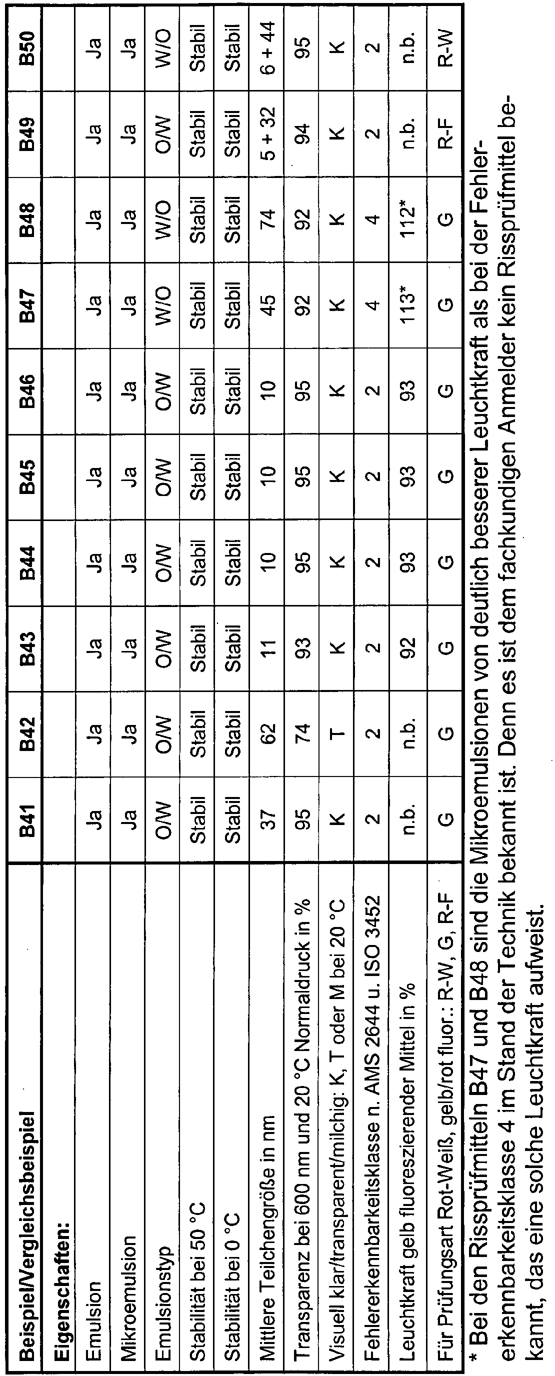

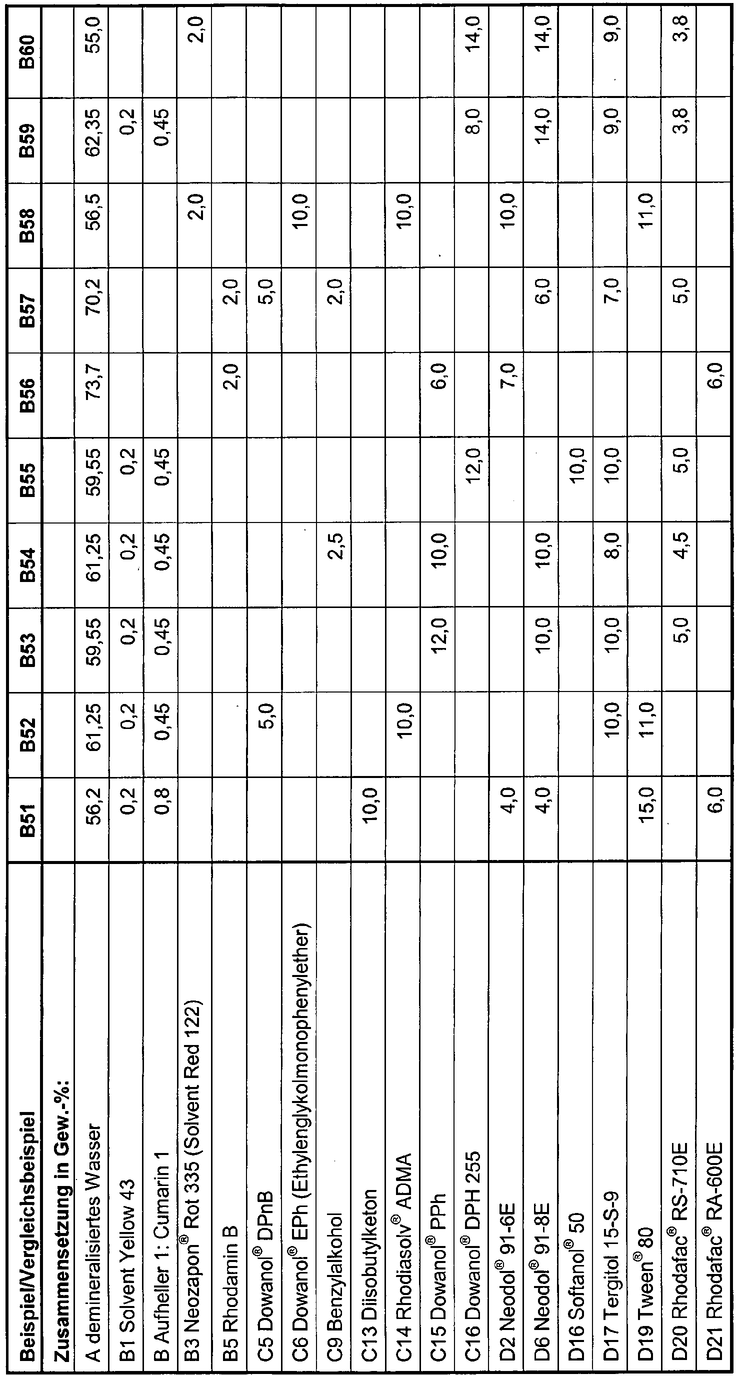

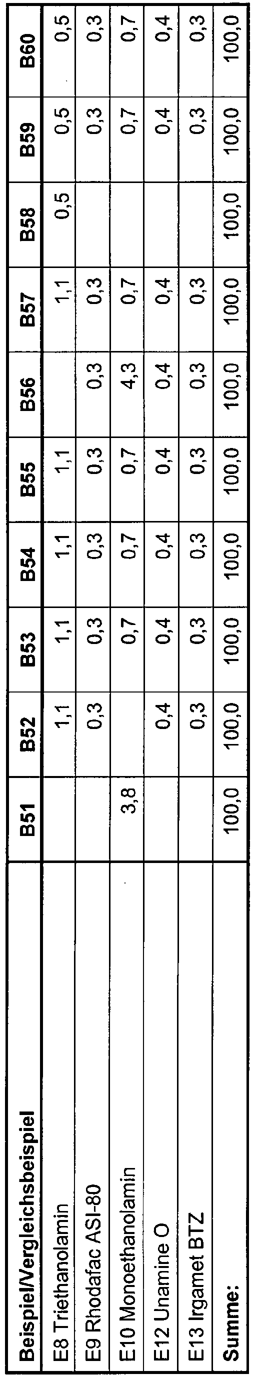

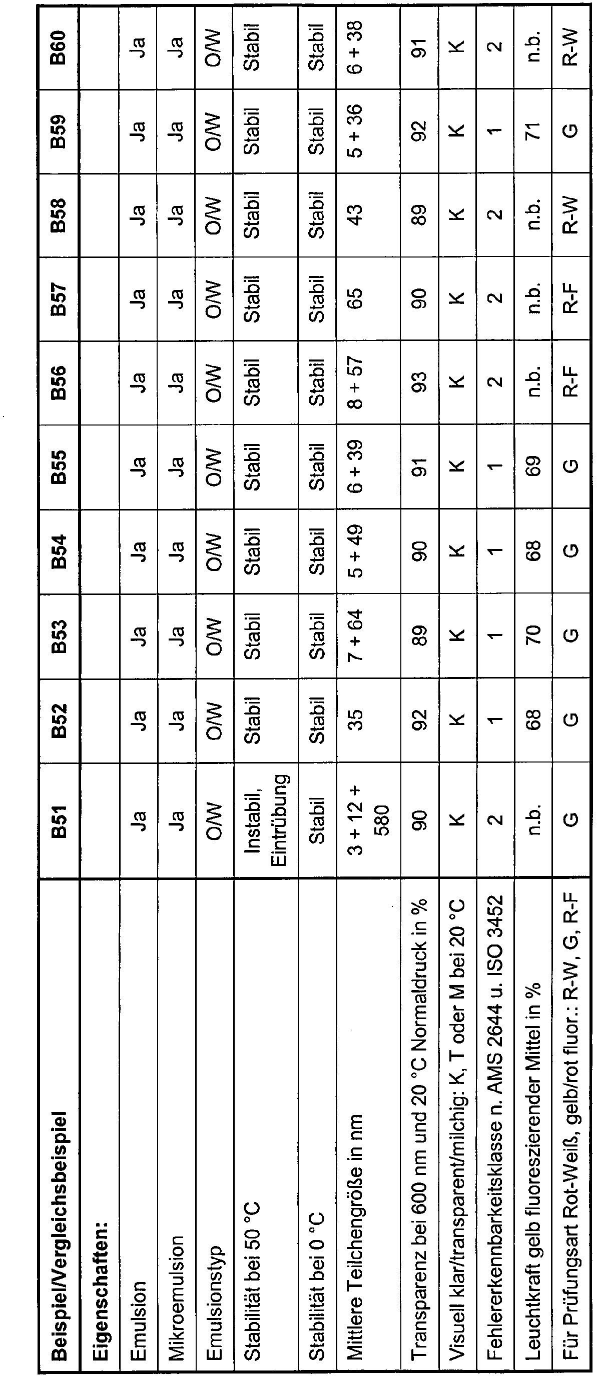

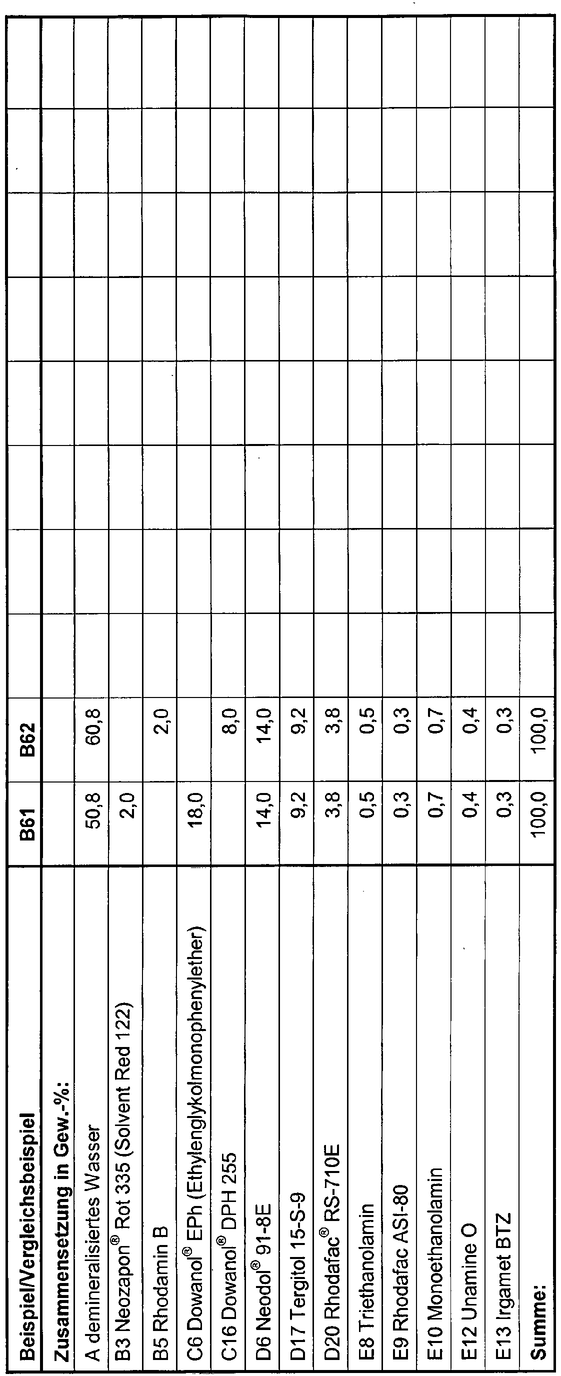

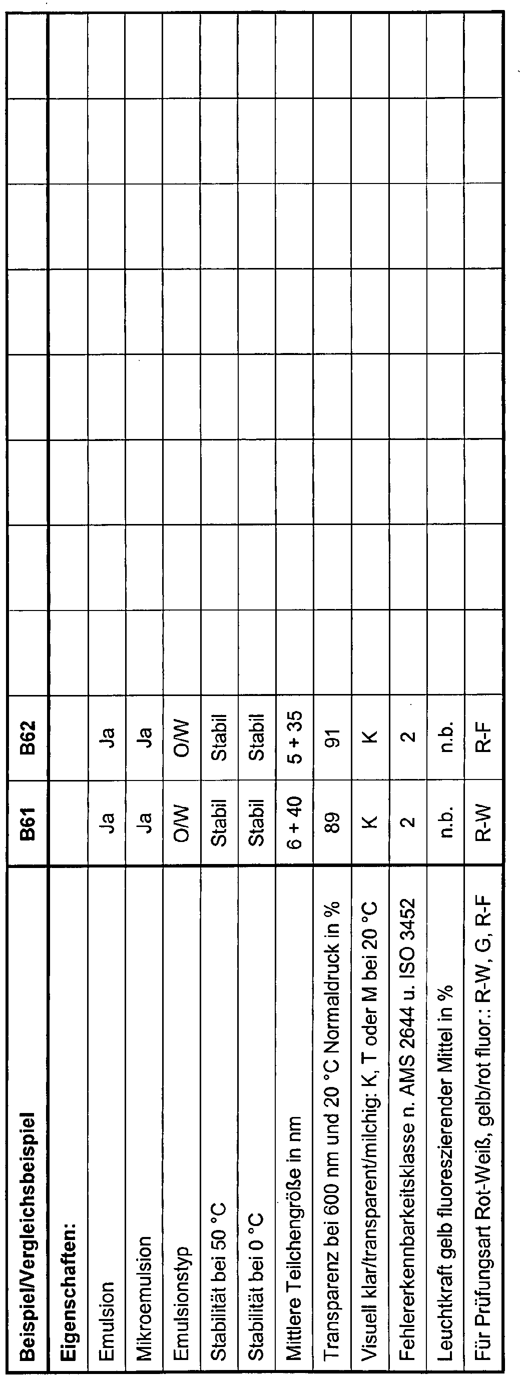

Es ist erwünscht, stabile und möglichst umweltfreundliche Mikroemulsionen zu erzeugen und gleichzeitig entweder solche, die auch die Anforderungen an AMS 2644 und ISO 3452 möglichst erfüllen oder/und andererseits solche, die wegen der Produktanforderungen oder/und Kosten je nach Bedarf eine geringere oder höhere Fehlererkennbarkeitsklasse erfüllen.

Der Erfolg einer Zusammensetzung, die ein gutes Rissprüfmittel ergibt, lässt sich üblicherweise nicht vorher bestimmen, sondern ist im Einzelfall zu prüfen, da die einzelnen Komponenten eine meistens nicht absehbare Wechselwirkung zeigen können.

Bei der Vielzahl an Beispielen zeigte sich, dass es möglich ist, aus einer großen Variation an unterschiedlichen Rohstoffen aus der Gruppe der Farbstoffe, Lösemittel, Tenside und Additive stabile und möglichst umweltfreundliche Rissprüfmittel in Form von Mikroemulsionen herzustellen, die sich vorteilhaft gegenüber dem Stand der Technik auszeichnen.

Die Normen AMS 2644 bzw. ISO 3452 können bei den meisten Beispielen erfüllt werden. Die Nichterfüllung dieser beiden Normen ist am ehesten in einem erhöhten Halogen- oder/und Schwefel-Gehalt durch einzelne Zusätze, in einer leichten Korrosionsneigung durch einzelne Zusätze oder/und in der Auswahl von mindestens einem nichtionischen Tensid mit einem niedrigen Trübungspunkt, so dass leicht eine Eintrübung des Rissprüfmittels bei Temperaturerhöhung auftreten kann, begründet.

Instabile Mikroemulsionen mit Phasentrennung sind bei den Versuchen insbesondere dann aufgetreten, wenn das Gewichtsverhältnis von Wasser zu der im Wesentlichen wasserunlöslichen flüssigen Phase C) in einem ungünstigen Verhältnis insbesondere für die eingesetzten Tenside und die genutzten Temperaturen liegt.

Das Rissprüfmittel des Beispiels B30 ist bei geringer Temperatur instabil und bei höherer stabil, da sich beim Abkühlen Farbstoff ausschied, da die Löslichkeitsgrenze für den Farbstoff überschritten wurde.

Die Zuordnung eines Rissprüfmittels in eine Fehlererkennbarkeitsklasse ist in erster Linie vom Farbstoffgehalt und vom gewählten Farbstoff abhängig und in gewissem Umfang von der Art und Menge der mindestens einen Substanz C) als Farbstofflösemittel abhängig, ist aber weitgehend von der Klarheit, Transparenz bzw. Milchigkeit unabhängig. Wenn jedoch der Gehalt an Farbstoff zu hoch ist, kann es zu instabilen und milchigen Systemen kommen. Da der Farbstoffgehalt wesentlich in die Kosten des Produktes eingeht, werden die Rissprüfmittel oft entsprechend der Notwendigkeit, eine hohe oder nur geringe Fehlererkennbarkeitsklasse einsetzen zu müssen, ausgewählt.

Die visuelle Prüfung auf Klarheit, Transparenz und milchiges Aussehen lässt sich nicht streng mit den Werten der Transparenzprüfung bei 600 nm korrelieren, weil nur eine bestimmte Lichtwellenlänge geprüft wird.

Außerdem hat sich bei den Versuchen gezeigt, dass eine ausreichende Wassermischbarkeit für die im Wesentlichen wasserunlösliche flüssige Phase C) mit dem mindestens einen Tensid D) besonders vorteilhaft ist, was oft an einer Transparenz im Bereich von 70 bis 100 % erkennbar ist. Im Bereich von 70 bis 80 % Transparenz tritt ein Übergangsbereich begrenzter Klarheit auf.

Bei den Versuchen zeigte sich, dass die mittlere Teilchengröße der Mikroemulsionen vorzugsweise im Bereich von 1 bis 130 nm, 1 bis 85 oder 3 bis 70 nm liegen sollte, um stabile und gut verwendbare Rissprüfmittel zu erhalten oder/und zu verwenden.

Bei weiteren Versuchen wurde bei etlichen Zusammensetzungen von hochwertigen Beispielen, die in Tabelle 2b über den gesamten Temperaturbereich stabile Mikroemulsionen bildeten, der Farbstoff ausgetauscht. Hierbei wurde der Gehalt des Farbstoffs relativ zur jeweiligen Löslichkeitsgrenze und zum Löslichkeitsverhalten dieses Farbstoffs angepasst und alternativ ohne und mit zusätzlichem Aufheller eingesetzt. Es ergaben sich hierbei keine signifikante Änderungen im Vergleich zu den ursprünglichen Zusammensetzungen und Eigenschaften in Tabelle 2b, so dass deshalb keine Detailangaben zu diesen weiteren Versuchen aufgeführt werden. Denn die mittlere Teilchengröße und die Transparenz bei 600 nm und 20 °C unter Normaldruck in % änderten sich nur innerhalb einer Bandbreite von ± 5 %. Auch die Klarheit bzw. Transparenz sowie die Eignung als Rissprüfmittel änderten sich nur geringfügig. Die Dispersionen waren alle Mikroemulsionen. Sie waren alle bei 0 °C und bei 50 °C stabil. Allein die Fehlererkennbarkeitsklasse schwankte bei vergleichbar angepasstem Farbstoffgehalt gegebenenfalls um eine Fehlererkennbarkeitsklasse nach oben oder unten, wenn ein anderer Farbstoff verwendet wurde.

Das Rissprüfmittel des Beispiels B30 ist bei geringer Temperatur instabil und bei höherer stabil, da sich beim Abkühlen Farbstoff ausschied, da die Löslichkeitsgrenze für den Farbstoff überschritten wurde.

Die Zuordnung eines Rissprüfmittels in eine Fehlererkennbarkeitsklasse ist in erster Linie vom Farbstoffgehalt und vom gewählten Farbstoff abhängig und in gewissem Umfang von der Art und Menge der mindestens einen Substanz C) als Farbstofflösemittel abhängig, ist aber weitgehend von der Klarheit, Transparenz bzw. Milchigkeit unabhängig. Wenn jedoch der Gehalt an Farbstoff zu hoch ist, kann es zu instabilen und milchigen Systemen kommen. Da der Farbstoffgehalt wesentlich in die Kosten des Produktes eingeht, werden die Rissprüfmittel oft entsprechend der Notwendigkeit, eine hohe oder nur geringe Fehlererkennbarkeitsklasse einsetzen zu müssen, ausgewählt.

Die visuelle Prüfung auf Klarheit, Transparenz und milchiges Aussehen lässt sich nicht streng mit den Werten der Transparenzprüfung bei 600 nm korrelieren, weil nur eine bestimmte Lichtwellenlänge geprüft wird.

Außerdem hat sich bei den Versuchen gezeigt, dass eine ausreichende Wassermischbarkeit für die im Wesentlichen wasserunlösliche flüssige Phase C) mit dem mindestens einen Tensid D) besonders vorteilhaft ist, was oft an einer Transparenz im Bereich von 70 bis 100 % erkennbar ist. Im Bereich von 70 bis 80 % Transparenz tritt ein Übergangsbereich begrenzter Klarheit auf.

Bei den Versuchen zeigte sich, dass die mittlere Teilchengröße der Mikroemulsionen vorzugsweise im Bereich von 1 bis 130 nm, 1 bis 85 oder 3 bis 70 nm liegen sollte, um stabile und gut verwendbare Rissprüfmittel zu erhalten oder/und zu verwenden.

Bei weiteren Versuchen wurde bei etlichen Zusammensetzungen von hochwertigen Beispielen, die in Tabelle 2b über den gesamten Temperaturbereich stabile Mikroemulsionen bildeten, der Farbstoff ausgetauscht. Hierbei wurde der Gehalt des Farbstoffs relativ zur jeweiligen Löslichkeitsgrenze und zum Löslichkeitsverhalten dieses Farbstoffs angepasst und alternativ ohne und mit zusätzlichem Aufheller eingesetzt. Es ergaben sich hierbei keine signifikante Änderungen im Vergleich zu den ursprünglichen Zusammensetzungen und Eigenschaften in Tabelle 2b, so dass deshalb keine Detailangaben zu diesen weiteren Versuchen aufgeführt werden. Denn die mittlere Teilchengröße und die Transparenz bei 600 nm und 20 °C unter Normaldruck in % änderten sich nur innerhalb einer Bandbreite von ± 5 %. Auch die Klarheit bzw. Transparenz sowie die Eignung als Rissprüfmittel änderten sich nur geringfügig. Die Dispersionen waren alle Mikroemulsionen. Sie waren alle bei 0 °C und bei 50 °C stabil. Allein die Fehlererkennbarkeitsklasse schwankte bei vergleichbar angepasstem Farbstoffgehalt gegebenenfalls um eine Fehlererkennbarkeitsklasse nach oben oder unten, wenn ein anderer Farbstoff verwendet wurde.

## Patentansprüche

1. Verwendung eines Rissprüfmittels zur Fehlererkennung nach dem Eindringverfahren, **dadurch gekennzeichnet, dass** es eine Mikroemulsion ist, die enthält:
A) mindestens 10 Gew.-% an Wasser A),
B) mindestens 0,1 Gew.-% an mindestens einem Farbstoff B), der eine Löslichkeit in Wasser von weniger als 0,1 g/L bei 20 °C unter Normaldruck aufweist,
C) mindestens 5 Gew.-% an mindestens einer im Wesentlichen wasserunlöslichen flüssigen Phase C), wobei die Löslichkeit der im Wesentlichen wasserunlöslichen oder der wasserunlöslichen organischen Verbindungen der im Wesentlichen wasserunlöslichen Phase C) bei 20 °C unter Normaldruck bei höchstens 60 g/L in destilliertem Wasser liegt, und
D) mindestens 2 Gew.-% an mindestens einem Tensid D) ausgewählt aus nichtionischen, anionischen oder/und amphoteren Tensiden,
wobei die Summe aller Bestandteile 100 Gew.-% ergibt,
wobei das Rissprüfmittel eine mittlere Teilchengröße im Bereich von 1 bis 250 nm gemessen mit einem Zetasizer Nano-ZS von Malvern sowie eine Transparenz von mindestens 70 % bei 600 nm in einer Quarzglasküvette mit 10 mm Dicke der durchstrahlten Flüssigkeit bei einer Temperatur von 20 °C unter Normaldruck gemessen mit einem Photometer CADA 100-V der Hach Lange GmbH an einer gleichartigen, jedoch außer bei gelb fluoreszierenden Rissprüfmitteln keinen Farbstoff enthaltenden Mikroemulsion aufweist.

2. Verwendung eines Rissprüfmittels nach Anspruch 1, **dadurch gekennzeichnet, dass** es eine Öl-in-Wasser-Mikroemulsion (O/W) oder Wasser-in-Öl-Mikroemulsion (W/O) ist, bei der anstelle von Öl mindestens eine andere mit Wasser nicht mischbare Flüssigkeit verwendet wird.

3. Verwendung eines Rissprüfmittels nach Anspruch 1 oder 2, **dadurch gekennzeichnet, dass** es eine O/W-Mikroemulsion ist, die mindestens 30 Gew.-% an Wasser A) enthält, oder eine W/O-Mikroemulsion ist, die mindestens 10 Gew.-% an Wasser A) enthält.

4. Verwendung eines Rissprüfmittels nach mindestens einem der vorstehenden Ansprüche, **dadurch gekennzeichnet, dass** es bei gelb oder rot fluoreszierenden Rissprüfmitteln eine O/W-Mikroemulsion ist, die
A) 30 bis 85 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist,
C) 5 bis 50 Gew.-% an mindestens einer im Wesentlichen wasserunlöslichen flüssigen Phase C) und
D) 2 bis 60 Gew.-% an mindestens einem Tensid D) enthält,
wobei die Summe aller Bestandteile 100 Gew.-% ergibt und
wobei das Rissprüfmittel eine mittlere Teilchengröße im Bereich von 1 bis 250 nm sowie eine Transparenz von mindestens 70 % bei 600 nm aufweist.

5. Verwendung eines Rissprüfmittels nach mindestens einem der Ansprüche 1 bis 3, **dadurch gekennzeichnet, dass** es zur Rot-Weiß-Prüfung eine O/W-Mikroemulsion ist, die
A) 30 bis 80 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist,
C) 5 bis 45 Gew.-% an mindestens einer im Wesentlichen wasserunlöslichen flüssigen Phase C),
D) 2 bis 55 Gew.-% an mindestens einem Tensid D) enthält und wobei die Summe aller Bestandteile 100 Gew.-% ergibt und wobei das Rissprüfmittel eine mittlere Teilchengröße im Bereich von 1 bis 250 nm sowie eine Transparenz von mindestens 70 % bei 600 nm aufweist.

6. Verwendung eines Rissprüfmittels nach mindestens einem der Ansprüche 1 bis 3, **dadurch gekennzeichnet, dass** es bei gelb oder rot fluoreszierenden Rissprüfmitteln eine W/O-Mikroemulsion ist, die
A) 10 bis 60 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist,
C) 5 bis 40 Gew.-% an mindestens einer im Wesentlichen wasserunlöslichen flüssigen Phase C) und
D) 2 bis 50 Gew.-% an mindestens einem Tensid D enthält,
wobei die Summe aller Bestandteile 100 Gew.-% ergibt und
wobei das Rissprüfmittel eine mittlere Teilchengröße im Bereich von 1 bis 250 nm sowie eine Transparenz von mindestens 70 % bei 600 nm aufweist.

7. Verwendung eines Rissprüfmittels nach mindestens einem der Ansprüche 1 bis 3, **dadurch gekennzeichnet, dass** es zur Rot-Weiß-Prüfung eine W/O-Mikroemulsion ist, die
A) 10 bis 60 Gew.-% an Wasser A),
B) 0,1 bis 10 Gew.-% an mindestens einem Farbstoff B), der eine Löslichkeit in Wasser von weniger als 0,1 g/L bei 20 °C unter Normaldruck aufweist,
C) 5 bis 40 Gew.-% an mindestens einer im Wesentlichen wasserunlöslichen flüssigen Phase C) und
D) 2 bis 40 Gew.-% an mindestens einem Tensid D) enthält, wobei die Summe aller Bestandteile 100 Gew.-% ergibt und wobei das Rissprüfmittel eine mittlere Teilchengröße im Bereich von 1 bis 250 nm sowie eine Transparenz von mindestens 70 % bei 600 nm aufweist.

8. Verwendung eines Rissprüfmittels nach mindestens einem der vorstehenden Ansprüche, **dadurch gekennzeichnet, dass** die Mikroemulsion einen Gehalt an mindestens einem fluoreszierenden Farbstoff B), an mindestens einem im Bereich des sichtbaren Lichts farbigen Farbstoff B), an mindestens einem im Bereich des sichtbaren Lichts farbigen und fluoreszierenden Farbstoff B) oder/und an mindestens einem unter UV-Licht detektierbaren Farbstoff B) enthält.

9. Verwendung eines Rissprüfmittels nach mindestens einem der vorstehenden Ansprüche, **dadurch gekennzeichnet, dass** in der Dispersion mindestens ein im Wesentlichen wasserunlösliches organisches Lösemittel verwendet wird, in dem der mindestens eine Farbstoff B) oder das Farbstoffsystem bei einem Gehalt an Tensid D) von weniger als 40 Gew.-% vollständig oder möglichst vollständig in mindestens einer Verbindung der im Wesentlichen wasserunlöslichen Phase C) gelöst ist.

10. Verwendung eines Rissprüfmittels nach mindestens einem der vorstehenden Ansprüche, **dadurch gekennzeichnet, dass** die im Wesentlichen wasserunlösliche flüssige Phase C) mindestens eine bei 20 °C unter Normaldruck flüssige organische Verbindung enthält, die ausgewählt ist aus der Gruppe bestehend aus Kohlenwasserstoffen einschließlich "Erdölprodukten" C1), Alkoholen C2), Estern oder/und Amiden von Mono-, Dioder/und Polycarbonsäuren C3), Phosphorsäureestern C4), Ethern C5), Ketonen C6), Ölen und deren Derivaten C7), die keine "Erdölprodukte" sind, und Ether-Ester-Derivaten von Diolen und Polyolen C8) oder die ausgewählt ist aus der Gruppe bestehend aus Alkoholen C2), Estern oder/und Amiden von Mono-, Di- oder/und Polycarbonsäuren C3), Ethern C5) und Ketonen C6).

11. Verwendung eines Rissprüfmittels nach mindestens einem der vorstehenden Ansprüche, **dadurch gekennzeichnet, dass** es als Tensid D) mindestens ein nichtionisches und mindestens ein anionisches Tensid enthält, wobei mindestens ein Tensid D) auch als Emulgator wirkt.

12. Verwendung eines Rissprüfmittels nach mindestens einem der vorstehenden Ansprüche, **dadurch gekennzeichnet, dass** die Mikroemulsion zusätzlich mindestens ein Additiv E) enthält, das als Konservierungsmittel, Korrosionsinhibitor, Neutralisationsmittel, Lösevermittler oder/und Rheologieadditiv wirkt.

13. Verwendung eines Rissprüfmittels nach mindestens einem der vorstehenden Ansprüche, **dadurch gekennzeichnet, dass** die Mikroemulsion einphasig oder zusammen mit ein oder zwei weiteren Phasen vorliegt.

14. Verwendung eines Rissprüfmittels nach mindestens einem der vorstehenden Ansprüche, **dadurch gekennzeichnet, dass** es eine Leuchtkraft von mindestens 60 %, von mindestens 90 % oder sogar von mehr als 100 % aufweist.

15. Verfahren zum Herstellen von wasserbasierten Rissprüfmittelmikroemulsionen nach einem der vorstehenden Ansprüche, **dadurch gekennzeichnet, dass** zuerst mindestens ein Farbstoff B) oder ein Farbstoffsystem in mindestens einer Substanz der im Wesentlichen wasserunlöslichen Phase C) oder in der im Wesentlichen wasserunlöslichen Phase C) gelöst wird und dass dieser Lösung anschließend eine Lösung oder/und eine Dispersion von mindestens einem Tensid D) sowie schließlich Wasser diesem Gemisch zugesetzt wird (Verfahrensvariante 1) oder dass zuerst mindestens eine Substanz der im Wesentlichen wasserunlöslichen Phase C) oder die im Wesentlichen wasserunlösliche Phase C) zusammen mit mindestens einem Tensid D) oder mit den Tensiden D) vorgelegt wird, dass danach mindestens ein Farbstoff B) oder ein Farbstoffsystem zugesetzt wird und dass schließlich Wasser diesem Gemisch zugesetzt wird (Verfahrensvariante 2) oder dass zuerst Wasser vorgelegt wird, bevor die weiteren Komponenten zugesetzt werden (Verfahrensvariante 3), wobei in allen Verfahrensvarianten nur ein Mischen und gegebenenfalls leichtes Rühren, aber keine stärkere Bewegung verwendet wird.

16. Verwendung des Rissprüfmittels nach mindestens einem der Ansprüche 1 bis 14 oder/und hergestellt nach Anspruch 15 in der fluoreszierenden Fehlererkennung oder/und in der Fehlererkennung im Bereich des sichtbaren Lichtes oder/und von Poren oder/und Rissen.

17. Verwendung des Rissprüfmittels nach mindestens einem der Ansprüche 1 bis 14 oder/und hergestellt nach Anspruch 15 im Fahrzeugbau, in der Luft- und Raumfahrtindustrie, in der Anlagentechnik, bei Pipelines, im Maschinenbau, in der Energietechnik und in der Allgemeinen Industrie.

## Claims

1. The use of a crack detection composition for defect recognition by the intrusion method, wherein it is a microemulsion comprising:
A) at least 10% by weight of water A),
B) at least 0.1% by weight of at least one dye B) which has a solubility in water of less than 0.1 g/l at 20°C under atmospheric pressure,
C) at least 5% by weight of at least one substantially water-insoluble liquid phase C), where the solubility of the substantially water-insoluble or water-insoluble organic compounds of the substantially water-insoluble phase C) at 20°C under atmospheric pressure is not more than 60 g/l in distilled water, and
D) at least 2% by weight of at least one surfactant D) selected from among nonionic, anionic and amphoteric surfactants,
where the sum of all constituents is 100% by weight,
where the crack detection composition has an average particle size in the range from 1 to 250 nm measured by means of a Zetasizer Nano-ZS from Malvern and also a transparency of at least 70% at 600 nm in a fused silica cell having a 10 mm path length of the liquid through which light passes at a temperature of 20°C under atmospheric pressure measured by means of a CADA 100-V photometer from Hach Lange GmbH on a similar microemulsion which however does not comprise any dye except in the case of yellow-fluorescing crack detection compositions.

2. The use of a crack detection composition according to claim 1, wherein it is an oil-in-water microemulsion (O/W) or water-in-oil microemulsion (W/O) in which at least one other liquid which is immiscible with water is used instead of oil.

3. The use of a crack detection composition according to claim 1 or 2, wherein it is an O/W microemulsion comprising at least 30% by weight of water A) or is a W/O microemulsion comprising at least 10% by weight of water A).

4. The use of a crack detection composition according to at least one of the preceding claims, wherein, in the case of yellow- or red-fluorescing crack detection compositions, it is an O/W microemulsion comprising
A) from 30 to 85% by weight of water A),
B) from 0.1 to 10% by weight of at least one dye B) which has a solubility in water of less than 0.1 g/l at 20°C under atmospheric pressure,
C) from 5 to 50% by weight of at least one substantially water-insoluble liquid phase C) and
D) from 2 to 60% by weight of at least one surfactant D),
where the sum of all constituents is 100% by weight and the crack detection composition has an average particle size in the range from 1 to 250 nm and also a transparency of at least 70% at 600 nm.

5. The use of a crack detection composition according to at least one of claims 1 to 3, wherein it is an O/W microemulsion for red-white testing, which comprises
A) from 30 to 80% by weight of water A),
B) from 0.1 to 10% by weight of at least one dye B) which has a solubility in water of less than 0.1 g/l at 20°C under atmospheric pressure,
C) from 5 to 45% by weight of at least one substantially water-insoluble liquid phase C),
D) from 2 to 55% by weight of at least one surfactant D),
where the sum of all constituents is 100% by weight and the crack detection composition has an average particle size in the range from 1 to 250 nm and also a transparency of at least 70% at 600 nm.

6. The use of a crack detection composition according to at least one of claims 1 to 3, wherein, in the case of yellow- or red-fluorescing crack detection compositions, it is a W/O microemulsion comprising
A) from 10 to 60% by weight of water A),
B) from 0.1 to 10% by weight of at least one dye B) which has a solubility in water of less than 0.1 g/l at 20°C under atmospheric pressure,
C) from 5 to 40% by weight of at least one substantially water-insoluble liquid phase C) and
D) from 2 to 50% by weight of at least one surfactant D,
where the sum of all constituents is 100% by weight and the crack detection composition has an average particle size in the range from 1 to 250 nm and also a transparency of at least 70% at 600 nm.

7. The use of a crack detection composition according to at least one of claims 1 to 3, wherein it is, for red-white testing, a W/O microemulsion comprising
A) from 10 to 60% by weight of water A),
B) from 0.1 to 10% by weight of at least one dye B) which has a solubility in water of less than 0.1 g/l at 20°C under atmospheric pressure,
C) from 5 to 40% by weight of at least one substantially water-insoluble liquid phase C) and
D) from 2 to 40% by weight of at least one surfactant D),
where the sum of all constituents is 100% by weight and the crack detection composition has an average particle size in the range from 1 to 250 nm and also a transparency of at least 70% at 600 nm.

8. The use of a crack detection composition according to at least one of the preceding claims, wherein the microemulsion comprises a content of at least one fluorescent dye B), of at least one dye B) which is colored in the region of visible light, of at least one fluorescent dye B) which is colored in the region of visible light or/and of at least one dye B) which is detectable under UV light.

9. The use of a crack detection composition according to at least one of the preceding claims, wherein at least one substantially water-insoluble organic solvent in which the at least one dye B) or the dye system is completely or virtually completely dissolved in at least one compound of the substantially water-insoluble phase C) at a content of surfactant D) of less than 40% by weight is used in the dispersion.

10. The use of a crack detection composition according to at least one of the preceding claims, wherein the substantially water-insoluble liquid phase C) comprises at least one organic compound which is liquid at 20°C under atmospheric pressure and is selected from the group consisting of hydrocarbons including "petroleum products" C1), alcohols C2), esters or/and amides of monocarboxylic, dicarboxylic or/and polycarboxylic acids C3), phosphoric esters C4), ethers C5), ketones C6), oils and derivatives thereof C7) which are not "petroleum products" and ether-ester derivatives of diols and polyols C8) or is selected from the group consisting of alcohols C2), esters or/and amides of monocarboxylic, dicarboxylic or/and polycarboxylic acids C3), ethers C5) and ketones C6).

11. The use of a crack detection composition according to at least one of the preceding claims, wherein it comprises at least one nonionic surfactant and at least one anionic surfactant as surfactant D), with at least one surfactant D) also acting as emulsifier.

12. The use of a crack detection composition according to at least one of the preceding claims, wherein the microemulsion additionally comprises at least one additive E) which acts as preservative, corrosion inhibitor, neutralizing agent, solubilizer or/and rheological additive.

13. The use of a crack detection composition according to at least one of the preceding claims, wherein the microemulsion is present as a single phase or together with one or two further phases.

14. The use of a crack detection composition according to at least one of the preceding claims, wherein it has a luminosity of at least 60%, of at least 90% or even of more than 100%.

15. A process for producing water-based crack detection microemulsions according to any of the preceding claims, wherein at least one dye B) or a dye system is initially dissolved in at least one substance of the substantially water-insoluble phase C) or in the substantially water-insoluble phase C) and subsequently a solution or/and a dispersion of at least one surfactant D) is added to this first solution and finally water is added to this mixture (process variant 1) or at least one substance of the substantially water-insoluble phase C) or the substantially water-insoluble phase C) is initially charged together with at least one surfactant D) or with the surfactants D) and subsequently at least one dye B) or a dye system is added and finally water is added to this mixture (process variant 2) or water is initially charged before the further components are added (process variant 3), where only mixing and optionally gentle stirring but no stronger agitation is used in all process variants.

16. The use of the crack detection composition according to at least one of claims 1 to 14 or/and produced according to claim 15 in fluorescent defect recognition or/and in defect recognition in the region of visible light or/and of pores or/and cracks.

17. The use of the crack detection composition according to at least one of claims 1 to 14 or/and produced according to claim 15 in vehicle construction, in the aerospace industry, in plant engineering, in pipelines, in machine construction, in energy technology and in general industry.

## Revendications

1. Utilisation d'un agent de détection des fissures pour l'identification de défauts par le procédé de ressuage, **caractérisée en ce que** celui-ci est une microémulsion qui contient :
A) au moins 10 % en poids d'eau A),
B) au moins 0,1 % en poids d'au moins un colorant B), qui présente une solubilité dans l'eau de moins de 0,1 g/l à 20 °C sous pression normale,
C) au moins 5 % en poids d'au moins une phase liquide C) essentiellement insoluble dans l'eau, la solubilité des composés organiques essentiellement insolubles dans l'eau ou insolubles dans l'eau de la phase C) essentiellement insoluble dans l'eau à 20 °C sous pression normale étant d'au plus 60 g/l dans de l'eau distillée, et
D) au moins 2 % en poids d'au moins un tensioactif D) choisi parmi les tensioactifs non ioniques, anioniques et/ou amphotères,
la somme de tous les constituants étant de 100 % en poids, l'agent de détection des fissures présentant une taille de particule moyenne dans la plage allant de 1 à 250 nm, mesurée avec un Zetasizer Nano-ZS de Malvern, ainsi qu'une transparence d'au moins 70 % à 600 nm dans une cuvette en verre de quartz avec une épaisseur de 10 mm du liquide traversé par le rayonnement à une température de 20 °C sous pression normale, mesurée avec un photomètre CADA 100-V de Hach Lange GmbH sur une microémulsion de même type, mais ne contenant toutefois pas de colorant outre les agents de détection des fissures fluorescents dans le jaune.

2. Utilisation d'un agent de détection des fissures selon la revendication 1, **caractérisée en ce que** celui-ci est une microémulsion huile dans eau (H/E) ou une microémulsion eau dans huile (E/H) dans laquelle au moins un autre liquide non miscible avec l'eau est utilisé à la place de l'huile.

3. Utilisation d'un agent de détection des fissures selon la revendication 1 ou 2, **caractérisée en ce que** celui-ci est une microémulsion H/E qui contient au moins 30 % en poids d'eau A) ou une microémulsion E/H qui contient au moins 10 % en poids d'eau A).

4. Utilisation d'un agent de détection des fissures selon au moins l'une quelconque des revendications précédentes, **caractérisée en ce que**, pour des agents de détection des fissures fluorescents dans le jaune ou le rouge, celui-ci est une microémulsion H/E qui contient :
A) 30 à 85 % en poids d'eau A),
B) 0,1 à 10 % en poids d'au moins un colorant B), qui présente une solubilité dans l'eau de moins de 0,1 g/l à 20 °C sous pression normale,
C) 5 à 50 % en poids d'au moins une phase liquide C) essentiellement insoluble dans l'eau, et
D) 2 à 60 % en poids d'au moins un tensioactif D),
la somme de tous les constituants étant de 100 % en poids, et l'agent de détection des fissures présentant une taille de particule moyenne dans la plage allant de 1 à 250 nm et une transparence d'au moins 70 % à 600 nm.

5. Utilisation d'un agent de détection des fissures selon au moins l'une quelconque des revendications 1 à 3, **caractérisée en ce que**, pour la détection rouge-blanc, celui-ci est une microémulsion H/E qui contient :
A) 30 à 80 % en poids d'eau A),
B) 0,1 à 10 % en poids d'au moins un colorant B), qui présente une solubilité dans l'eau de moins de 0,1 g/l à 20 °C sous pression normale,
C) 5 à 45 % en poids d'au moins une phase liquide C) essentiellement insoluble dans l'eau,
D) 2 à 55 % en poids d'au moins un tensioactif D),
la somme de tous les constituants étant de 100 % en poids, et l'agent de détection des fissures présentant une taille de particule moyenne dans la plage allant de 1 à 250 nm et une transparence d'au moins 70 % à 600 nm.

6. Utilisation d'un agent de détection des fissures selon au moins l'une quelconque des revendications 1 à 3, **caractérisée en ce que**, pour des agents de détection des fissures fluorescents dans le jaune ou le rouge, celui-ci est une microémulsion E/H qui contient :
A) 10 à 60 % en poids d'eau A),
B) 0,1 à 10 % en poids d'au moins un colorant B), qui présente une solubilité dans l'eau de moins de 0,1 g/l à 20 °C sous pression normale,
C) 5 à 40 % en poids d'au moins une phase liquide C) essentiellement insoluble dans l'eau, et
D) 2 à 50 % en poids d'au moins un tensioactif D),
la somme de tous les constituants étant de 100 % en poids, et l'agent de détection des fissures présentant une taille de particule moyenne dans la plage allant de 1 à 250 nm et une transparence d'au moins 70 % à 600 nm.

7. Utilisation d'un agent de détection des fissures selon au moins l'une quelconque des revendications 1 à 3, **caractérisée en ce que**, pour la détection rouge-blanc, celui-ci est une microémulsion E/H qui contient :
A) 10 à 60 % en poids d'eau A),
B) 0,1 à 10 % en poids d'au moins un colorant B), qui présente une solubilité dans l'eau de moins de 0,1 g/l à 20 °C sous pression normale,
C) 5 à 40 % en poids d'au moins une phase liquide C) essentiellement insoluble dans l'eau, et
D) 2 à 40 % en poids d'au moins un tensioactif D),
la somme de tous les constituants étant de 100 % en poids, et l'agent de détection des fissures présentant une taille de particule moyenne dans la plage allant de 1 à 250 nm et une transparence d'au moins 70 % à 600 nm.

8. Utilisation d'un agent de détection des fissures selon au moins l'une quelconque des revendications précédentes, **caractérisée en ce que** la microémulsion présente une teneur en au moins un colorant fluorescent B), en au moins un colorant coloré dans la plage de la lumière visible B), en au moins un colorant fluorescent et coloré dans la plage de la lumière visible B) et/ou en au moins un colorant détectable sous lumière UV B).

9. Utilisation d'un agent de détection des fissures selon au moins l'une quelconque des revendications précédentes, **caractérisée en ce qu'**au moins un solvant organique essentiellement insoluble dans l'eau est utilisé dans la dispersion, dans lequel ledit au moins un colorant B) ou le système de colorants est dissous en totalité ou autant que possible dans au moins un composé de la phase C) essentiellement insoluble dans l'eau à une teneur en tensioactif D) de moins de 40 % en poids.

10. Utilisation d'un agent de détection des fissures selon au moins l'une quelconque des revendications précédentes, **caractérisée en ce que** la phase liquide C) essentiellement insoluble dans l'eau contient au moins un composé organique liquide à 20 °C sous pression normale, qui est choisi dans le groupe constitué par les hydrocarbures y compris les « produits pétroliers » C1), les alcools C2), les esters et/ou amides d'acides mono-, di- et/ou polycarboxyliques C3), les esters d'acides phosphoriques C4), les éthers C5), les cétones C6), les huiles et leurs dérivés C7), qui ne sont pas des « produits pétroliers », et les dérivés d'éther-ester de diols et de polyols C8) ou qui est choisi dans le groupe constitué par les alcools C2), les esters et/ou les amides d'acides mono-, di- et/ou polycarboxyliques C3), les éthers C5) et les cétones C6).

11. Utilisation d'un agent de détection des fissures selon au moins l'une quelconque des revendications précédentes, **caractérisée en ce qu'**il contient en tant que tensioactif D) au moins un tensioactif non ionique et au moins un tensioactif anionique, au moins un tensioactif D) agissant également en tant qu'émulsifiant.

12. Utilisation d'un agent de détection des fissures selon au moins l'une quelconque des revendications précédentes, **caractérisée en ce que** la microémulsion contient en outre au moins un additif E), qui agit en tant que conservateur, inhibiteur de corrosion, agent neutralisant, agent solubilisant et/ou additif rhéologique.

13. Utilisation d'un agent de détection des fissures selon au moins l'une quelconque des revendications précédentes, **caractérisée en ce que** la microémulsion se présente sous forme monophasée ou conjointement avec une ou deux autres phases.

14. Utilisation d'un agent de détection des fissures selon au moins l'une quelconque des revendications précédentes, **caractérisée en ce qu'**il présente une luminosité d'au moins 60 %, d'au moins 90 %, voire même de plus de 100 %.

15. Procédé de fabrication de microémulsions d'agents de détection des fissures à base d'eau selon l'une quelconque des revendications précédentes, **caractérisé en ce qu'**au moins un colorant B) ou un système de colorants est tout d'abord dissous dans au moins une substance de la phase C) essentiellement insoluble dans l'eau ou dans la phase C) essentiellement insoluble dans l'eau, et **en ce qu'**une solution et/ou une dispersion d'au moins un tensioactif D) est ensuite ajoutée à cette solution, et de l'eau est enfin ajoutée à ce mélange (variante de procédé 1), ou **en ce qu'**au moins une substance de la phase C) essentiellement insoluble dans l'eau ou la phase C) essentiellement insoluble dans l'eau est tout d'abord chargée conjointement avec au moins un tensioactif D) ou avec les tensioactifs D), puis au moins un colorant B) ou un système de colorants est ajouté, et de l'eau est enfin ajoutée à ce mélange (variante de procédé 2), ou **en ce que** de l'eau est tout d'abord chargée, avant l'ajout des autres composants (variante de procédé 3), seul un mélange et éventuellement une légère agitation, mais pas de mouvement plus fort, étant utilisés dans toutes les variantes de procédé.

16. Utilisation de l'agent de détection des fissures selon au moins l'une quelconque des revendications 1 à 14 et/ou fabriqué selon la revendication 15 dans l'identification de défauts par fluorescence et/ou dans l'identification de défauts dans la plage de la lumière visible et/ou de pores et/ou de fissures.

17. Utilisation de l'agent de détection des fissures selon au moins l'une quelconque des revendications 1 à 14 et/ou fabriqué selon la revendication 15 dans la construction de véhicules automobiles, dans l'industrie aéronautique et astronautique, dans la technologie des installations, dans les canalisations, dans la construction de machines, dans la technologie de l'énergie et dans l'industrie générale.
